(19) Europäisches Patentamt
European Patent Office
Office européen des brevets

(11) EP 0 524 934 B1

(12) EUROPÄISCHE PATENTSCHRIFT

(45) Veröffentlichungstag und Bekanntmachung des Hinweises auf die Patenterteilung:
**04.06.1997 Patentblatt 1997/23**

(21) Anmeldenummer: **91903864.6**

(22) Anmeldetag: **20.02.1991**

(51) Int Cl.6: **G05B 19/4093**

(86) Internationale Anmeldenummer:
**PCT/EP91/00317**

(87) Internationale Veröffentlichungsnummer:
**WO 92/15050 (03.09.1992 Gazette 1992/23)**

(54) **VORRICHTUNG ZUM ÜBERWACHEN UND PLANEN VON FUNKTIONEN EINER FUNKENEROSIONSMASCHINE**

DEVICE OF MONITORING AND PLANNING THE FUNCTIONS OF AN ELECTRICAL DISCHARGE MACHINE

DISPOSITIF POUR LA SURVEILLANCE ET LE SEQUENCEMENT DES FONCTIONS D'UNE MACHINE D'ETINCELAGE

(84) Benannte Vertragsstaaten:
**CH DE FR GB IT LI LU SE**

(43) Veröffentlichungstag der Anmeldung:
**03.02.1993 Patentblatt 1993/05**

(73) Patentinhaber: **A.G. für industrielle Elektronik AGIE Losone bei Locarno**
**CH-6616 Losone (CH)**

(72) Erfinder:
- **BORSARI, Claudio**
  **CH-6652 Tegna (CH)**
- **GASSER, Thomas**
  **CH-6614 Brissago (CH)**
- **OLSSON, Lars**
  **CH-6655 Intragna (CH)**

(74) Vertreter: **Turi, Michael, Dipl.-Phys. et al**
**Samson & Partner**
**Widenmayerstrasse 5**
**80538 München (DE)**

(56) Entgegenhaltungen:
**DE-B- 2 650 964** **US-A- 4 365 300**

- **WERKSTATT UND BETRIEB Bd.123,Nr.12,Dezember 1990,MüNCHEN DE Seiten 937-943;JOHANNES BURGER: 'Rechner-und Software-Entwicklung bestimmen die Fertigungstechnik in den USA' siehe Seite 937-Seite 943**
- **SIEMENS ENERGY & AUTOMATION.Bd.11,Nr.EMO,September 1989,BERLIN DE Seiten 39-41; PETER ERNST U.A.: 'WS 800 A-A new tool for more flexible configuration of the NC user interface.' siehe Seite 39-Seite 41**
- **SIEMENS ENERGY & AUTOMATION.Bd IX,Nr.Oktober 1987,BERLIN DE Seiten 4-7; MATTHIAS GROBLEBEN U.A.: 'SINUMERIK 850 and 880 Flexible Functions,Flexible Technology' siehe seite 4-seite 7**
- **MICROPROCESSORS AND MICROSYSTEMS.Bd.6,Nr.6,Juli 1982,LONDON GB Seiten 293-296;P.SANTHANAM:'Software for a simple two-axis numerical control system' siehe seite 293-Seite 296**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft eine Vorrichtung mit einem ein Grundfenster aufweisenden Bildschirm für die Überwachung und Planung von Funktionen einer Funkenerosionsmaschine zur Bearbeitung eines Werkstücks.

Die Zeitschrift WERKSTATT UND BETRIEB. Bd. 123, Nr. 12, Dezember 1990, MUNCHEN DE Seiten 937 - 943; JOHANNES BURGER: 'Rechner- und Software-Entwicklung bestimmen die Fertigungstechnik in den USA', Seite 937 - Seite 943, zeigt in den Bildern 1 bis 3 die üblichen grafischen Darstellungen an einer Werkzeugmaschine. Insbesondere den Bildern 2 und 3 sind Grafiken auf einem üblichen Grundfenster entnehmbar, bei denen einzelne Koordinatenpunkte ebenfalls auf diesem Grundfenster einstellbar sind. Weder wird jedoch darin ein Dialogfenster offenbart, noch an irgendeiner Stelle angeregt.

Heutzutage ist es bei bekannten NC-Steuerungen (z.B. SIEMENS ENERGY & AUTOMATION, Bd. IX, Nr. EMO, Okt. 1987, Berlin, Seiten 4-7) üblich, die Überwachung und Planung von Funktionen einer Vorrichtung bei der Bearbeitung eines Werkstückes über einen Bildschirm mit Grundfenster vorzunehmen. Hierzu wird der aktuelle Stand der Bearbeitung des Werkstückes auf dem Bildschirm angezeigt.

Ebenso ist zum Beispiel aus "Hard and Soft" (Jan./ Feb. '88, S. 35-40) bekannt, ein oder mehrere Bildschirmfenster in Window-Technik für die Erstellung und überwachung von NC-Programmen für Werkzeugmaschinen einzusetzen.

Insbesondere in der Funkenerosion werden Randdaten, wie beispielsweise die Spaltbreite, Spannung etc. während der Bearbeitung auf dem Bildschirm, zumeist in kleinen Wertefeldern eingeblendet.

Desweiteren ist es insbesondere in der Funkenerosion üblich, einzelne Punkte einer in ein Werkstück zu schneidenden Kontur nach deren Eingabe auf dem Bildschirm darzustellen. Die Eingabe der Punkte erfolgt entsprechend der gewünschten Bewegung der Drahtelektrode. Neben den Punkten müssen bei dieser Technik zusätzlich Richtungsanweisungen durch den Bediener eingegeben werden. Ein Dialog zwischen dem Bediener und dem Bildschirm ist dabei nur begrenzt möglich. Um nämlich überprüfen zu können, ob die Eingabe bestimmter Punkte schließlich zur gewünschten Kontur führt, muß der Bediener den gesamten Konturschnittablauf der Drahtelektrode simulieren. Daher führt beispielsweise eine anfänglich falsch eingegebene Schnittrichtung oft zu einer undurchführbaren Kontur. Die Feststellung der falschen Kontur erfolgt aber erst zu einem viel späteren Zeitpunkt. Da der Zeitaufwand für die Eingabe von Punkten nach der fehlerhaften Eingabe meist erheblich ist, ergeben sich bei der Gesamtbearbeitung unerwünschte Ausfallzeiten.

Demgegenüber ist es ein Ziel der Erfindung, eine Vorrichtung anzugeben, die den Dialog zwischen Bediener und Bearbeitungsvorrichtung verbessert.

Dieses Ziel wird durch eine Vorrichtung gemäß Anspruch 1 erreicht.

Der Bediener kann hierdurch nie eine Funktion wählen, die in der Folge des Arbeitsablaufes überhaupt nicht möglich ist. So werden insbesondere Falscheingaben von Funktionen seien sie bewußt oder unbewußt vorgenommen, verhindert. Gleichzeitig wird nicht besonders geschulten Bedienern eine wesentliche Hilfe geboten.

Vorzugsweise werden durchführbare und undurchführbare Funktionen unterschiedlich gekennzeichnet. Bei einer hierfür geeigneten vorteilhaften Vorrichtung ist dem Bildschirmfenster wenigstens eine, vorzugsweise mit Erkennungssymbolen versehene Aktiviereinrichtung zur Auswahl wenigstens einer dargestellten Funktion zugeordnet (Anspruch 3). Dabei weist die Aktiviereinrichtung bevorzugt eine Ikone, vorzugsweise ein Ikonenmenü auf (Anspruch 4). Besonders bevorzugt weist die Aktiviereinrichtung Mittel, insbesondere helligkeitsmäßig bzw. farblich abgesetzte Abschnitte auf, zur wahrnehmbaren Unterscheidung zwischen durchführbaren und undurchführbaren Funktionen (Anspruch 7). Der Bediener kann dadurch unmittelbar erkennen, welche möglichen Funktionen ihm in der Folge zur Verfügung stehen. Eine zeitraubende Überprüfung, beispielsweise an Hand von Manuals zur Erläuterung der Zusammenhänge aufeinanderfolgender Funktionen, kann auf ein Mindestmaß reduziert werden. Auch durch diese Maßnahme werden Ausfallzeiten der Vorrichtung verringert und deren Nutzung optimiert.

Vorteilhaft wird die wertemäßige Einstellung einer Funktion in einem Skizzenfenster des zweiten Fensterabschnitten kontrolliert. Bei einer hierfür geeigneten bevorzugten Ausführungsform der erfindungsgemäßen Vorrichtung weist der Skizzenabschnitt gleichbleibende Figuren zur Wiedergabe der jeweils einzustellenden Funktion und Symbole oder Bezeichnungen zur Wiedergabe der einzustellenden Größen dieser Funktion auf (Anspruch 14). Bei einer anderen vorteilhaften Ausgestaltung der erfindungsgemäßen Vorrichtung weist der Skizzenabschnitt in Abhängigkeit von den eingestellten Werten veränderte Figuren zur Darstellung der Einstellung bzw. Änderung der Werte einer Funktion auf (Anspruch 15). So erkennt der Bediener nicht nur welche Werte er eingibt. Vielmehr wird ihm durch das gleichzeitig erscheinende Skizzenfenster angezeigt, an welcher Stelle er durch die wertemäßige Einstellung eine bestimmte Funktion verändert. Auch hierdurch können Fehler bei der Eingabe von Werten durch optische Kontrolle wesentlich reduziert werden.

Nach Ihrer wertemäßigen Einstellung wird die Funktion vorteilhaft auf das Grundfenster übertragen. Hierfür sind vorteilhaft Einrichtungen zur Übertragung der gewählten und gegebenenfalls wertemäßig eingestellten Funktion auf das Grundfenster vorgesehen (Anspruch 2). Bediener weiß dann genau, was er an der zusammengesetzten Gesamt funktion, die im Grundfenster dargestellt ist, geändert hat. Da die wertemäßige Einstellung schon im weiteren Fenster ausreichend und mehrmals kontrolliert wurde, ist eine Fehlübertragung von Werten auf das Grundfenster weitgehend ausgeschlossen. Ein wie im Stand der Technik üblicher, simulierter Probeschnitt ist daher entbehrlich.

Besonders vorteilhaft werden nach einem Abbrechen des wertemäßigen Einstellens einer Funktion die ursprünglich in einem Bildschirmfenster dargestellten Funktionen wieder zur Disposition gestellt. Dadurch kann unmittelbar eine neue, bzw. weitere Funktion ausgewählt werden. Die schnelle Aufeinanderfolge der Übertragung von Funktionen bei der Erstellung der Gesamtfunktion ist gewährleistet.

Besonders bevorzugt wird der aktuelle Stand des weiteren Fensters abgespeichert und zu einem späteren Zeitpunkt aufgerufen. Bei einer hierfür geeigneten, besonders bevorzugten Ausführungsform der Vorrichtung weist das Bildschirmfenster ein weiteres Organ zum Unterbrechen des Einstellvorganges der Funktion und eine Speichereinheit zum Speichern der bis zur Unterbrechung eingegebenen Werte auf (Anspruch 9). Dies kann insbesondere dann wichtig sein, wenn der Bediener den Dialog mit dem Bildschirm unterbricht, sei es, weil er andere Tätigkeiten zwischenschieben muß, sei es, weil er die Bearbeitung an einem Arbeitstag vollständig beendet, um sie am nächsten Arbeitstag wieder fortzuführen.

Besonders bevorzugt ist eine Vorrichtung derart ausgelegt, daß bei wenigstens zwei Bildschirmfenstern wenigstens ein Bildschirmfenster gruppierte, aufgrund des Arbeits- bzw. Planungsablaufes betrieblich zusammengehörige Funktionen aufweist (Anspruch 5). Dem Bediener wird dadurch eine fest vorgegebene Reihenfolge bei der Bearbeitung eines Werkstückes vorgegeben. Aufgrund der Gruppierung ist er dazu angehalten, bei der Eingabe der Funktionen schrittweise vorzugehen. Ein Springen zwischen Funktionsgruppen wird somit nahezu ausgeschlossen. Die Reihenfolge, in der die einzelnen Schritte erstellt werden, wird also vom System selbst vorgegeben. Logisch nicht korrekte oder unvollständige Angaben werden nicht zugelassen, oder sofort mit einer Fehlermeldung dem Bediener quitiert.

Bei einer ganz besonders bevorzugten Ausführungsform der erfindungsgemäßen Vorrichtung mit wenigstens zwei Bildschirmfenstern ist jedem Bildschirmfenster wenigstens eine Aktiviereinrichtung zugeordnet, vorzugsweise mit zumindest teilweise gleichen Erkennungssymbolen (Anspruch 6). Über die teilweise gleichen Aktiviereinrichtungen können Standardfunktionen ausgelöst werden, die für alle betrieblich zusammengehörigen Funktionen gleich sind. Derartige Funktionen werden später noch näher beschrieben.

Vorteilhaft weist die Vorrichtung ein Bildschirmfenster auf, mit einem Abschnitt zur Identifikation und dem ersten Fensterabschnitt zur Eingabe der Einstellung und dem zweiten Fensterabschnitt zum Skizzieren der Funktion. Durch ein derart ausgestaltetes Bildschirmfenster werden die Fehler bei der Eingabe von Werten durch einen Bediener minimiert. Über den Abschnitt zur Identifikation kann der Bediener kontrollieren, ob er nach Betätigen der Aktiviereinrichtung auch tatsächlich die gewünschte Funktion ausgewählt hat. Um Ihm dies kenntlich zu machen, weist der Identifikationsabschnitt bevorzugt eine - etwa mit einem Begriff oder mit einem Symbol versehene - Anzeigevorrichtung auf, welche die jeweils ausgewählte Funktion identifiziert (Anspruch 8). War die gewünschte Funktion zunächst durch eine Ikone dargestellt, so kann der Bediener nun beispielsweise durch die konkretere, wörtliche oder bildliche Bezeichnung der Ikone kontrollieren, ob er auch wirklich die gewünschte Auswahl getroffen hat. Eine gewünschte Funktion kann ihm also auf zwei Arten wahrnehmbar gemacht werden. Die Möglichkeit von Flüchtigkeitsfehlern bei der Auswahl von Funktionen wird dadurch nahezu ausgeschlossen. Gleichzeitig liefert der Identifikationsabschnitt dem Bediener eine Hilfestellung bei der möglichen Frage, welche Bedeutung welche Ikonen haben.

Bei einer besonders vorteilhaften Ausgestaltung der Vorrichtung weist der Eingabeabschnitt eine Anzeige auf, welche die wertemäßig einstellbaren Größen der ausgewählten Funktion wiedergibt (Anspruch 9). Nach Erkennen der Funktion mit Hilfe des Identifikationsabschnittes wird der Bediener unverzüglich mit dem Abschnitt des Bildschirmfensters konfrontiert, auf das seine Aktivitäten gerichtet werden. Sein aktiver, nicht nur auf eine Auswahl beschränkter Dialog mit der Vorrichtung beginnt.

Bei einer ganz besonders bevorzugten Ausgestaltung der Vorrichtung gibt die Anzeige mehrere voneinander verschiedene, sich gegenseitig ausschließende Werte/Wertegruppen wieder, die eingegeben jeweils die gleiche Änderung der spezifisch gewünschten Funktion erzielen (Anspruch 10). So kann der Bediener seinerseits auswählen welche Werte/Wertegruppen für seine Zwecke geeigneter Erscheinen, oder welche Werte/Wertegruppen ihm für den Dialog persönlich angenehmer erscheinen. Beispielsweise ist dies dann von Vorteil, wenn ein Bediener bislang nur eine Art von Werten/Wertegruppen kennt. Er muß sich dann nicht mit der anderen Art von Werten/Wertegruppen vertraut machen. Gleichwohl kann er nachprüfen, welche Funktion die ihm nicht vertrauten Werte/Wertegruppen erzielen.

Besonders bevorzugt weist die Vorrichtung Mittel auf, welche die (gleichzeitige oder sequentielle) Eingabe sich gegenseitig auschließender Werte/Wertegruppen verhindert (Anspruch 11). Fehleingaben werden dadurch ausgeschlossen. Um den Bediener kenntlich zu machen, welche(r) Wert/Wertegruppe gerade eingestellt ist weist die Vorrichtung besonders bevorzugt eine Einrichtung im Eingabeabschnitt zur Kenntlichmachung auf und/oder eine weitere Einrichtung zur Auswahl der einzustellenden Werte/Wertegruppen (Anspruch 12). Hierdurch wird dem Bediener jeweils verdeutlicht, welche Eingaben er nun vornehmen kann.

In einer weiteren bevorzugten Ausführungsform der erfindungsgemäßen Vorrichtung sind die Einrichtungen im Eingabeabschnitt für die Kenntlichmachung des/der Wertes/Wertegruppe entsprechend der jeweiligen Einstellung beleuchtete Anzeigenfelder mit Symbolen oder Bezeichnungen zur Wiedergabe der einzustellenden Größen der Funktion, insbesondere helligkeitsmäßig bzw. farblich abgesetzte Abschnitte (Anspruch 13). Die Aufmerksamkeit des Bedieners wird so unbewußt auf die Anzeigenfelder gerichtet, wobei ein zeitaufwendiger Wahrnehmungsprozeß unterbleibt. Fühlt sich der Bediener dennoch unsicher bei der Frage, welche Werte eingegeben werden können, so dienen die Symbole oder Bezeichnungen dazu, ihm nocheinmal die einzustellenden Größen der Funktion zu verdeutlichen.
Um in gleicher Weise den Zeitraum für den Wahrnehmungsprozeß durch den Bediener bei Eingabe und Kontrolle der Werte zu reduzieren, weist die erfindungsgemäße Vorrichtung bevorzugt gleiche Symbole oder Bezeichnungen im Eingabe- und Skizzenabschnitt auf (Anspruch 16). Diese Reduzierung des Zeitraums für die Wahrnehmung wird zusätzlich dadurch unterstützt, daß besonders bevorzugt die Symbole oder Bezeichnungen im Skizzenabschnitt mit Anzeigefeldern im Eingabeabschnitt derart verbunden sind, daß die Einstellung bestimmter Werte/einer bestimmten Wertegruppe gleichzeitig im Skizzenabschnitt und im Eingabeabschnitt wahrnehmbar ist (Anspruch 17).

Bei einer besonders bevorzugten Ausführungsform der Vorrichtung weist das Bildschirmfenster wenigstens zwei Organe zum Abbrechen des Einstellvorganges der Funktion und zum Übertragen der Funktion auf das Grundfenster auf (Anspruch 18). Durch die getrennte Anordnung der Organe wird der Bediener dazu gezwungen, woneinander getrennte Schritte auch getrennt voneinander durchzuführen. Nach der Einstellung erfolgt also nicht direkt eine Übertragung, vielmehr kann der Bediener nach dem Abbrechen nocheinmal überprüfen, ob er die eingestellten Werte für die Funktion akzeptiert. Erst im nächsten Schritt kann er nach der Überprüfung dann eine Übertragung auf das Grundfenster vornehmen.

Besonders bevorzugt weist die erfindungsgemäße Vorrichtung Mittel zum Aufrufen der gespeicherten, eingestellten Werte auf (Anspruch 20). Falls eine Unterbrechung stattgefunden hat, kann dadurch ohne großen Zeitaufwand ein beliebiger Einstellvorgang wieder aufgenommen werden.

Schließlich ist in einer besonders bevorzugten Ausführungsform der erfindungsgemäßen Vorrichtung ein Interpreter vorgesehen, der für jedes Bildschirmfenster verwendbar ist (Anspruch 22). Bei Änderung des Bildschirmfensters muß dadurch nur das File geändert werden, nicht hingegen die jeweiligen Module. Es ist demzufolge keine neue Codierung notwendig.

Ausführungsbeispiele der Erfindung sind in den Zeichnungen dargestellt und werden im folgenden näher beschrieben.

Fig. 1 zeigt eine vom System festgelegte Vorstrukturierung eines zu erstellenden Programms in fünf Funktionsgruppen, sogenannte Programm-Module.

Fig. 2 zeigt den Aufbau bzw. das Bildschirmlayout eines vom System angebotenen Grundfensters.

Fig. 3 zeigt eine ein erstes Programm-Modul Geometrie betreffende Ikonenleiste.

Fig. 4 mit 13 zeigen (Einzel-) Ikonen und Dialogfenster, die im ersten Programm-Modul Geometrie aufrufbaren Funktionen zugeordnet sind.

Fig. 14 zeigt eine ein zweites Programm-Modul Konik betreffende Ikonenleiste für Winkelkonik.

Fig. 15 mit 19 zeigen Ikonen und Dialogfenster, die im zweiten Programm-Modul Konik aufrufbaren Funktionen zugeordnet sind.

Fig. 20 zeigt eine zweite das Programm-Modul Konik betreffende Ikonenleiste für 3D-Konik.

Fig. 21 und 22 zeigen den Funktionen des Programm-Moduls Konik zugeordnete Ikonen und Dialogfenster für 3D-Konik.

Fig. 23 zeigt eine ein drittes Programm-Modul Arbeitsplan betreffende Ikonenleiste.

Fig. 24 mit 29 zeigen den Funktionen des dritten Programm-Moduls Arbeitsplan zugeordnete Ikonen und Dialogfenster.

Fig. 30 zeigt eine ein viertes Programm-Modul Job betreffende Ikonenleiste.

Fig. 31 mit 34 zeigen den Funktionen des vierten Programm-Moduls Job zugeordnete Ikonen und Dialogfenster.

Anhand Fig. 1 wird die vom System festgelegte Vorstrukturierung eines zu erstellenden Programms in fünf Funktionsgruppen (sogenannte Programm-Module) beschrieben:

Im Rahmen des ersten Moduls Geometrie 1 wird die Schnittkontur bestimmt, das heißt im allgemeinen der Grundriss des zu erstellenden Werkstücks. Das Modul Geometrie 1 dient also insbesondere dem Einlesen und der Aufbereitung einer Konstruktionszeichnung in zwei Dimensionen (X/Y Ebene).

Ist die Schnittkontur vollständig und fehlerfrei bestimmt, und weist die Geometrie-Datei keine losen Elemente oder Verzweigungen auf, erzeugt das System während der Abspeicherung der Geometriedatei umgehend eine Schnittgeometrie-Datei (S-File) und führt den Anwender in ein zweites Modul Konik 2.

Der Aufbau einer Konik basiert auf der Schnittkontur und dient der Definition eines Körpers (in drei Dimensionen).

Im zweiten Modul Konik 2 bietet das System alternativ zwei Arten der Definition eines Körpers zur Auswahl an: Winkelkonik 3 und 3D-Konik 4.

Im Rahmen der Alternative Winkelkonik 3 wird ein Körper durch Definition einer zweiten Kontur (Oberkontur) aus einer vorgegebenen Unterkontur (Schnittkontur) beschrieben.
Dies erfolgt durch die Festlegung von Winkeln der Drahtstellung in den betreffenden Punkten der Schnittkontur.

Im Rahmen der Alternative 3D-Konik 4 wird ein Körper durch die Definition von sog. Milestones bzw. Meilensteinen auf zwei zuvor erzeugten Schnittkonturen (Ober- bzw. Unterkontur) beschrieben. Dabei werden die beiden Schnittkonturen so zueinander in Beziehung gesetzt, daß bestimmten Punkten der die Werkstückgrundfläche begrenzenden Schnittkontur (Unterkontur) die entsprechenden Punkte der die Werkstückoberfläche begrenzenden Schnittkontur (Oberkontur) zugeordnet werden. Die Paare der einander zugeordneten Punkte auf Ober- und Unterkontur definieren einzelne Mantellinien ("Drahtlinien") des Körpers. Zusammen mit Angaben zum Werkstückmaterial, der geforderten Formtoleranz, der gewünschten Oberflächenrauheit etc. ist nun das gewünschte Werkstück festgelegt.

Ist die Konik 2 vollständig und fehlerfrei bestimmt, führt das System den Anwender in ein drittes Modul Arbeitsplan 5. Im Rahmen dieses Moduls Arbeitsplan 5 werden u. a. Offset, An- und Abfahrtswege, Wendepunkte, "Stops" und Eckenstrategien festgelegt, also "was die Maschine tun muß", um das gewünschte Werkstück zu erzeugen. Im Modul Arbeitsplan 5 werden somit die vom Draht tatsächlich zu fahrenden Bahnen generiert.

Ist der Arbeitsplan 5 vollständig und fehlerfrei bestimmt, führt das System den Anwender in ein viertes Modul Job 6 (auch "Verkettung" genannt). Hier erfragt das System Angaben zur Verkettung und Reihenfolge von Schnitten, Antastpunkte, Drahtschneidepunkte, Umfahrungspunkte usw. und ermöglicht dem Anwender, verschiedene im Modul Arbeitsplan 5 vollständig definierte Arbeitspläne zu einem Arbeitsablauf zusammenzusetzen. Dabei können mehrere Arbeitspläne so verkettet werden, daß maximale Materialausnützung bei minimalem Abfall besteht.

Ist der Job 6 vollständig und fehlerfrei bestimmt, übergibt das System alle ihm eingegebenen Informationen einem fünften Modul Postprozessor 7, das aus diesen Informationen ein NC-Programm für die Drahterodieranlage generieren kann.

Es sei noch auf die Möglichkeit hingewiesen, außerhalb des Systems erzeugte Geometriedaten (etwa über ein CAD-Programm wie z. B. AUTOCAD) in das System einzuspeisen und hier weiterzuverarbeiten.

Der Dialog zwischen System und Anwender erfolgt über einen Bildschirm und eine Eingabevorrichtung, vorzugsweise Maus und/oder Tastatur.

Auf dem Bildschirm informiert das System über den Fortschritt der Arbeit und bietet dem Arbeitsstadium entsprechende Funktionen zur Auswahl an. Mit der Maus steuert der Anwender einen Pfeilcursor auf das ihn interessierende Objekt auf dem Bildschirm und wählt bzw. klickt es an; über die Tastatur kann der Anwender einen sog. Scrollbar steuern, Werte eingeben und angebotene Elemente über deren Buchstaben- bzw. Zahlensymbol anwählen.

Anhand Fig. 2 soll der Aufbau bzw. das Bildschirmlayout eines Grundfensters 10 näher beschrieben werden.

Zum Aktivieren eines Moduls erscheint auf dem Bildschirm das Grundfenster 10. Dieses Grundfenster 10 weist zwei Hauptbereiche auf: einen Graphikbereich bzw. ein Graphik-Fenster 11 und einen Funktionsauswahl- bzw. Funktionseinstellbereich. Letzterer stellt die für die Arbeit benötigten Werkzeuge bereit; er besteht aus

- einem ersten Ikonenfeld 12, das solchen Funktionen zugeordnet ist, die im wesentlichen jedes der oben beschriebenen Module betreffen (sog. "Universalfunktionen"),
- einem zweiten Ikonenfeld 13, das solchen Funktionen zugeordnet ist, die sich speziell auf das jeweils aktive Modul beziehen (sog. "modulbezogene Funktionen"),
- einem Dialogfeld 14, in dem mit der Auswahl einer Funktion über eine dieser Funktion zugeordnete (Einzel-) Ikone **.1 ein dieser Funktion zugeordnetes Dialogfenster **.2 erscheint, das dann das zweite Ikonenfeld 13 überdeckt und
- einem Messergebnisfeld 15, in dem in entsprechenden Fällen ein Fenster mit Messergebnissen erscheint; dieses Messergebnisfeld 15 liegt in einem Filenamenfeld 16, in dem der Name der jeweils zu bearbeitenden Datei erscheint.

Die Ikonenfelder 12, 13 dienen zur Darstellung und Auswahl einzelner Funktionen, das Dialogfeld 14 einer (z.B. wertemäßigen) Einstellung der jeweils gewählten Funktion über das dieser Funktion zugeordnete Dialogfenster **.2

Im Graphikbereich bzw. Graphik-Fenster 11 dokumentiert das System den Fortschritt der Arbeit und stellt die durch die angewählten Funktionen weiter zu manipulierenden Objekte im aktuellen Zustand dar.

Neben den beiden eben beschriebenen Hauptbereichen weist das Grundfenster 10 an seinem oberen Rand noch eine (Haupt-) Menuleiste 17 und an seinem unteren Rand eine Multifunktionszeile 22 auf.

Die Menuleiste 17 enthält einen ersten Menupunkt 18 "Module", ein Modulnamenfeld 19, einen weiteren Menupunkt 20 "Filer" und einen weiteren Menupunkt 21 "Orientation".

Der Anwender bestimmt das Modul, in dem er arbeiten will, indem er aus der Menuleiste 17 den Menupunkt 18 "Module" anwählt. Daraufhin öffnet das System ein Untermenu ("Pull-Down"-Menu), in dem es die oben erwähnten fünf Module zur Auswahl anbietet. Im Modulnamenfeld 19 zeigt das System den Namen des gewählten bzw. aktuellen Moduls an.

Wählt der Anwender den Menupunkt 20 "Filer" an, öffnet das System ein Untermenu ("Pull-Down"-Menu). In diesem Untermenu bietet das System Funktionen zur Verwaltung erstellter bzw. zu erstellender Dateien an, das heißt Funktionen zum Öffnen und Schließen, Sichern, Kopieren, Löschen und Ausdrucken von Dateien, zum Formatieren von Datenträgern und zum Erstellen bzw. Löschen von Inhaltsverzeichnissen.

Wählt der Anwender den Menupunkt 21 "Orientation" an, öffnet sich ein Untermenu (Pull-Down-Menu), über das der Anwender das System und Systemfunktionen betreffenden Informationen und Hilfestellungen aufrufen kann.

Die Multifunktionszeile 22 am unteren Rand des Bildschirms informiert den Anwender bezüglich Identifikation, Status (Ikone - Dauerschalter) und Rechenoperationen und zeigt gegebenenfalls Fehlermeldungen, Warnungen usw. an.

Fig. 3 zeigt den vom System für das Modul Geometrie 1 im Grundfenster 10 angebotenen Funktionsauswahl- bzw. Funktionseinstellbereich, das heißt im Modul Geometrie 1 angebotene Einzelikonen **.1 in den Ikonenfeldern 12 und 13. Die beiden Ikonenfelder 12 und 13 bilden zusammen eine Ikonenleiste.

Den einzelnen Ikonen **.1 des ersten Ikonenfeldes 12 sind Universalfunktionen, den einzelnen Ikonen des zweiten Ikonenfeldes 13 speziell das Modul Geometrie 1 betreffende Funktionen zugeordnet.

Wählt der Anwender das Modul Geometrie 1, öffnet sich ein Fenster, in dem bereits erstellte Schnittkontur-Dateien angeboten werden. Der Anwender kann nun eine schon vorhandene Datei aufrufen oder eine neue Schnittkontur erstellen. Im ersten Fall öffnet das System das Grundfenster 10 Geometrie, im zweiten Fall zuvor noch ein Geometrie-Datenblatt. In dieses Datenblatt können über die Tastatur Daten wie Zeichnungsnummer, Datum, Autor usw. und Kommentare eingetragen und die Maßeinheit (Millimeter oder Inch) gewählt werden.

Ist das Datenblatt ausgefüllt, erscheint auf dem Bildschirm das Grundfenster 10 Geometrie. Es weist den Namen des Moduls (Geometrie) und einer gewählten Geometrie-Datei auf, zeigt im Graphikbereich bzw. -Fenster 11 ein X/Y-Koordinatensystem und im Funktionsauswahlbereich, das heißt in den Ikonenfeldern 12, 13 im Bildschirmabschnitt eine Gruppe der in diesem Modul anwendbaren Funktionen in Form einer Ikonenleiste nach Fig. 3.

Jeder Ikone **.1 ist ein entsprechendes Dialogfenster **.2 zugeordnet, das sich beim Anwählen der betreffenden Ikone im Dialogfeld 14 öffnet und dabei das zweite Ikonenfeld 13 der ursprünglichen Leiste überdeckt; das erste, für die Universalfunktionen reservierte Ikonenfeld 12 bleibt sicht- und anwählbar.

Im folgenden wird gemäß Fig. 4 eine erste Gruppe von das Modul Geometrie 1 betreffenden Funktionen bzw. Dialogfenstern näher beschrieben:

Eine Ikone 30.1 (4/5 aus der Ikonenleiste in Fig. 3) und ein Dialogfenster 31.2 betreffen einer Funktion "Tangente".

Anhand dieser Funktion "Tangente" soll exemplarisch für alle weiteren Funktionen der typische Verlauf eines Dialogs zwischen Anwender und System ausführlicher beschrieben werden.

Wir gehen davon aus, daß die Konstruktion der Schnittgeometrie schon weiter fortgeschritten ist; im Grafikbereich des Grundfensters Geometrie sind also schon eine Reihe von Konstruktionselementen, darunter auch ein Kreis und ein Punkt zu sehen. Der Anwender möchte nun eine Tangente an den Kreis legen, die durch diesen Punkt verläuft.

Dazu wählt der Anwender die Ikone 30.1 der Funktion "Tangente" (Zeile/Spalte 4/5 im Ikonenfeld nach Fig. 3) an. Damit öffnet er das entsprechende Dialogfenster 31.2. Dieses Fenster 31.2. weist einen Namen in einem Identifikationsabschnitt 32 der über die Ikone 30.1 angewählten Funktion (Tangente) und einen ersten Fensterabschnitt bzw. Eingabefeld 33 auf, in das der Anwender vom System erfragte numerische Werte oder algebraische Ausdrücke eingeben kann.

Weiter zeigt das Dialogfenster 31.2. in einem zweiten Fensterabschnitt bzw. Skizzenfeld 34 eine Skizze der angewählten Funktion mit einer Anzahl anwählbarer Elemente 35 in symbolischer Darstellung. Die einzelnen Elemente sind in sog. Boxes 36 eingefaßt.

Außerdem zeigt das Dialogfenster 31.2 noch Ikonen bzw. sog. Buttons "Unterbrechen" 37, "Abbrechen" 38, (Konstruktions-) "Alternativen" 39 und "OK" 40. (Buttons sind graphisch dargestellte Tasten, die über die Maus bedient werden können.)

Das System erwartet nun gemäß den Eindeutigkeitsregeln der Geometrie genau eines der folgenden Konstruktions-Prinzipien: Definition der Tangente durch einen Kreis K und

- einen Punkt P, durch den die Tangente verlaufen soll, oder
- eine gegebene Gerade g und den Winkel alpha, den die Tangente mit dieser Geraden einschließen soll, oder
- den Winkel alpha, den die Tangete mit der X-Achse x des Koordinatensystems einschließen soll (Symbol-Wahl).

Außerdem muß das System nach Wahl eines der drei oben genannten Konstruktions-Prinzipien wissen, auf welchen Kreis und Punkt bzw. auf welche Gerade unter den im Graphikbereich ausgewiesenen geometrischen Elementen der Anwender die Konstruktion stützen will (Identifikation).

Drittens benötigt das System im Fall einer durch einen Winkel definierten Tangentenkonstruktion den Wert dieses Winkels. Der gewünschte Wert ist gegebenenfalls in dem Eingabefeld 33 des Dialogfensters 31.2 einzutragen.

In unserem Fall trifft das Konstruktions-Prinzip Kreis/Punkt zu.
Dieses Prinzip teilt der Anwender dem System durch Anwählen (und damit "Aktivieren") der Elemente 35 C und P in den betreffenden Boxes 36 mit.

Durch Anwählen des betreffenden Kreises und Punktes teilt der Anwender dem System mit, auf welche Elemente im Graphikbereich er sich bei der Konstruktion stützen will (Identifikation).

Im allgemeinen kann der Anwender auf die Wahl des Konstruktions-Prinzips bzw. die "Aktivierung" der Elemente 35 im Skizzenfeld 34 verzichten und diese direkt im Graphikbereich anwählen; das System erschließt daraus selbstständig das anzuwendende Konstruktions-Prinzip.

Im Falle einer auf einen Winkel gestützten Funktion erwartet das System noch eine numerische Eingabe, eben die Größe dieses Winkels. Die Frage nach einer solchen Eingabe wird durch ein blinkendes Cursorzeichen im Eingabefeld 33 signalisiert.

Um Überbestimmungen der Konstruktion zu verhindern, sind den Elementen 35 die Zustände "frei", "aktiv", "besetzt" oder "redundant" (überflüssig) zugeordnet, wobei das graphische (z. B. farbliche) Erscheinungsbild der entsprechenden Boxes 36 den Anwender über den Status der Elemente 35 informiert. Das System erkennt, ob die vom Anwender gemachten Eingaben bezogen auf die gewählte Funktion und Konstruktion notwendig und hinreichend sind und zeigt dies an.

Der Dialog kann zu jedem Zeitpunkt der Bearbeitung durch Anwählen des entsprechenden Buttons 37 unterbrochen werden, um z. B. ein anderes Dialogfenster zu öffnen. Die im unterbrochenen Dialog erarbeiteten Daten werden dabei zwischengespeichert und können nach Schließen eines angewählten zweiten Dialogfensters mit dem Wiederöffnen des ersten weiterbearbeitet werden.

Wählt der Anwender den Button "Abbrechen" 38, schließt sich das Dialogfenster 31.2, und die darin erarbeiteten Daten werden gelöscht.

Bei manchen Dialogfenstern reicht der Platz im jeweiligen Skizzenfeld 34 nicht aus, um alle (Konstruktions-) Alternativen abzudecken. In diesem Fall wird neben der Ikone "Alternative" 39 die Anzahl der Alternativen angezeigt; wählt der Anwender diese Ikone an, kann er die betreffenden Alternativen im Skizzenfeld 34 nacheinander sichtbar machen und gegebenenfalls eine davon auswählen.

Ist die Arbeit in einem Dialogfenster logisch korrekt und vollständig abgeschlossen, berechnet das System sofort das neue geometrische Element (in obigem Beispiel die Tangente). Eine logisch vollständige Dateneingabe erkennt der Benutzer daran, daß alle Symbolboxen 36 und Eingabefelder 33 entweder den Status "besetzt" oder "redundant" aufweisen.

Während der Berechnung des neu anzulegenden Elementes hat der Cursor die Form einer Sanduhr, und das System nimmt keine Eingaben an. Ist die Berechnung abgeschlossen, erwartet das System die Quittierung der Daten im Dialogfenster durch Anwahl eines "OK"-Buttons 40.

Zur weiteren Arbeitserleichterung können einander entsprechende Elemente im Dialogfeld und im Graphikbereich mit gleicher Farbe belegt sein; häufig vorkommende Elemente oder Werte können voreingestellt sein.

Die vom System angebotenen Funktionen in ihrer Gesamtheit weisen untereinander bezüglich des Aufbaus der zugeordneten Dialogfenster, der Dialogstruktur und der logischen Analyse der Eingaben große Ähnlichkeit auf. Diesbezüglich gilt viel von dem, was in der vorangegangen Beschreibung der Funktion "Tangente" gesagt wurde, auch für die übrigen Funktionen und muß daher im folgenden nicht mehr in allen Einzelheiten wiederholt werden.

Eine Ikone 50.1 (5/1 aus der Ikonenleiste in Fig. 3) und ein Dialogfenster 51.2 betreffen eine Funktion "Tangente an Kreise". Diese Funktion dient dazu, eine gerade Linie zu erzeugen, die zwei gegebene Kreise berührt.

Das System erwartet dazu die Identifizierung der beiden Kreise.

Eine Ikone 52.1 (5/2 aus der Ikonenleiste in Fig. 3) und ein Dialogfenster 53.2 betreffen eine Funktion "Lot auf Kreis". Diese Funktion dient dazu, eine gerade Linie zu erzeugen, die durch einen gegebenen Punkt verläuft und einen gegebenen Kreis so berührt bzw. schneidet, daß die zu erzeugende Linie auf einer Tangente an den Kreis im Berühr- bzw. Schnittpunkt senkrecht steht.

Das System erwartet zu dieser Funktion die Identifizierung des betreffenden Kreises und des betreffenden Punktes.

Eine Ikone 54.1 (6/1 aus der Ikonenleiste in Fig. 3) und ein Dialogfenster 55.2 betreffen eine Funktion "Kreis ohne Element auf Umfang". Diese Funktion erzeugt einen Kreis um einen gegebenen Punkt mit entweder einem gewünschten Radius oder einem gewünschten Durchmesser.

Das System erwartet zu dieser Funktion die Identifizierung des betreffenden Punktes und die Eingabe entweder des gewünschten Radius oder des gewünschten Durchmessers in eines der Eingabefelder 33 im Dialogfenster 55.2.

Im folgenden wird gemäß Fig. 5 eine Gruppe von (u.a. im Modul Geometrie 1) abrufbaren (Universal-) Funktionen bzw. Dialogfenstern näher beschrieben:

Eine Ikone 60.1 (in Zeile/Spalte 1/1 der Ikonenleiste aus Fig. 3) und ein Dialogfenster 61.2 sind der Funktion "Anzeigen/ Ändern" zugeordnet. Über diese Funktion läßt sich ein identifiziertes Element anzeigen und eventuell ändern.

Das zu manipulierende Element muß im Graphikbereich identifiziert werden (z. B. durch Anklicken). Die Elemente "Eltern/Kinder/Kindeskinder" werden dabei nach bestimmten Regeln in der Graphik hervorgehoben. Nach Betätigen des Buttons "OK" 40 öffnet das System das für die Definition des Elementes verwendete Dialogfenster und kennzeichnet gleichzeitig mit dem identifizierten Element gekoppelten Elemente mit besonderer Farbe.

Eine Ikone 62.1 (1/2 aus der Ikonenleiste in Fig. 3) betrifft eine Funktion "Rechenoperation". Diese Funktion ermöglicht dem Anwender das Rechnen mit den

- Grundoperatoren plus, minus, mal und geteilt durch,

- Mathematischen Funktionen sin, cos, tan, arcsin, arccos und arctan

und erlaubt dabei das Setzen von Klammern.

Eine Ikone 63.1 (1/4 aus der Ikonenleiste in Fig. 3) und ein Dialogfenster 64.2 betreffen eine Funktion "Ausschnitt/Maßstab". Über diese Funktion kann der Anwender nach Anwählen

- einer Option "Verschieben" 65 Anfangs- und Endpunkt einer gewünschten Verschiebung des Ausschnittes definieren. Das Cursorzeichen nimmt während der Festlegung des Verschiebevektors die Form eines Kreuzes an;
- einer Option "Maßstab ändern" 66 den Ausschnitt verkleinern und vergrößern. Dies kann entweder durch Eingabe der gewünschten Randwerte bezüglich der X- bzw. Y-Achse oder der Eingabe eines Faktors in die entsprechenden Eingabefelder 33 erfolgen. Der verfügbare Graphikbereich wird dabei immer optimal genutzt.

Eine Ikone 67.1 (1/5 aus der Ikonenleiste in Fig. 3) betrifft eine Funktion "Zoomen". Diese Funktion dient zur Vergrößerung und Verkleinerung von Bildausschnitten. Wird sie angewählt, nimmt das Cursorzeichen die Form eines Kreuzes an; durch Anklicken eines Punktes und diagonales "Ziehen" bei gehaltener Maustaste wird ein Rechteck aufgespannt, das einen bestimmten Bildbereich umgrenzt. Nach Loslassen der Maustaste vergrößert das System den gewählten Bildbereich auf volle Bildschirmgröße. (Zu dieser Funktion öffnet sich kein Dialogfenster.)

Eine Ikone 68.1 (2/1 aus der Ikonenleiste in Fig. 3) und ein Dialogfenster 69.2 betreffen eine Funktion "Messen". Das Messergebnis erscheint im Messergebnisfeld 15 des Dialogfensters 69.2. Das System zeichnet dabei im Skizzenfeld 34 einen besonderen Mess-Strich 70 über eine Mess-Strecke.

Gemessen werden kann

- der Abstand zweier paralleler Geraden voneinander;
- der Abstand zweier Kreise in Abhängigkeit des Klickortes;
- der Abstand zweier Punkte;
- der Abstand zwischen einem Punkt und einer Geraden;
- der Abstand zwischen einem Punkt und einem Kreis in Abhängigkeit des Klickortes;
- der Abstand zwischen einer Geraden und einem Kreis in Abhängigkeit des Klickortes;
- ein Kreisdurchmesser und
- der Winkel zwischen zwei nichtparallelen Geraden.

Das Messen erfolgt nach einfachem Anklicken der betreffenden geometrischen Elemente.

Ruft man bei geöffnetem anderen Dialogfenster (nach Anklicken des Buttons 37 "Unterbrechen") die Funktion "Messen" auf, wird das Messergebnis in die Eingabezeile eines ersten Dialogfensters übertragen, wenn diese Eingabezeile zuvor "aktiv" gesetzt wurde.

Eine Ikone 71.1 (2/2 aus der Ikonenleiste in Fig. 3) und ein Dialogfenster 72.2 betreffen eine Funktion "Plotten". Diese Funktion ermöglicht es, den aktuellen Stand eines Graphikbildes über einen Plotter auszugeben, wobei während des Plottens weitergearbeitet werden kann.

Über das Dialogfenster 72.2 können ein Zeichnungs-Rahmen, ein Zeichnungs-Kopf und verschiedene Maßstäbe angeordnet werden.

Eine Ikone 73.1 (2/5 aus der Ikonenleiste in Fig. 3) betrifft eine Funktion "Zoomen annulieren".

Im folgenden wird gemäß Fig. 6 eine speziell das Modul Geometrie 1 betreffender Funktion näher beschrieben:

Eine Ikone 80.1 (3/1 aus der Ikonenleiste in Fig. 3) und ein Dialogfenster 81.2 betreffen eine Funktion "Punkt absolut". Diese Funktion dient dazu, einen Punkt über seine absoluten Koordinaten kartesisch (voreingestellt) oder polar zu definieren. Der Anwender trägt dazu die gewünschten Werte in die entsprechenden Eingabefelder 33 ein.

Im folgenden wird gemäß Fig. 7 eine Gruppe weiterer (speziell) das Modul Geometrie 1 betreffende Funktionen bzw. Dialogfenster näher beschrieben:

Eine Ikone 90.1 (3/2 aus der Ikonenleiste in Fig. 3) und ein Dialogfenster 91.2 betreffen eine Funktion "Punkt inkremental". Diese Funktion dient dazu, einen zweiten Punkt über seine auf einen angeklickten ersten Punkt bezogenen Inkremental-Werte kartesisch oder polar zu definieren. Der Anwender trägt dazu die gewünschten Werte in die entsprechenden Eingabefelder 33 ein.

Eine Ikone 92.1 (3/3 aus der Ikonenleiste in Fig. 3) und ein Dialogfenster 93.2 betreffen eine Funktion "Schnittpunkt". Diese Funktion dient dazu, den Schnittpunkt zweier Elemente E 1 und E 2 oder einen in der Nähe dieses Schnittpunktes gelegenen schon gegebenen Punktes als neues Element zu definieren.

Eine Ikone 94.1 (3/4 aus der Ikonenleiste in Fig. 3) und ein Dialogfenster 95.2 betreffen eine Funktion "Punkt im Abstand". Diese Funktion dient dazu, einen zweiten Punkt auf einem Element 1 über den gewünschten Abstand d von einem ersten, auf dem selben Element gelegenen Punkt P zu definieren. Das System erwartet dazu vom Anwender (neben der Identifizierung) die Eingabe des gewünschten Abstandswertes d in das Eingabefeld 33.

Eine Ikone 96.1 (3/5 aus der Ikonenleiste in Fig. 3) und ein Dialogfenster 97.2 betreffen eine Funktion "Mittelpunkt". Diese Funktion dient dazu, den Mittelpunkt eines Kreises als neues Element zu definieren.

Im folgenden wird gemäß Fig. 8 eine weitere Gruppe von das Modul Geometrie 1 betreffenden Funktionen bzw. Dialogfenstern näher beschrieben:

Eine Ikone 100.1 (4/1 aus der Ikonenleiste in Fig. 3) und ein Dialogfenster 101.2 betreffen eine Funktion "Gerade durch zwei Punkte". Diese Funktion dient dazu, eine gerade Linie durch einen gegebenen ersten und zweiten Punkt als neues Element zu definieren.

Der zweite Punkt kann entweder schon gegeben sein oder neu definiert werden; im letzten Fall erwartet das System dazu (neben der Identifizierung des ersten Punktes) die Eingabe der Koordinaten-Differrenzen dx und dy der beiden Punkte in das Eingabefeld 33.

Eine Ikone 102.1 (4/2 aus der Ikonenleiste in Fig. 3) und ein Dialogfenster 103.2 betreffen eine Funktion "Kettenlinie". Diese Funktion dient dazu, mehrere gerade Linien in Kette aneinanderzureihen. An einem vorläufigen Endpunkt der Kette angelangt erwartet das System jeweils nach Anwahl der Option "Next" 104 die Identifizierung eines nächsten Kettenpunktes, um diesen mit dem vorläufigen Endpunkt der Kette gerade zu verbinden.

Ist noch kein nächster Endpunkt vorhanden, erwartet das System die Eingabe seine Koordinaten (absolut oder inkremental, kartesisch oder polar) in die Eingabefelder 33.

Eine Ikone 105.1 (4/3 aus der Ikonenleiste in Fig. 3) und ein Dialogfenster 106.2 betreffen eine Funktion "Gerade im Winkel". Diese Funktion dient dazu, eine gerade Linie durch einen gegebenen Punkt zu erstellen, wobei diese gerade Linie zu einer gegebenen Bezugsgeraden einen gewünschten Winkel einhalten soll. Die Bezugsgerade kann auch die X-Achse sein.

Das System erwartet dazu die Identifizierung des Punktes, der Bezugsgeraden und die Eingabe des gewünschten Winkels in das Eingabefeld 33.

Eine Ikone 107.1 (4/4 aus der Ikonenleiste in Fig. 3) und ein Dialogfenster 108.2 betreffen eine Funktion "Parallele". Diese Funktion dient dazu, eine zu einer gegebenen Bezugsgeraden parallele gerade Linie zu erzeugen, die entweder durch einen gegebenen Punkt verläuft oder zu der Bezugsgeraden einen bestimmten Abstand hat. Die Bezugsgerade kann auch eine der beiden Achsen sein.

Das System erwartet bei der Funktion "Parallele" die Identifizierung der Bezugsgeraden, die auch eine der beiden Achsen sein kann und

- entweder die Identifizierung des Punktes, durch den die zu erstellende Parallele verlaufen soll oder
- die Eingabe des gewünschten Abstandes der Parallelen zur Bezugsgeraden in das Eingabefeld 33 ist.

Im folgenden wird gemäß Fig. 9 eine weitere Gruppe von das Modul Geometrie 1 betreffender Funktionen bzw. Dialogfenstern näher beschrieben:

Eine Ikone 110.1 (6/2 aus der Ikonenleiste in Fig. 3) und ein Dialogfenster 111.2 betreffen eine Funktion "Kreis mit 1 Element auf Umfang". Diese Funktion erzeugt einen Kreis um einen gegebenen Punkt so, daß die Kreislinie ein zweites gegebenes Element berührt bzw. durchläuft. Das zweite Element kann entweder eine gerade Linie oder ein Kreis oder ein Punkt sein.

Das System erwartet zu dieser Funktion die Identifizierung des zum Mittelpunkt des zu erzeugenden Kreises erkorenen Punktes und die Identifizierung der geraden Linie oder des Kreises oder des Punktes, den der geplante Kreis berühren bzw. (wenn geometrisches Element = Punkt) durchlaufen soll.

Eine Ikone 112.1 (6/3 aus der Ikonenleiste in Fig. 3) und ein Dialogfenster 113.2 betreffen eine Funktion "Kreis mit 2 Elementen auf Umfang". Diese Funktion erzeugt einen Kreis mit entweder gegebenem Radius oder gegebenem Durchmesser so, daß die Kreislinie mit jedem von zwei gegebenen geometrischen Elementen genau einen Punkt gemeinsam hat. Jedes der beiden geometrischen Elemente kann unabhängig vom anderen entweder eine gerade Linie oder ein Kreis oder ein Punkt sein.

Das System erwartet zu dieser Funktion die Identifizierung der beiden geometrischen Elemente, die der geplante Kreis berühren bzw. (wenn geometrisches Element = Punkt) durchlaufen soll. Außerdem muß entweder der Radius oder der Durchmesser in das Eingabefeld 33 im Dialogfenster 113.2 eingetragen werden.

Eine Ikone 114.1 (6/4 aus der Ikonenleiste in Fig. 3) und ein Dialogfenster 115.2 betreffen eine Funktion "Kreis mit 3 Elementen auf Umfang". Diese Funktion erzeugt einen Kreis, der mit jedem von drei gegebenen geometrischen Elementen genau einen Punkt gemeinsam hat. Jedes der drei geometrischen Elemente kann unabhängig von den beiden anderen entweder eine gerade Linie oder ein Kreis oder ein Punkt sein.

Das System erwartet zu dieser Funktion die Identifizierung der drei geometrischen Elemente, die der geplante Kreis berühren bzw. (wenn geometrisches Element = Punkt) durchlaufen soll.

Eine Ikone 116.1 (6/5 aus der Ikonenleiste in Fig. 3) und ein Dialogfenster 117.2 betreffen eine Funktion "Kreisbogen".

Diese Funktion erzeugt einen Kreisbogen. Dazu erwartet das System

- entweder die Identifizierung zweier gegebener Punkte als Anfangs- bzw. Endpunkt des Bogens und die Eingabe eines gewünschten Bogenradius in das Eingabefeld 33 des Dialogfensters 117.2;
- oder die Identifizierung zweier gegebener Punkte als Mittel- bzw. Anfangspunkt des Bogens und den Eintrag eines Wertes in das Eingabefeld 33 des Dialogfensters 117.2, wobei dieser Wert einen gewünschten Winkel zwischen der positiven X-Achse und der Verbindungslinie zwischen Mittel- und Endpunkt des Bogens bezeichnet;
- oder die Identifizierung eines gegebenen Punktes als Mittelpunkt des Bogens und den Eintrag des Bogenradius und

- zweier Werte in das Eingabefeld 33 des Dialogfensters 117.2,
    - wobei der erste Wert einen gewünschten Winkel zwischen der positiven X-Achse und der Verbindungslinie von Mittel- und Anfangspunkt des Bogens bezeichnet,
    - und der zweite Wert einen gewünschten Winkel zwischen der Verbindungslinie von Mittel- und Anfangspunkt und der Verbindungslinie von Mittel- und Endpunkt des Bogens bezeichnet.

- oder die Identifizierung eines gegebenen Punktes als Mittelpunkt des Bogens und den Eintrag des Bogenradius und
  - zweier Werte in das Eingabefeld 33 des Dialogfensters 117.2,
    - wobei der erste Wert einen gewünschten Winkel zwischen der positiven X-Achse und der Verbindungslinie von Mittel- und Anfangspunkt des Bogens bezeichnet,
    - und der zweite Wert einen gewünschten Winkel zwischen der positien X-Achse und Verbindungslinie von Mittel- und Endpunkt des Bogens bezeichnet.

Im folgenden wird gemäß Fig. 10 eine weitere Gruppe von das Modul Geometrie 1 betreffenden Funktionen bzw. Dialogfenstern näher beschrieben:

Eine Ikone 120.1 (7/1 aus der Ikonenleiste in Fig. 3) und ein Dialogfenster 121.2 betreffen eine Funktion "Kreis an zwei Parallelen". Diese Funktion erzeugt einen Kreis, der zwei gegebene Parallele berührt und dessen auf den Parallelen senkrechte Durchmesser von einem dritten gegebenen Element einen zu wählenden Abstand hat. Das dritte Element kann entweder ein Punkt oder eine zu den Parallelen senkrechte Gerade oder eine der beiden Koordinaten-Achsen sein.

Das System erwartet dazu die Identifizierung der beiden Parallelen und des dritten Elements und den Eintrag des Abstandes in das Eingabefeld 33 des Dialogfensters 121.2.

Eine Ikone 122.1 (7/5 aus der Ikonenleiste in Fig. 3) und ein Dialogfenster 123.2 betreffen eine Funktion "Ausrundungs-Radien innen/außen". Mit dieser Funktion läßt sich eine Ecke in der erstellten Kontur abrunden.

Das System erwartet dazu die Identifizierung des abzurundenden Eckpunktes und die Eingabe des gewünschten Rundungs-Radius in das Eingabefeld 33 des Dialogfensters 123.2.

Eine Ikone 124.1 (9/1 aus der Ikonenleiste in Fig. 3) und ein Dialogfenster 125.1 betreffen eine Funktion "Kopieren". Diese Funktion erzeugt von einem gegebenen Element oder Segment eine wählbare Zahl von Abbildern und reiht diese Abbilder entlang einer gedachten, vom Ur-Element bzw. Segment ausgehenden geraden Linien in wählbaren gleichen Abständen auf. Die gedachte Linie kann dabei einen frei wählbaren Winkel zur X-Achse einnehmen.

Der Anwender kann wählen, ob die Abbilder reell oder virtuell angelegt werden sollen. In letzterem Fall wird lediglich die Abbildungsvorschrift gespeichert, so daß einzelne Kopien in "Geometrie" nicht geändert werden können.

Eine Ikone 126.1 (9/2 aus der Ikonenleiste in Fig. 3) und ein Dialogfenster 127.2 betreffen eine Funktion "Spiegeln". Diese Funktion erlaubt die Spiegelung eines gegebenen Elementes oder Segmentes an einem wählbaren Punkt, an einer Parallelen zur X-oder Y-Achse durch das Spiegelzentrum, oder an einer wählbaren Geraden.

Diese Möglichkeiten können auch kombiniert werden, wobei ein oder mehrere neue Elemente bzw. Segmente angelegt werden.

Im folgenden wird gemäß Fig. 11 eine weitere Gruppe von das Modul Geometrie 1 betreffenden Funktionen bzw. Dialogfenstern näher beschrieben:

Eine Ikone 130.1 (9/3 aus der Ikonenleiste in Fig. 3) und ein Dialogfenster 131.2 betreffen eine Funktion "Skalieren". Diese Funktion erlaubt es, ein gegebenes Element bzw. Segment bezüglich eines wählbaren Zentrums zu skalieren, das heißt in X- und/oder Y-Richtung mit einem wählbaren Faktor zu strecken oder zu stauchen.

Das System erwartet dabei die Identifizierung des zu skalierenden Elementes und eines ersten Punktes dieses Elementes, die Eingabe der beiden Skalier-Faktoren in einem der Eingabefelder 33 des Dialogfeldes 131.2 und entweder die Identifizierung eines zweiten Punktes des skalierten Elementes, der dem ersten Punkt entspricht, oder das Eintragen der Koordinaten dieses zweiten Punktes in einem der Eingabefelder 33 des Dialogfeldes 131.2.

Eine Ikone 132.1 (9/4 aus der Ikonenleiste in Fig. 3) und ein Dialogfenster 133.2 betreffen eine Funktion "Drehen". Diese Funktion erlaubt es, ein gegebenes Element bzw. Segment um einen gegebenen oder einen fiktiven Punkt zu drehen, wobei ein oder mehrere Drehwinkel frei definierbar sind.

Das Ausgangselement bleibt erhalten, und es wird ein neues Element angelegt. Das Anlegen des neuen Elementes kann reell oder virtuell erfolgen.

Eine Ikone 134.1 (9/5 aus der Ikonenleiste in Fig. 3) und ein Dialogfenster 135.2 betreffen eine Funktion "Verschieben". Diese Funktion erlaubt es, ein gegebenes Element bzw. Segment zu einem gegeben oder fiktiven Punkt zu verschieben, wobei das Ausgangs-Element verschwindet.

Dazu erwartet das System die Identifizierung des Zielpunktes der Verschiebung oder die Eingabe seiner Koordinaten in das Eingabefeld 33 des Dialogfensters 135.2.

Eine Ikone 136.1 (10/1 aus der Ikonenleiste in Fig.

3) und ein Dialogfenster 137.2 betreffen eine Funktion "Hilfskontur". Mit dieser Funktion können Hilfskonturen zu gegebenen Schnittkonturen erzeugt werden, die bei Vollabtrag als Inseln gebraucht werden.

Im folgenden wird gemäß Fig. 12 eine weitere Gruppe von das Modul Geometrie 1 betreffenden Funktionen bzw. Dialogfenstern näher beschrieben:

Eine Ikone 140.1 (11/2 aus der Ikonenleiste in Fig. 3) und ein Dialogfenster 141.2 betreffen eine Funktion "Ein/Ausblenden". Mit dieser Funktion können beliebige Geometrie-Elemente (oder Teile davon) zur besseren Übersichtlichkeit auf dem Bildschirm aus- und wieder eingeblendet werden. Ausblenden wirkt dabei von Punkt zu Punkt bzw. von Punkt bis zum Ende der Zeichenfläche; die ausgeblendeten Elemente werden nicht gelöscht.

Eine Ikone 142.1 (11/3 aus der Ikonenleiste in Fig. 3) und ein Dialogfenster 143.2 betreffen eine Funktion "Makro". Ein "Makro" ist ein parametrisiertes Objekt (auch "Schablone" genannt); ordnet man Parametern Zahlenwerte zu, ändert sich die Zeichnung im Graphikbild.

Eine Ikone 144.1 (11/4 aus der Ikonenleiste in Fig. 3) und ein Dialogfenster 145.2 betreffen eine Funktion "Sub-Geometrie". Mit dieser Funktion kann der Anwender bereits definierte Geometrien in ein aktuelles Geometrie-Programm einlesen.

Dazu wählt der Anwender die Datei einer gewünschten Sub-Geometrie und identifiziert den Koordinatenursprung dieser Sub-Geometrie mit einem gegebenen oder fiktiven Punkt der aktiven (Ziel-) Geometrie. Danach kann diese Sub-Geometrie mit den Funktionen "Drehen", "Skalieren" oder "Spiegeln" manipuliert werden.

Häufig wiederkkehrende Grundmuster können vom Anwender in einer eigenen Geometrie-Bibliothek gesammelt werden und als Bausteine für komplexere Geometrien verwendet werden.

Eine Ikone 146.1 (11/5 aus der Ikonenleiste in Fig. 3) und ein Dialogfenster 147.2 betreffen eine Funktion "Skizzieren". Diese Funktion dient ergänzend der schnellen Eingabe von einfacheren Konturen. Nach Anwahl einer Ikone "Punkte setzen" 148.1 im Dialogfenster 147.2 werden mit der Maus Punkte gesetzt, nach Anwahl einer weiteren Ikone "gerade verbinden" 149.1 im Dialogfenster 147.2 mit dem zuletzt definierten Punkt durch eine gerade Linie oder, nach Anwahl einer dritten Ikone "Kreisförmig verbinden" 150.1 im Dialogfenster 147.2, eine Kreislinie verbunden.

Weitere Ikonen und das Eingabefeld 33 im Dialogfenster 147.2 dienen der Dimensionierung.

Im folgenden wird gemäß Fig. 13 eine weitere Gruppe von das Modul Geometrie 1 betreffenden Funktionen bzw. Dialogfenstern näher beschrieben:

Eine Ikone 160.1 (12/1 aus der Ikonenleiste in Fig. 3) und ein Dialogfenster 161.2 betreffen eine Funktion "Bezugspunkt". Mit dieser Funktion kann ein gegebener Punkt durch Identifizierung oder ein fiktiver Punkt durch Eingabe seiner Koordinaten (kartesisch oder polar) in das Eingabefeld 33 im Dialogfenster 161.2 als neuer Bezugspunkt definiert werden.

Eine Ikone 162.1 (12/3 aus der Ikonenleiste in Fig. 3) und ein Dialogfenster 163.2 betreffen eine Funktion "Punkt-Koordinaten". Diese Funktion dient dazu, durch Identifizierung eines Punktes seine Koordinaten absolut und, wenn eine Inkrementalvermaßung vorhanden ist, inkremental zu einem Bezugspunkt zu bestimmen.

Eine Ikone 164.1 (12/4 aus der Ikonenleiste in Fig. 3) und ein Dialogfenster 165.2 betreffen eine Funktion "Raster". Diese Funktion erzeugt ein Raster, wobei eine eine erste Schar zueinander parallel im gleichen Abstand verlaufender Linien eine zweite Schar zueinander parallel im gleichen Abstand verlaufender Linien kreuzt.

Das System erwartet dazu Eingaben über den Abstand der Geraden der ersten Schar, den Abstand der Geraden der zweiten Schar, und die jeweiligen Neigungswinkel der beiden Scharen zur X-Achse.

Der Anwender kann die betreffenden Werte frei bestimmen und in das Eingabefeld 33 im Dialogfenster 165.2 eintragen. Das Raster läßt sich durch Anwahl einer Option 166 "durch Punkt" im Dialogfenster 165.2 und anschließender Identifizierung mit einem gegebenen Punkt so verschieben, daß dieser Punkt mit einem Kreuzungspunkt des Rasters zur Deckung kommt.

Der Anwender kann das Raster nach Wunsch aus- und wieder einschalten; außerdem hat er die Möglichkeit, Farbe, Linientyp und Liniendicke des Rasters zu variieren.

Eine Ikone 167.1 (12/5 aus der Ikonenleiste in Fig. 3) und ein Dialogfenster 168.2 betreffen eine Funktion "Maßeinheit". Mit dieser Funktion läßt sich durch Anwählen entsprechender Optionen 169 und 170 im Dialogfenster 168.2 die Maßeinheit von "metrisch" auf "inch" (und umgekehrt) schalten.

Nach Aufrufen der Winkelkonik im Modul Konik erscheint im Funktionsauswahl- bzw. Funktionseinstellbereich 12, 13 auf der rechten Bildschirmseite eine Ikonenleiste für Winkelkonik gemäß Fig. 14.

Die beiden ersten Zeilen 12 dieser Leiste enthalten die gleichen Ikonen wie die entsprechenden Zeilen 12 der Ikonenleiste für das Modul Geometrie 1 (s. Fig. 3), mit Ausnahme der Zeilen/Spalten 1/4 und 2/2.

Eine das Modul Winkelkonik betreffende Funktion wird gemäß Fig. 15 beschrieben:

Eine Ikone 180.1 (2/2 aus der Ikonenleiste in Fig. 14) und ein Dialogfenster 181.2 betreffen eine Funktion "3D-Darstellung".

Die Funktion stellt das aktuelle Werkstück quasi-dreidimensional dar. Der Anwender kann dabei sozusagen festlegen, "von wo aus" und "aus welcher Entfernung" er "das Werkstück betrachten" will.

Zur Orientierung wird in einem ersten Skizzenfeld 182 das Werkstück im Schemabild gezeigt und über ein Kompassfeld 183 die Bedeutung verschiedener Gradzahlen im Hinblick auf relative Drehwinkel des Werkstücks angezeigt.

Über ein zweites Skizzenfeld 184, in dem verschiedene Blickrichtungen auf das Werkstück ("von ganz oben" bis "von ganz unten") angeboten sind, kann der Anwender seine Wünsche definieren. Das System erwartet dazu eine Anwahl bzw. eine Eingabe der Blickrichtung bezüglich der Höhe, die Eingabe eines Dichte-Wertes und die Eingabe eines Drehwinkels bezüglich des Kompassfeldes 183.
Im übrigen können jederzeit die Zoomfunktionen verwendet werden.
Zusammen mit der dreidimensionalen Darstellung des Werkstücks erscheint noch ein X/Y/Z-Koordinatensytem auf dem Bildschirm, dessen "räumliche" Ausrichtung der gewählten Blickrichtung entspricht.

Eine Gruppe von weiteren, speziell die Winkelkonik im Modul Konik 2 betreffenden Funktionen wird gemäß Fig. 16 beschrieben:

Eine Ikone 190.1 (3/1 aus der Ikonenleiste in Fig. 14) und ein Dialogfenster 191.2 betreffen eine Funktion "Standardkonik". Mit dieser Funktion können Winkel bzw. Abstandswerte eingegeben werden, und zwar nur solche, die eine Auslenkung des Drahtes in der zur Bewegungsrichtung auf der Kontur senkrechten Ebene definieren.

Ein Radius eines Kreisbogens auf einer zu erzeugenden Oberkontur ergibt sich nach Standardkonus-Regeln.

Eine Ikone 192.1 (3/2 aus der Ikonenleiste in Fig. 14) und ein Dialogfenster 193.2 betreffen eine Funktion "Fixer Winkel". Mit dieser Funktion kann eine Drahtneigung relativ zur Unterkontur-Ebene für aktive bzw. identifizierte Elemente der Unterkontur fixiert werden.

Ein Radius eines Kreisbogens einer zu erzeugenden Oberkontur ergibt sich nach ISO-Radius-Regeln.

Eine Ikone 194.1 (3/3 aus der Ikonenleiste in Fig. 14) und ein Dialogfenster 195.2 betreffen eine Funktion "Linearer Winkel". Mit dieser Funktion können Anstell-Winkel oder Draht-Abstand an einem Anfangspunkt A und einem Endpunkt E einer Strecke festgelegt werden. Längs der aktiven Elemente der Unterkontur ändert sich der Winkel stetig (linear).

Beim Anklicken des Anfangspunktes prüft das System, ob in diesem Punkt eine von einem Nachbarelement definierte Auslenkung vorhanden ist. Wenn ja, wird diese Auslenkung automatisch in die entsprechenden Eingabefelder übertragen. Die Werte können editiert werden.

Das eben gesagte gilt ebenso für den Endpunkt.

Eine weitere Gruppe von speziell das Modul Konik 2 betreffenden Funktionen wird gemäß Fig. 17 beschrieben:

Eine Ikone 200.1 (4/1 aus der Ikonenleiste in Fig. 14) und ein Dialogfenster 201.2 betreffen eine Funktion "Punktanlegen". Mit dieser Funktion kann der Anwender in der Unterkontur einen Punkt über seinen Abstand von einem gegebenen Punkt definieren.

Das System erzeugt dabei den neu definierten Punkt auf der Unterkontur und legt auf der Oberkontur einen entsprechenden Punkt an.

Eine Ikone 202.1 (4/2 aus der Ikonenleiste in Fig. 14) und ein Dialogfenster 203.2 betreffen eine Funktion "Punktlöschen". Mit dieser Funktion können diejenigen Punkte der Unter- und der Oberkontur gelöscht werden, die im Modul Konik über die Funktion "Punktanlegen" erzeugt wurden; Geometrie-Punkte können mit dieser Funktion also nicht gelöscht werden.

Die beiden zuletzt beschriebenen Funktionen "Punktanlegen" und "Punktlöschen" werden im Modul Konik 2 über die entsprechenden Ikonen 200.1 bzw. 202.1 und Dialogfenster 201.2 bzw. 203.2 sowohl zum Erstellen einer Winkel-Konik 3 als auch zum Erstellen einer 3D-Konik 4 angeboten. Außerdem werden diese Funktionen auch im Modul Arbeitsplan 5 angeboten, wobei dort nur solche Punkte gelöscht werden können, die im Modul Arbeitsplan 5 angelegt worden sind.

Eine Ikone 204.1 (5/1 aus der Ikonenleiste in Fig. 14) und ein Dialogfenster 205.2 betreffen eine Funktion "Standard-Radius". Diese Funktion erstellt Radien für Kreisbögen der Oberkontur entsprechend einer Standard-Radius-Definition. Dabei ergibt dich ein zu erstellender Radius R aus einem gegebenen Radius r in der Unterkontur, einer gegebenen Werkstückhöhe h und einem definierten Anstellwinkel aw des Drahtes zur Normalen der Unterkontur-Ebene nach der Formel

$$r+h*\tan(aw) ;$$

Diese Funktion hat gegenüber den Funktionen "Standardkonik", "Fixer Winkel" und "Linearer Winkel" eine höhere Priorität.

Eine Ikone 206.1 (5/2 aus der Ikonenleiste in Fig. 14) und ein Dialogfenster 207.2 betreffen eine Funktion "ISO-Radius". Diese Funktion erstellt Radien für Kreisbögen der Oberkontur entsprechend einer ISO-Radius-Definition, und zwar hat ein Kreisbogen der zu berechnenden Oberkontur den gleichen Radius wie der entsprechende Kreisbogen der Unterkontur.

Auch diese Funktion hat gegenüber den Funktionen "Standard-Konik", "Fixer Winkel" und "Linearer Winkel" eine höhere Priorität.

Eine weitere Gruppe speziell die Winkel-Konik 3 im Modul Konik 2 betreffende Funktionen wird gemäß Fig. 18 beschrieben:

Eine Ikone 210.1 (5/3 aus der Ikonenleiste in Fig. 14) und ein Dialogfenster 211.2 betreffen eine Funktion "Programmierbarer Radius". Mit dieser Funktion kann der Anwender einen zu erzeugenden Radius eines Kreisbogens der Oberkontur explizit in dem Eingabefeld 33 des Dialogfensters 211.2 eintragen. Ob der vom Anwender programmierte Radius auch schneidbar ist, läßt sich über eine (später erläuterte) Funktion "Simulation" feststellen.
Auch diese Funktion hat gegenüber den Funktionen "Standard-Konik", "Fixer Winkel" und "Linearer Winkel" eine höhere Priorität.

Eine Ikone 212.1 (5/4 aus der Ikonenleiste in Fig. 14) und ein Dialogfenster 213.2 betreffen eine Funktion "Radius im Verhältnis". Mit dieser Funktion kann der Anwender einen zu erzeugenden Radius der Oberkontur als x-faches des entsprechenden gegebenen Radius der Unterkontur festlegen, indem er den von ihm gewünschten Faktor x in das Eingabefeld 33 im Dialogfenster 213.2 einträgt.

Auch diese Funktion hat gegenüber den Funktionen "Standard-Konik", "Fixer Winkel" und "Linearer Winkel" eine höhere Priorität.

Eine Ikone 214.1 (6/5 aus der Ikonenleiste in Fig. 14) und ein Dialogfenster 215.2 betreffen eine Funktion "Radius-Definition löschen". Mit dieser Funktion kann der Anwender erzeugte Radius-Definitionen wieder rückgängig machen. Diese Löschung kann entweder global oder lokal erfolgen.

Eine Ikone 216.1 (6/1 aus der Ikonenleiste in Fig. 14) und ein Dialogfenster 217.2 betreffen eine Funktion "Zwischensatz".

Es kommt vor, daß über zwei Nachbarstrecken in der Unterkontur verschiedene Drahtauslenkungen definiert werden und dadurch auch zum gemeinsamen Punkt dieser beiden Strecken zwei verschiedene Drahtneigungen existieren. Somit entsteht auf der Oberkontur eine Lücke.

Das System erkennt dies und erzeugt automatisch eine Linie (Zwischensatz) in der Oberkontur, welche die Lücke schließt. Voreingestellt ist diese Verbindungslinie in der Oberkontur als eine einfache Gerade zwischen den beiden "Bruchenden".

Die Funktion "Zwischensatz" erlaubt es dem Anwender, vom System komplexere Verbindungslinien erzeugen zu lassen.

Wählt er in einem Optionsfeld 218 im Dialogfenster 217.2 einen Zwischensatz "Verlängerung" an, führt das System die beiden nochnicht-Nachbar-Elemente in der Oberkontur entsprechend ihrer jeweils vorliegenden Form solange weiter, bis sie zusammentreffen.

Wählt er im Optionsfeld 218 einen Zwischensatz "Radius", verbindet das System die beiden Bruchkanten z. B. mit einem Kreisbogen; wählt er im Optionsfeld 218 einen Zwischensatz "Splines", verbindet das System die beiden Bruchkanten z. B. mit einer Schlangenlinie, und zwar so, daß tangentiale Übergänge entstehen.

Eine weitere Gruppe von das Modul Konik 2 betreffenden Funktionen gemäß Fig. 19 beschrieben:

Eine Ikone 220.1 (7/1 aus der Ikonenleiste in Fig. 14) und ein Dialogfenster 221.2 betreffen eine Funktion "Höhenverlauf". Mit dieser Funktion kann der Anwender Höhenlinien 222 des Werkstükes darstellen lassen. Dazu muß er die von ihm gewünschte Höhe (in Richtung der Z-Achse) in das Eingabefeld 33 im Dialogfenster 221.2 eintragen. (Der Unterkonturebene ist die Höhe 0 zugeordnet.)

Eine Ikone 223.1 (8/1 aus der Ikonenleiste in Fig. 14) und ein Dialogfenster 224.2 betreffen eine Funktion "Werkstück-Höhe". Diese Funktion dient der Eingabe einer Werkstückhöhe (die Werkstückhöhe kann als Abstand zweier planparalleler Konturebenen aufgefaßt werden).

Eine Ikone 225.1 (1/4 aus der Ikonenleiste in Fig. 14) und ein Dialogfenster 226.2 betreffen eine Funktion "Drahtauslenkung". Diese Funktion dient der Anzeige der Drahtauslenkung an einem angeklickten Punkt der Unter- oder Oberkontur.

Die drei zuletzt beschriebenen Funktionen "Punktanlegen" und "Punktlöschen" werden im Modul Konik 2 über die entsprechenden Ikonen 220.1 bzw. 223.1 bzw. 225.1 und Dialogfenster 221.2 bzw. 224.2 bzw. 226.2 sowohl zum Erstellen einer Winkel-Konik 3 als auch zum Erstellen einer 3D-Konik 4 angeboten.

Beim Anwählen von 3D-Konik 4 im Modul Konik 2 erscheint in den Ikonenfeldern 12, 13 auf der rechten Seite des Bildschirms eine Ikonenleiste für 3D-Konik gemäß Fig. 20.

Im folgenden wird eine erste Gruppe von speziell die 3D-Konik im Modul Konik 2 betreffenden Funktionen gemäß Fig. 21 beschrieben:

Eine Ikone 230.1 (3/1 aus der Ikonenleiste in Fig. 20) betrifft eine Funktion "Unterkontur einlesen".

Nach Anwählen der Ikone 230.1 läßt sich über ein Dateiauswahlfenster eine erstellte Unterkontur wählen bzw. einlesen. Danach öffnet das System ein Unterfenster 231.2 des Dateiauswahlfensters.

Dieses Unterfenster 231.2 ist einer Funktion "Unterkontur plazieren" zugeordnet. Über diese Funktion wird die eingelesene Unterkontur im Graphikbereich bezüglich ihres Koordinatenursprungs zentriert. Der Anwender kann die Kontur um einen einzugebenden Winkel um den Koordinatenursprung drehen und/oder durch Anwählen einer entsprechenden Option 232 an der X-Achse spiegeln.

Eine Ikone 233.1 (3/2 aus der Ikonenleiste in Fig. 20) betrifft eine Funktion "Oberkontur einlesen".

Nach Anwählen der Ikone 233.1 läßt sich über ein Dateiauswahlfenster eine erstellte Oberkontur wählen bzw. einlesen. Danach öffnet das System ein Unterfenster 234.2 des Dateiauswahlfensters.

Dieses Unterfenster 234.2 ist einer Funktion "Oberkontur plazieren" zugeordnet. Diese Funktion wirkt analog der gerade beschriebenen Funktion "Unterkontur plazieren". Sie bietet zusätzlich noch die Möglichkeit, die Oberkontur inkremental zur Unterkontur zu verschieben.

Eine Ikone 235.1 (5/1 aus der Ikonenleiste in Fig. 20) und ein Dialogfenster 236.2 betreffen eine Funktion "Meilenstein setzen". Diese Funktion dient der Zuordnung eines Punktes der Unterkontur zu einem Punkt der Oberkontur. Die Zuordnung erfolgt durch Identifizierung eines Punktes auf der Unterkontur und eines Punktes auf der Oberkontur.

Nach jeder erfolgreichen Identifizierung wird eine jeweils entsprechende Checkbox 237 angehakt und eine entsprechende Symbolbox 238 auf "besetzt" gestellt.

Eine Ikone 239.1 (5/2 aus der Ikonenleiste in Fig.

20) und ein Dialogfenster 240.2 betreffen eine Funktion "Meilenstein löschen". Diese Funktion macht eine gegebene Punkt-zu-Punkt-Zuordnung durch Identifizierung der Zuordnung wieder rückgängig.

Im folgenden wird gemäß Fig. 22 eine weitere Gruppe von speziell die 3D-Konik im Modul Konik 2 betreffenden Funktionen beschrieben:

Eine Ikone 250.1 (6/1 aus der Ikonenleiste in Fig. 20) und ein Dialogfenster 251.2 betreffen eine Funktion "Meilensteinkette". Diese Funktion erzeugt mehrere Meilensteine, das heißt eine Kette von Punkt-zu-Punkt-Zuordnungen innerhalb eines festgelegten Konturabschnittes.

Eine Ikone 252.1 (6/2 aus der Ikonenleiste in Fig. 20) und ein Dialogfenster 253.2 betreffen eine Funktion "Punktzuordnung". Diese Funktion ordnet allen konturdefinierenden Punkten auf der Unter- bzw. Oberkontur, die noch keinen "Partner" auf der jeweils anderen Kontur haben, einen solchen zu.

Dies wird durch lineare Aufteilung der Kontur zwischen den vorhandenen Meilensteinpunkten bewerkstelligt, und es werden alle sogenannten "Drahtlinien" des Werkstücks gezeichnet.

Nach Wechsel in das Programm-Modul Arbeitsplan 5 und der Auswahl einer gegebenen Konik aus der entsprechenden Datei erscheint auf dem Bildschirm ein Grundfenster 10 für Arbeitsplan 5.

Im Graphikbereich dieses Grundfensters 10 ist die gewählte Konik (Ober- und Unterkontur) mit allen Punkt-zu-Punkt-Zuordnungen (Drahtlinien) von Ober- zu Unterkontur (und umgekehrt) dargestellt.

In den Ikonenfeldern 12, 13 auf der rechten Bildschirmseite erscheint eine Ikonenleiste für Arbeitsplan 5 gemäß Fig. 23.

Im folgenden wird gemäß Fig. 24 eine erste Gruppe von speziell das Modul Arbeitsplan 5 betreffenden Funktionen bzw. Dialogfenstern näher beschrieben.

Eine Ikone 260.1 (3/1 aus der Ikonenleiste in Fig. 23) und ein Dialogfenster 261.2 betreffen eine Funktion "Technologie". Mit dieser Funktion kann der Anwender die Anzahl der gewünschten Schnitte und die betreffenden Offset-Werte bestimmen und entscheiden, ob diese Eingaben für das gesamte Werkstück oder nur einen Teil davon gelten soll.

In letzterem Fall erfolgt die Definition des Teils durch Identifizierung des oder der betreffenden Elemente(s) auf der Ober- oder der Unterkontur.

Eine Ikone 262.1 (3/3 aus der Ikonenleiste in Fig. 23) und ein Dialogfenster 263.2 betreffen eine Funktion "Zusatz-Offset". Mit dieser Funktion läßt sich ein Zusatz-Flächenoffset im Sinne eines positiven bzw. negativen Abmasses für eine besondere Nachbearbeitung für die gesamte Werkstückoberfläche oder einen Teil davon bestimmen.

In letzterem Fall erfolgt die Definition des Teils durch Identifizierung des oder der betreffenden Elemente(s) auf der Ober- oder der Unterkontur.

Eine Ikone 264.1 (3/4 aus der Ikonenleiste in Fig. 23) und ein Dialogfenster 265.2 betreffen eine Funktion "STOP". Mit dieser Funktion kann der Anwender STOP-Punkte auf der Kontur setzen, indem er die betreffenden Punkte identifiziert und bezüglich des Hauptschnittes und der Nummer des Nachschnittes definiert.

An einem STOP hält die Maschine an und fährt mit der Bearbeitung erst nach Freigabe durch den Operator fort. (Mit STOPS kann die Anzahl der Teilprogramme im ISO-Code gering gehalten werden.) STOP-Punkte werden als Sterne auf Unter- und Oberkontur dargestellt.

Eine Ikone 266.1 (3/5 aus der Ikonenleiste in Fig. 23) und ein Dialogfenster 267.2 betreffen eine Funktion "STOP löschen". Mit dieser Funktion lassen sich STOPS durch einfaches Anklicken wieder löschen.

Im folgenden wird gemäß Fig. 25 eine weitere Gruppe von das Modul Arbeitsplan 5 betreffende Funktionen bzw. Dialogfenstern näher beschrieben.

Eine Ikone 270.1 (4/1 aus der Ikonenleiste in Fig. 23) und ein Dialogfenster 271.2 betreffen eine Funktion "Startloch". Mit dieser Funktion wird Lage und Durchmesser des Startloches definiert. Das System verhindert dabei insofern Fehleingaben, als es prüft, ob der eingegebene Punkt einem zu schneidenden Stempel außerhalb, bzw. bei einer zu schneidenden Matrize innerhalb der Kontur liegt.

Die Lage des Startloches kann entweder durch Identifizierung oder durch die Eingabe inkrementaler bzw. absoluter Koordinaten bestimmt werden. Für letztere Vorgehensweise öffnet das System ein Unterfenster 272.2 "Startloch incr." bzw. ein Unterfenster 273.2 "Startloch abs.".

Eine Ikone 274.1 (4/2 aus der Ikonenleiste in Fig. 23) und ein Dialogfenster 275.2 betreffen eine Funktion "Anfahrweg". Sie ist erst dann anwählbar, wenn ein Startloch definiert ist.

Über diese Funktion generiert das System den Anfahrweg Startloch/Werkstück nach vom Anwender verlangten Kriterien (gradlinig, tangential, im Radius, im oder gegen den Uhrzeigersinn usw.)

Im folgenden wird gemäß Fig. 26 eine weitere Gruppe von das Modul Arbeitsplan 5 betreffenden Funktionen bzw. Dialogfenstern näher beschrieben.

Eine Ikone 280.1 (4/3 aus der Ikonenleiste in Fig. 23) und ein Dialogfenster 281.2 betreffen eine Funktion "Wendepunkt". Mit dieser Funktion werden "Umkehrpunkte" absolut oder inkremental definiert. Das System öffnet dazu jeweils ein betreffendes Unterfenster "Wendepunkt abs" bzw. "Wendepunkt incr".

Eine Ikone 282.1 (4/4 aus der Ikonenleiste in Fig. 23) und ein Dialogfenster 283.2 betreffen eine Funktion "Abfahrweg". Diese Funktion und ihr Dialogfenster 283.2 läßt sich im wesentlichen als "umgekehrte" Funktion "Anfahrweg" mit dem Dialogfenster 275.2 beschreiben.

Eine Ikone 284.1 (5/4 aus der Ikonenleiste in Fig. 23) und ein Dialogfenster 285.2 betreffen eine Funktion "Umfahrungspunkt". Diese Funktion generiert einen "Umleitung" bei der Anfahrt über einen vom Anwender bestimmten Punkt.

Eine Ikone 286.1 (5/5 aus der Ikonenleiste in Fig. 23) und ein Dialogfenster 287.2 betreffen eine Funktion "Umfahrungspunkt löschen". Ein gegebener Umfahrungspunkt im Anfahrtweg wird über diese Funktion durch Anklicken (Identifizierung) wieder gelöscht.

Im folgenden wird gemäß Fig. 27 eine weitere Gruppe von das Modul Arbeitsplan 5 betreffenden Funktionen bzw. Dialogfenstern näher beschrieben.

Eine Ikone 300.1 (6/1 aus der Ikonenleiste in Fig. 23) und ein Dialogfenster 301.2 betreffen eine Funktion "Radien innen". Diese Funktion ermöglicht es dem Anwender, Innenecken der Kontur auszurunden; der Benutzer verzichtet dabei sozusagen auf optimale Eckenschärfe zugunsten leichterer Herstellbarkeit. (Dazu sei angemerkt, daß bei der Drahterosion Innen-"Ecken" immer einen von Drahtdurchmesser und Arbeitsspalt abhängigen Radius aufweisen.)

Eine Ikone 302.1 (6/2 aus der Ikonenleiste in Fig. 23) und ein Dialogfenster 303.2 betreffen eine Funktion "Radien außen". Diese Funktion ermöglicht es dem Anwender, Außenecken der Kontur abzurunden.

Eine Ikone 304.1 (7/1 aus der Ikonenleiste in Fig. 23) und ein Dialogfenster 305.2 betreffen eine Funktion "Schnittverfahren Innenecken". Diese Funktion wird vom System automatisch abgerufen, um Hinterschnitte zu vermeiden.

Eine Ikone 306.1 (7/2 aus der Ikonenleiste in Fig. 23) betrifft eine Funktion "Kreisverfahren Innenecken". Mit dieser Funktion können Eckenradien dem jeweiligen Schnitt (Haupt- bzw. Nachschnitt) angepasst werden.

Eine Ikone 307.1 (7/3 aus der Ikonenleiste in Fig. 23) und ein Dialogfenster 308.2 betreffen eine Funktion "Freischneiden Innenecken".

Im folgenden wird gemäß Fig. 28 eine weitere Gruppe von das Modul Arbeitsplan 5 betreffenden Funktionen bzw. Dialogfenstern näher beschrieben.

Eine Ikone 320.1 (8/1 aus der Ikonenleiste in Fig. 23) und ein Dialogfenster 321.2 betreffen eine Funktion "Zirkularer Zwischensatz Außenecken". Wenn nicht anders definiert, ruft das System diese Funktion automatisch auf; "Zirkularer Zwischensatz Außenecken" ist voreingestellt (default).

Eine Ikone 322.1 (8/1 aus der Ikonenleiste in Fig. 23) und ein Dialogfenster 323.2 betreffen eine Funktion "Schleife Außenecken". Nach Aufruf dieser Funktion und gegebenenfalls der Identifizierung eines Eckpunktes der Ober- bzw. Unterkontur generiert das System (eine) Eckenschleife in der vom Draht zu fahrenden Bahn.

Eine Ikone 324.1 (9/1 aus der Ikonenleiste in Fig. 23) und ein Dialogfenster 325.2 betreffen eine Funktion "Vollabtrag". Sie dient dazu, nach vorbestimmter Spurbreite, vorbestimmtem Abstand der Einzelschnittbahnen (Inkrement) und vorbestimmter Zugabe einen Vollabtrag durch Identifizierung eines Elementes der Oberbzw. Unterkontur und gegebenenfalls einer oder mehrerer Hilfskonturen zu definieren.

Eine Ikone 326.1 (9/2 aus der Ikonenleiste in Fig. 23) und ein Dialogfenster 327.2 betreffen eine Funktion "Teil-Vollabtrag". Sie dient dazu, eine zwischen zwei Punkten der Ober- bzw. Unterkontur geplante "Einkerbung" im Werkstück durch Vollabtrag ausführen zu lassen.

Im folgenden wird gemäß Fig. 29 weitere das Modul Arbeitsplan 5 betreffende Funktionen näher beschrieben.

Eine Ikone 340.1 (11/1 aus der Ikonenleiste in Fig. 23) und ein Dialogfenster 341.2 betreffen eine Funktion "Simulation". Mit dieser Funktion wird eine exakte zeichnerische Darstellung aller im Arbeitsplan definierten Strategien und Technologien ausgelöst, um deren Auswirkungen zu prüfen.

Das System zeichnet dabei die programmierte Ober- und Unterkontur, die Innen- und Außenradien, das Startloch und An- und Abfahrtswege mit eventuell vorhandenen Umfahrungspunkten.

Des weiteren berechnet und zeichnet das System die (vom Draht tatsächlich gefahrenen Offset-) Bahnen unter Berücksichtigung der gewählten Eckenstrategie (Schleife, Freischneiden, Kreisverfahren usw.). Dies geschieht nacheinander für den (vollständigen) Hauptschnitt und die Folge der einzelnen Nachschnitte, wobei die Darstellungen der jeweiligen Folgeschnitte den bereits vorhandenen Zeichnungen maßstabsgetreu und farblich unterscheidbar hinzugefügt werden.

Mit der Funktion "Zoomen" können die einzelnen Offsetbahnen gut sichtbar gemacht werden.

Eine Ikone 342.1 (11/2 aus der Ikonenleiste in Fig. 23) betrifft die Funktion "Trennbarkeit". Dabei prüft das System, ob sich die beiden beim Schnitt entstandenen Teile trennen lassen, d. h. ob der "Kern von der Schale" zu lösen ist, und generiert gegebenenfalls Lösungsstrategien (z. B. Vollabtrag oder Brückenschnitt).

Nach Wechsel in das Programm-Modul Job und erfolgter Dateiauswahl erscheint in den beiden Ikonenfeldern 12, 13 auf der rechten Bildschirmseite eine Ikonenleiste für Job gemäß Fig. 30.

Im folgenden wird gemäß Fig. 31 eine erste Gruppe von das Modul Job 6 betreffenden Funktionen näher beschrieben.

Eine Ikone 350.1 (1/4 aus der Ikonenleiste in Fig. 30) betrifft eine Funktion "Switch". Mit dieser Funktion kann der Anwender eine Sequenzleiste links neben der Graphik anzeigen lassen.

Eine Ikone 351.1 (2/3 aus der Ikonenleiste in Fig. 30) betrifft eine Funktion "SWAP". Mit dieser Funktion kann der Anwender im Graphikbereich zwischen der Darstellung des Graphikbildes und einer Darstellung eines Verkettungsplanes wechseln.

Eine Ikone 352.1 (3/1 aus der Ikonenleiste in Fig. 30) und ein Dialogfenster 353.2 betreffen eine Funktion "Arbeitsgrenzen". Sie dient dem Einzeichnen von Grenzen für die Arbeitsfreiheit (Verfahrwege, Auflagefläche und maximale Werkstückabmessung).

Im folgenden wird gemäß Fig. 32 eine weitere Gruppe von das Modul Job 6 betreffenden Funktionen bzw. Dialogfenstern näher beschrieben.

Eine Ikone 360.1 (4/1 aus der Ikonenleiste in Fig. 30) und ein Dialogfenster 361.2 betreffen eine Funktion "Rechteck-Rohling". Sie dient der Eingabe von Länge, Breite und Höhe eines verwendeten rechteckigen Rohlings.

Nach Eingabe dieser Maße öffnet das System automatisch ein Unterfenster 362.2, das der Funktion "Plazierungsart" (absolut oder inkremental, Identifizierung des Referenzpunktes, Ebenenwahl) zugeordnet ist.

Hat der Anwender alle diesbezüglichen Entscheidungen getroffen, öffnet das System automatisch eines von zwei weiteren Unterfenstern "Rohling plazieren", wobei das eine Unterfenster 363.2 die Plazierungsart "absolut", das andere Unterfenster 364.2 die alternative Plazierungsart "inkremental" betrifft.

Nach Eintrag der gewünschten Koordinaten und Drehwinkel ist der Rechteckrohling (graphisch) plaziert.

Im folgenden wird gemäß Fig. 33 eine weitere Gruppe von das Modul Job 6 betreffenden Funktionen bzw. Dialogfenstern näher beschrieben.

Eine Ikone 380.1 (4/2 aus der Ikonenleiste in Fig. 30) betrifft eine Funktion "Rund-Rohling", eine Ikone 381.1 (4/3 aus der Ikonenleiste in Fig. 30) eine Funktion "Sonder-Rohling". Diese beiden Funktionen entsprechen in Wirkungsweise Aufrufmodus von Unterfenstern im wesentlichen der zuvor beschriebenen Funktion "Rechteck-Rohling"; für die Funktion "Sonder-Rohling" ist allerdings eine den Sonder-Rohling (Halbfabrikat) definierende Geometriedatei vorausgesetzt.

Eine Ikone 382.1 (4/4 aus der Ikonenleiste in Fig. 30) und ein Dialogfenster 383.2 betreffen eine Funktion "Rohling löschen".

Eine Ikone 384.1 (5/1 aus der Ikonenleiste in Fig. 30) betrifft eine Funktion "Arbeitsplan". Mit dieser Funktion kann über verschiedene Unterfenster ein Arbeitsplan plaziert (und dabei verschoben, gedreht, gewendet oder gespiegelt) werden.

Eine Ikone 385.1 (5/3 aus der Ikonenleiste in Fig. 30) betrifft eine Funktion "SUBJOB". Mit dieser Funktion kann über verschiedene Unterfenster ein Job (d. h. eine gegebene Arbeitsplan-Verkettung) analog der Funktion "Arbeitsplan" plaziert werden.

Eine Ikone 386.1 (5/2 aus der Ikonenleiste in Fig. 30) und ein Dialogfenster 387.2 betrifft eine Funktion "Arbeitsplan oder SUBJOB löschen".

Eine Ikone 388.1 (6/1 aus der Ikonenleiste in Fig. 30) betrifft eine Funktion "Umfahrungspunkt". Mit dieser Funktion kann über verschiedene Unterfenster ein Umfahrungspunkt plaziert werden.

Eine Ikone 389.1 (6/2 aus der Ikonenleiste in Fig. 30) betrifft eine Funktion "Umfahrungspunkt löschen".

Eine Ikone 390.1 (7/1 aus der Ikonenleiste in Fig. 30) und ein Dialogfenster 391.2 betrifft eine Funktion "Loop 2-Dimensional". Mit dieser Funktion kann ein Arbeitsplan oder ein Job virtuell in zweidimensionalem Raster mehrfachkopiert werden.

Im folgenden wird gemäß Fig. 34 eine weitere Gruppe von das Modul Job 6 betreffenden Funktionen bzw. Dialogfenstern näher beschrieben.

Eine Ikone 410.1 (7/2 aus der Ikonenleiste in Fig. 30) und ein Dialogfenster 411.2 betrifft eine Funktion "Loop 1-Dimensional". Mit dieser Funktion kann ein Arbeitsplan oder ein Job virtuell in eindimensionalem Raster mehrfachkopiert werden.

Eine Ikone 412.1 (7/3 aus der Ikonenleiste in Fig. 30) und ein Dialogfenster 413.2 betrifft eine Funktion "Loop im Kreis". Mit dieser Funktion kann ein Arbeitsplan oder ein Job virtuell planetär mehrfachkopiert werden. Der Job bzw. Arbeitsplan kann dabei rotieren oder pararellgerichtet bleiben.

Eine Ikone 414.1 (8/1 aus der Ikonenleiste in Fig. 30) betrifft eine Funktion "Manuelle Verkettung". Mit ihr lassen sich Arbeitspläne manuell verketten.

## Patentansprüche

1. Vorrichtung mit einem ein Grundfenster (10) aufweisenden Bildschirm für die Überwachung und Planung von Funktionen einer Funkenerosionsmaschine zur Bearbeitung eines Werkstückes und mit einem Bildschirm-Dialogfenster (**.2) mit einem ersten Fensterabschnitt (33) zur wertemäßigen Eingabe einer Funktionseinstellung und einem zweiten Fensterabschnitt (34) zum gleichzeitigen grafischen Darstellen der Funktion, wobei Konstruktionssymbole oder -bezeichnungen aus den beiden Fensterabschnitten (33, 34) derart verbunden sind, daß automatisch nur die Auswahl durchführbarer Funktionen der Funkenerosionsmaschine freigebbar und anzeigbar ist.

2. Vorrichtung nach Anspruch 1, gekennzeichnet durch Einrichtungen zur Übertragung der gewählten und gegebenenfalls wertemäßig eingestellten Funktion auf das Grundfenster (10).

3. Vorrichtung nach Anspruch 1 oder 2, dadurch gekennzeichnet, daß einem Bildschirmfenster (12; 13) wenigstens eine, vorzugsweise mit Erkennungssymbolen versehene Aktiviereinrichtung zur Auswahl wenigstens einer dargestellten Funktion zugeordnet ist.

4. Vorrichtung nach Anspruch 3, dadurch gekennzeichnet, daß die Aktiviereinrichtung eine Ikone (**. 1), vorzugsweise ein Ikonenmenü (12, 13) aufweist.

5. Vorrichtung nach wenigstens einem der Ansprüche 1 bis 4, gekennzeichnet durch eine Auslegung, derart, daß bei wenigstens zwei Bildschirmfenstern 11; 12; 13; **.2) wenigstens ein Bildschirmfenster (12; 13) gruppierte, aufgrund des Arbeits- bzw. Planungsablaufes betrieblich zusammengehörige Funktionen aufweist.

6. Vorrichtung nach Anspruch 5 mit wenigstens zwei Bildschirmfenstern, dadurch gekennzeichnet, daß jedem Bildschirmfenster (11; 12; 13; **2) wenigstens eine Aktiviereinrichtung zugeordnet ist, vorzugsweise mit zumindest teilweise gleichen Erkennungssymbolen bzw. Einzelikonen.

7. Vorrichtung nach wenigstens einem der Ansprüche 3 bis 6, dadurch gekennzeichnet, daß die Aktiviereinrichtung Mittel, insbesondere helligkeitsmäßig bzw. farblich abgesetzte Abschnitte zur wahrnehmbaren Unterscheidung zwischen durchführbaren und undurchführbaren Funktionen aufweist.

8. Vorrichtung nach einem der Ansprüche 1-7, dadurch gekennzeichnet, daß ein Identifikationsabschnitt (32) eine - etwa mit einem Begriff oder einem Symbol versehene-Anzeigevorrichtung aufweist, welche die jeweils ausgewählte Funktion identifiziert.

9. Vorrichtung nach einem der Ansprüche 1-8, dadurch gekennzeichnet, daß der erste Fensterabschnitt (33) eine Anzeige aufweist, welche die wertemäßig einstellbaren Größen der ausgewählten Funktion wiedergibt.

10. Vorrichtung nach Anspruch 9, dadurch gekennzeichnet, daß die Anzeige mehrere voneinander verschiedene, sich gegenseitig ausschließende Werte/Wertegruppen wiedergibt, die eingegeben jeweils die gleiche Änderung einer spezifisch gewünschten Funktion erzielen.

11. Vorrichtung nach Anspruch 10, gekennzeichnet durch Mittel, welche die gleichzeitige oder sequentielle Eingabe sich gegenseitig ausschließender Werte/Wertegruppen verhindern.

12. Vorrichtung nach einem der Ansprüche 1-11, gekennzeichnet durch eine Einrichtung im ersten Fensterabschnitt (33) zur Kenntlichmachung, welche(r) Wert/Wertegruppe gerade eingestellt ist und/oder eine weitere Einrichtung zur Auswahl der einzustellenden Werte/Wertegruppen.

13. Vorrichtung nach Anspruch 12, dadurch gekennzeichnet, daß die Einrichtung im ersten Fensterabschnitt für die Kenntlichmachung des/der Wertes/ Wertegruppe entsprechend der jeweiligen Einstellung beleuchtete Anzeigenfelder mit Symbolen oder Bezeichnungen zur Wiedergabe der einzustellenden Größen der Funktion, insbesondere helligkeitsmäßig bzw. farblich abgesetzte Abschnitte sind.

14. Vorrichtung nach wenigstens einem der Ansprüche 1 bis 13, dadurch gekennzeichnet, daß der zweite Fensterabschnitt (34) gleichbleibende Figuren zur Wiedergabe der jeweils einzustellenden Funktion und Symbole oder Bezeichnungen zur Wiedergabe der einzustellenden Größen dieser Funktion aufweist.

15. Vorrichtung nach wenigstens einem der Ansprüche 1 bis 13, dadurch gekennzeichnet, daß der zweite Fensterabschnitt (34) in Abhängigkeit von den eingestellten Werten veränderte Figuren zur Darstellung der Einstellung bzw. Änderung der Werte einer Funktion, aufweist.

16. Vorrichtung nach den Ansprüchen 14 bis 15, gekennzeichnet durch gleiche Symbole oder Bezeichnungen, im ersten Fenster- (33) und im zweiten Fensterabschnitt (34).

17. Vorrichtung nach Anspruch 16, dadurch gekennzeichnet, daß die Symbole oder Bezeichnungen im zweiten Fensterabschnitt (34) mit Anzeigefeldern im ersten Fensterabschnitt (33) derart verbunden sind, daß die Einstellung bestimmter Werte/einer bestimmten Wertegruppe gleichzeitg im zweiten Fensterabschnitt (34) und im ersten Fensterabschnitt (33) wahrnehmbar ist.

18. Vorrichtung nach wenigstens einem der Ansprüche 1 bis 17, dadurch gekennzeichnet, daß das Bildschirmfenster (**.2) wenigstens zwei Organe zum Abbrechen (38) des Einstellvorganges der Funktion und zum Übertragen (40) der Funktion auf das Grundfenster (10) aufweist.

19. Vorrichtung nach Anspruch 18, dadurch gekennzeichnet, daß das Bildschirmfenster ein weiteres Organ zum Unterbrechen (37) des Einstellvorganges der Funktion und eine Speichereinheit zum Speichern der bis zur Unterbrechung eingegebenen Werte, aufweist.

20. Vorrichtung nach einem der Ansprüche 18 oder 19, gekennzeichnet durch ein anderes Organ (39) zur Anforderung von Konstruktionsalternativen.

21. Vorrichtung nach einem der Ansprüche 12-20, gekennzeichnet durch Mittel zum Aufrufen der gespeicherten, eingestellten Werte.

22. Vorrichtung nach wenigstens einem der Ansprüche 1 bis 21, gekennzeichnet durch einen Interpreter, der für jedes Bildschirmfenster verwendbar ist.

**Claims**

1. Device with a screen showing a main window (10) for the monitoring and planning of the functions of a spark-erosion machine for the machining of a workpiece and with a screen dialogue window (**. 2), with the first window section (33) for entering the values of a function setting and a second window section (34) for simultaneously displaying the function graphically, whereby construction symbols or terms in the two window sections (33, 34) are connected in such a way that automatically only the selection of functions of the spark-erosion machine which can be carried out can be released and shown.

2. Device according to claim 1, characterised by facilities for the transmission of the selected functions and, if necessary, the set values of a function to the main window (10).

3. Device according to claim 1 or 2, characterised in that least one activating facility, preferably provided with identification symbols, for selecting at least one of the shown functions, is allotted to a screen window (12, 13).

4. Device according to claim 3, characterised in that the activating facility has an icon (**.1), preferably an icon menu (12, 13).

5. Device according to at least one of claims 1 to 4, characterised by a design which is such that with at least two screen windows (11, 12, 13, **.2) at least one screen window (12, 13) shows functions grouped by working or planning procedures which belong operationally together.

6. Device according to claim 5 with at least two screen windows, characterised in that at least one activating facility is allotted to each screen window (11, 12, 13, **.2), preferably with at least partly the same identification symbols or individual icons.

7. Device according to at least one of claims 3 to 6, characterised in that the activating facility has means, in particular sections separated by different brightness or colour, so that functions which can be carried out and functions which can not be carried out can be clearly distinguished.

8. Device according to one of claims 1 to 7, characterised in that an identification section (32) has a display with, say, a designation or a symbol which identifies each selected function.

9. Device according to one of claims 1 to 8, characterised in that the first window section (33) has a display showing the adjustable values of the selected function.

10. Device according to claim 9, characterised in that the display shows several separate mutually exclusive values/value groups which, when input, achieve the same alteration of a specifically desired function.

11. Device according to claim 10, characterised by means which prevent the simultaneous or sequential input of mutually exclusive values/value groups.

12. Device according to one of claims 1 to 11, characterised by a facility in the first window section (33) for marking which value/values group has just been set and/or another facility for selecting the value/values groups to be set.

13. Device according to claim 12, characterised in that the facility in the first window section, the one for marking the value/values group according to each setting, has illuminated display areas with symbols or terms for the reproduction of the values of the function to be set, in particular sections distinguishable by brightness or colour.

14. Device according to at least one of claims 1 to 13, characterised in that the second window section (34) shows unvarying figures representing each function to be set and symbols or terms for showing the values of this function to be set.

15. Device according to at least one of claims 1 to 13, characterised in that the second window section (34) shows figures changed as a function of the set values for representing the setting or alteration of the values of a function.

16. Device according to claims 14 to 15, characterised by the same symbols or terms in the first window section (33) and the second window section (34).

17. Device according to claim 16, characterised in that the symbols or terms in the second window section (34) are connected to the display areas in the first window section (33) in such a way that the setting of certain values/ of a certain value group can be seen simultaneously in the second window section (34) and the first window section (33).

18. Device according to at least one of claims 1 to 17, characterised in that the screen window (**.2) has at least two operational parts for cancelling (38) the setting procedure of the function and transferring (40) the function to the main window (10).

19. Device according to claim 18, characterised in that the screen window has a further operational part for interrupting (37) the setting procedure of the function and a storage unit for storing the values put in up to the point of interruption.

**20.** Device according to one of claims 18 or 19, characterised by another operational part (39) for requesting construction alternatives.

**21.** Device according to one of claims 12 to 20, characterised by means for calling up the stored, set values.

**22.** Device according to at least one of claims 1 to 21, characterised by an interpreter to be used for each screen window.

**Revendications**

**1.** Dispositif comportant un écran possédant une fenêtre de base (10), pour le contrôle et la planification de fonctions d'une machine d'étincelage pour le traitement d'une pièce à traiter et comportant une fenêtre (**.2) de dialogue avec l'écran comportant une première section de fenêtre (33) permettant l'entrée d'une valeur chiffrée d'un réglage de fonction et une seconde section de fenêtre (34) pour la représentation graphique simultanée de la fonction, des symboles ou désignations de construction provenant des deux sections (33,34) de la fenêtre étant réunis de telle sorte que, de façon automatique, seule la sélection de fonctions pouvant être exécutées par la machine d'étincelage peut être libérée et affichée.

**2.** Dispositif selon la revendication 1, caractérisé par des dispositifs pour la transmission de la fonction sélectionnée et éventuellement réglée au moyen d'une valeur chiffrée, à la fenêtre de base (10).

**3.** Dispositif selon la revendication 1 ou 2, caractérisé en ce qu'à une fenêtre (12;13) de l'écran est associé au moins un dispositif d'activation, pourvu de préférence de symboles d'identification et servant à sélectionner au moins une fonction représentée.

**4.** Dispositif selon la revendication 3, caractérisé en ce que le dispositif d'activation possède une icône (**.1), de préférence un menu d'icônes (12,13).

**5.** Dispositif selon au moins l'une des revendications 1 à 4, caractérisé par un agencement tel que, dans le cas d'au moins deux fenêtres (11;12;13;**.2) de l'écran, au moins une fenêtre (12;13) de l'écran comporte des fonctions groupées, qui sont associées en fonctionnement sur la base du déroulement du travail ou de la planification.

**6.** Dispositif selon la revendication 5, comportant au moins deux fenêtres d'écran, caractérisé en ce qu'à chaque fenêtre (11;12;13;**.2) de l'écran est associé au moins un dispositif d'activation, de préférence des symboles d'identification ou des icônes individuelles, au moins partiellement identiques.

**7.** Dispositif selon au moins l'une des revendications 3 à 6, caractérisé en ce que le dispositif d'activation comporte des moyens, notamment des sections étagées du point de vue luminosité ou couleur, pour établir, d'une manière décelable, une distinction entre des fonctions pouvant être exécutées et des fonctions ne pouvant pas être exécutées.

**8.** Dispositif selon l'une des revendications 1-7, caractérisé en ce qu'une section d'identification (32) possède un dispositif d'affichage - éventuellement équipé d'un concept ou d'un symbole et qui identifie la fonction respectivement sélectionnée.

**9.** Dispositif selon l'une des revendications 1-8, caractérisé en ce que la première section (33) de la fenêtre possède un affichage, qui reproduit les grandeurs, réglables au moyen d'une valeur chiffrée, de la fonction sélectionnée.

**10.** Dispositif selon la revendication 9, caractérisé en ce que le dispositif d'affichage reproduit plusieurs valeurs/groupes de valeurs, qui diffèrent entre eux et s'excluent mutuellement et qui, une fois introduits, produisent respectivement la même variation d'une fonction désirée de façon spécifique.

**11.** Dispositif selon la revendication 10, caractérisé par des moyens qui empêchent l'introduction simultanée ou séquentielle de valeurs/groupes de valeurs qui s'excluent réciproquement.

**12.** Dispositif selon l'une des revendications 1-11, caractérisé par un dispositif situé dans la première section de fenêtre (33) pour identifier quelle valeur/quel groupe de valeurs est précisément réglé, et/ou par un autre dispositif pour sélectionner les valeurs/groupes de valeurs à régler.

**13.** Dispositif selon la revendication 12, caractérisé en ce que le dispositif situé dans la première section de fenêtre et servant à indiquer la valeur/le groupe de valeurs en fonction du réglage respectif, sont des zones d'affichage éclairées pourvues de symboles ou de désignations pour la reproduction des grandeurs réglées de la fonction, notamment des sections étagées du point de vue luminosité ou couleur.

**14.** Dispositif selon au moins l'une des revendications 1 à 13, caractérisé en ce que la seconde section de fenêtre (34) comporte des figures permanentes pour la reproduction de la fonction devant être respectivement réglée, et des symboles ou des désignations pour la reproduction des grandeurs à régler de cette fonction.

**15.** Dispositif selon au moins l'une des revendications 1 à 13, caractérisé en ce que la seconde section de fenêtre (34) possède, en fonction des valeurs réglées, des figures modifiées pour la représentation du réglage ou de la variation des valeurs d'une fonction.

**16.** Dispositif selon les revendications 14 à 15, caractérisé par des symboles identiques ou des désignations identiques dans la première section (33) et dans la seconde section (34) de la fenêtre.

**17.** Dispositif selon la revendication 16, caractérisé en ce que les symboles ou les désignations dans la seconde section (34) de la fenêtre sont réunis à des zones d'affichage situées dans la première section (33) de la fenêtre de telle sorte que le réglage de valeurs déterminées/d'un groupe déterminé de valeurs peut être détecté simultanément dans la seconde section (34) de la fenêtre et dans la première section (33) de la fenêtre.

**18.** Dispositif selon au moins l'une des revendications 1 à 17, caractérisé en ce que la fenêtre (**.2) de l'écran possède au moins deux organes servant à interrompre (38) le processus de réglage de la fonction et à transmettre (40) la fonction à la fenêtre de base (10).

**19.** Dispositif selon la revendication 18, caractérisé en ce que la fenêtre de l'écran comporte un autre organe servant à interrompre (37) le processus de réglage de la fonction et une unité de mémoire servant à mémoriser les valeurs introduites jusqu'à l'interruption.

**20.** Dispositif selon l'une des revendications 18 ou 19, caractérisé par un autre organe (39) servant à demander des variantes de construction.

**21.** Dispositif selon l'une des revendications 12-20, caractérisé par des moyens pour appeler les valeurs réglées mémorisées.

**22.** Dispositif selon au moins l'une des revendications 1 à 21, caractérisé par un programme d'interprétation, qui peut être utilisé pour chaque fenêtre de l'écran.

FIG. 1

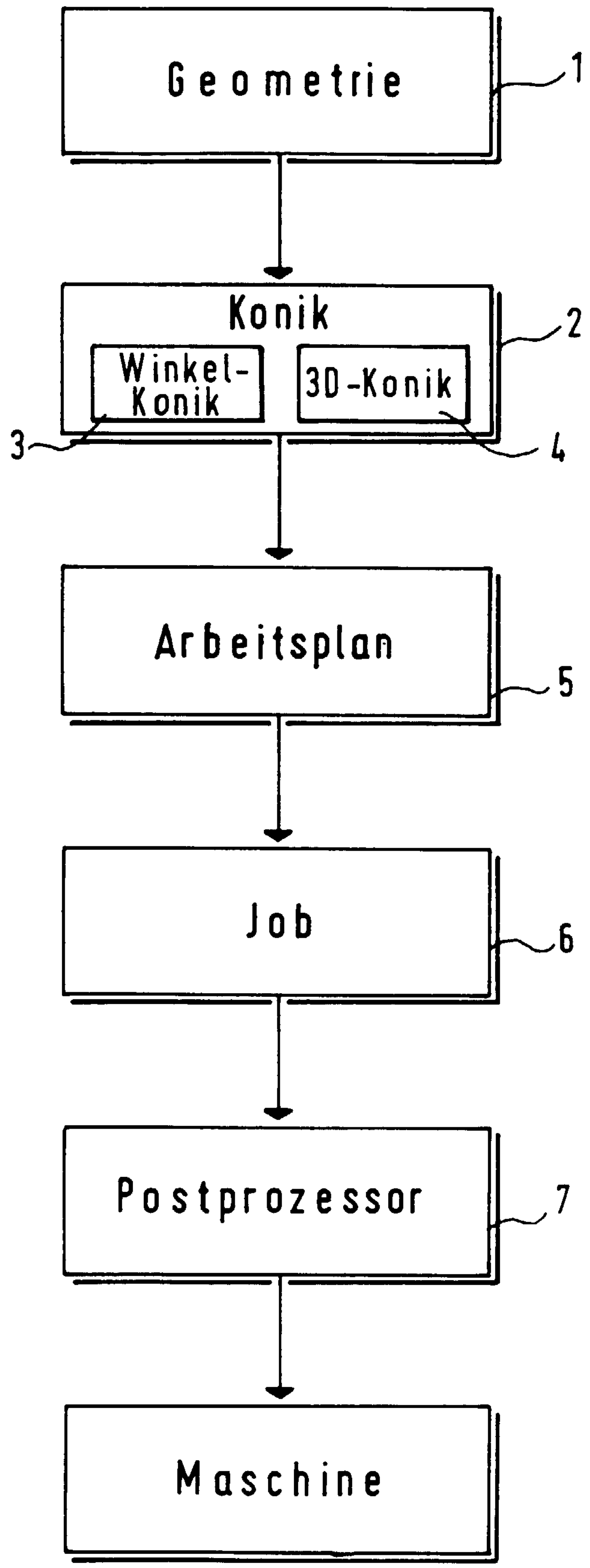
Geometrie
1
Konik
2
Winkel-Konik
3D-Konik
3
4
Arbeitsplan
5
Job
6
Postprozessor
7
Maschine

FIG. 2

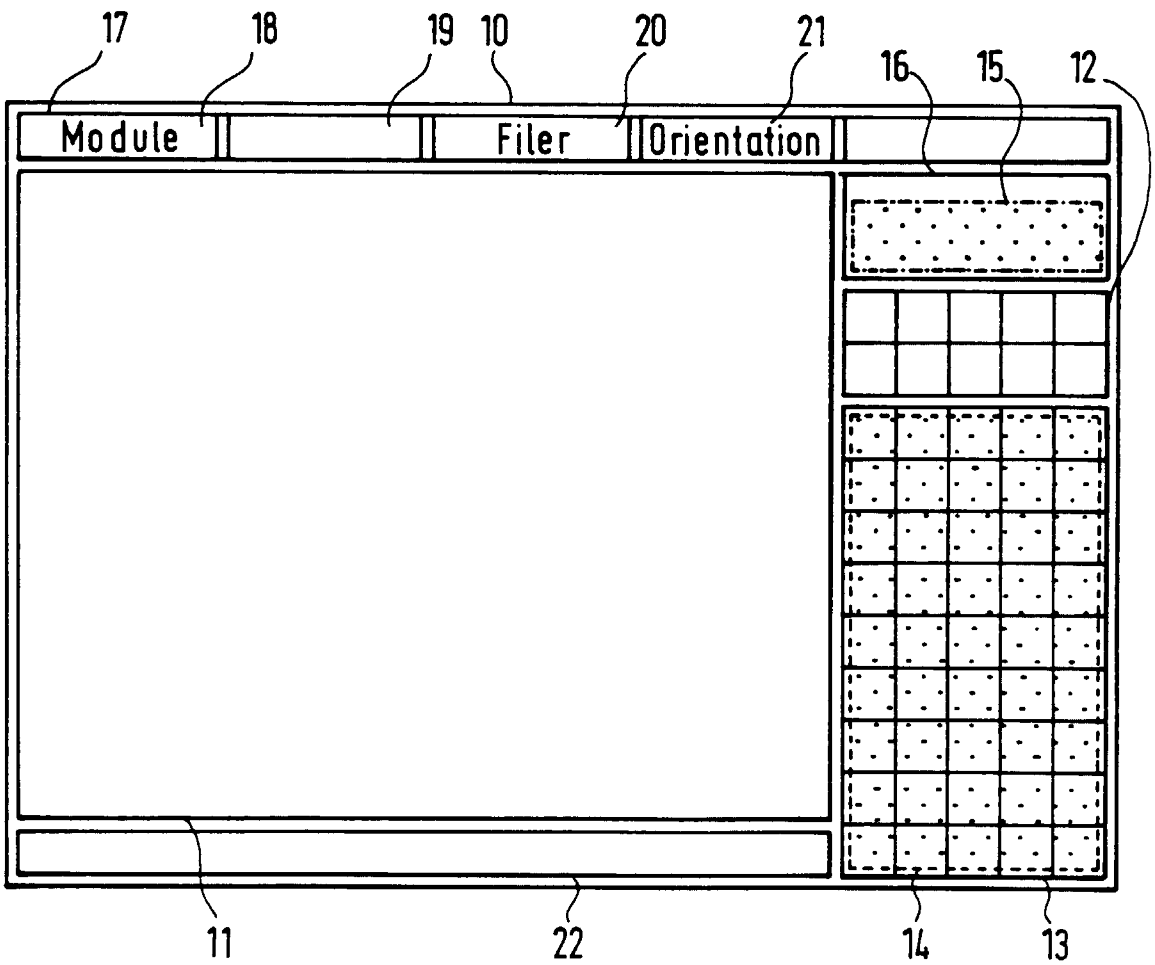

FIG. 3

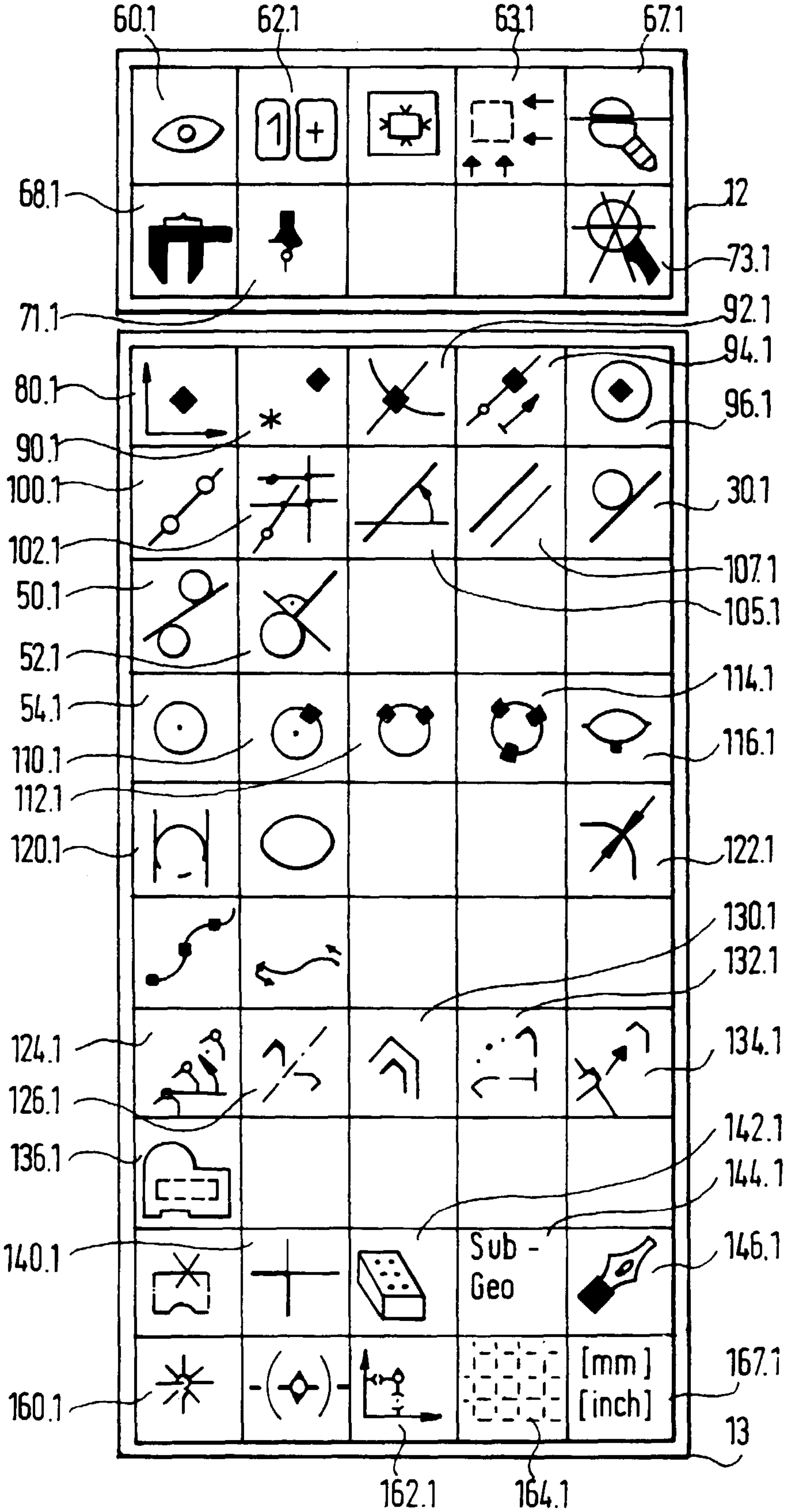
60.1
62.1
63.1
67.1
68.1
12
73.1
71.1
92.1
94.1
80.1
96.1
90.1
100.1
30.1
102.1
107.1
50.1
105.1
52.1
114.1
54.1
110.1
116.1
112.1
120.1
122.1
130.1
132.1
124.1
134.1
126.1
142.1
136.1
144.1
140.1
Sub -
Geo
146.1
[mm]
[inch]
167.1
160.1
13
162.1
164.1

FIG. 4

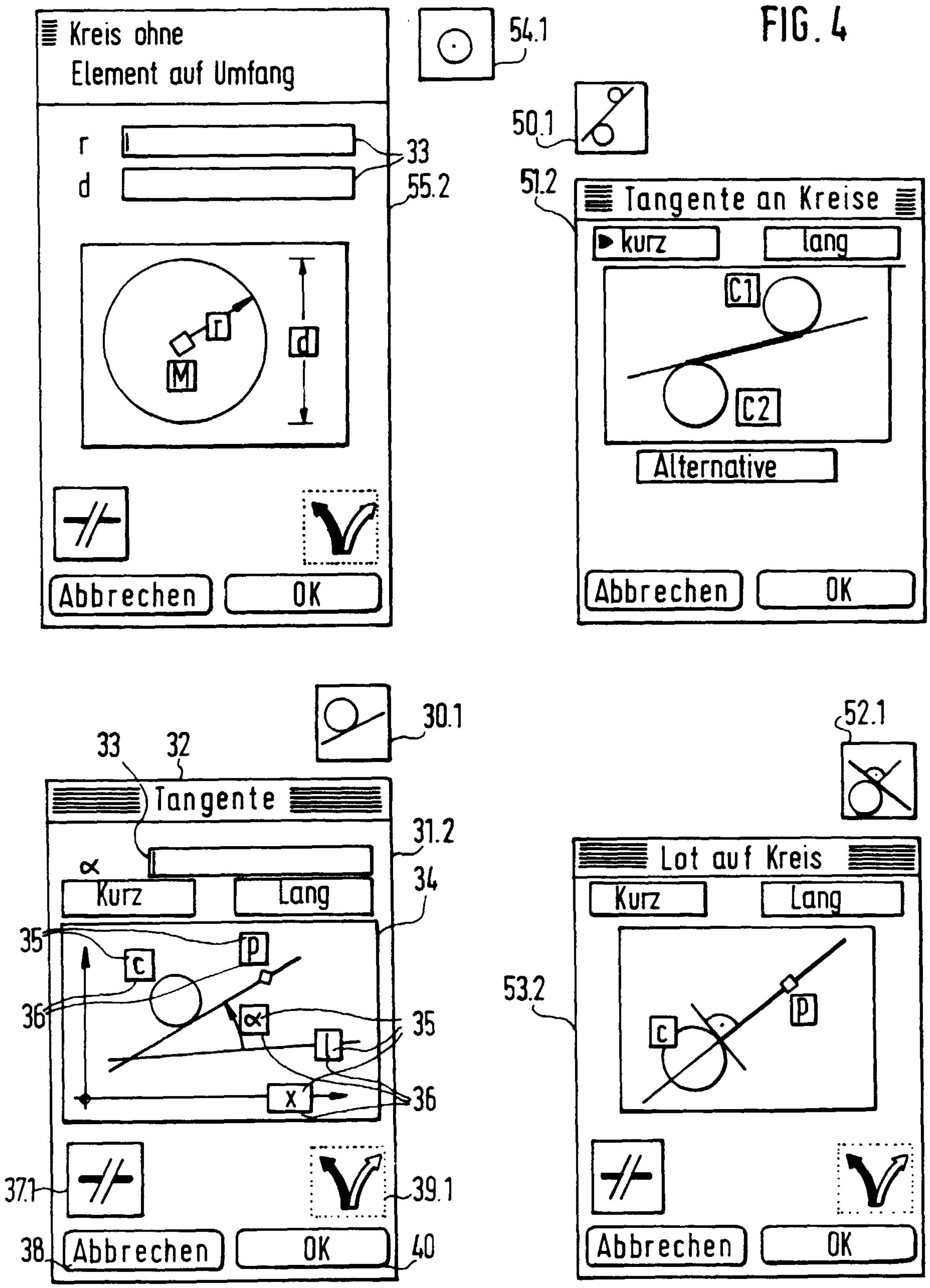
Kreis ohne
Element auf Umfang
r
d
33
55.2
54.1
r
M
d
Abbrechen
OK
50.1
51.2
Tangente an Kreise
kurz
lang
C1
C2
Alternative
Abbrechen
OK
30.1
33
32
Tangente
31.2
α
Kurz
Lang
34
35
c
p
36
α
35
l
x
36
37.1
39.1
38
Abbrechen
OK
40
52.1
Lot auf Kreis
Kurz
Lang
53.2
c
p
Abbrechen
OK

FIG. 5

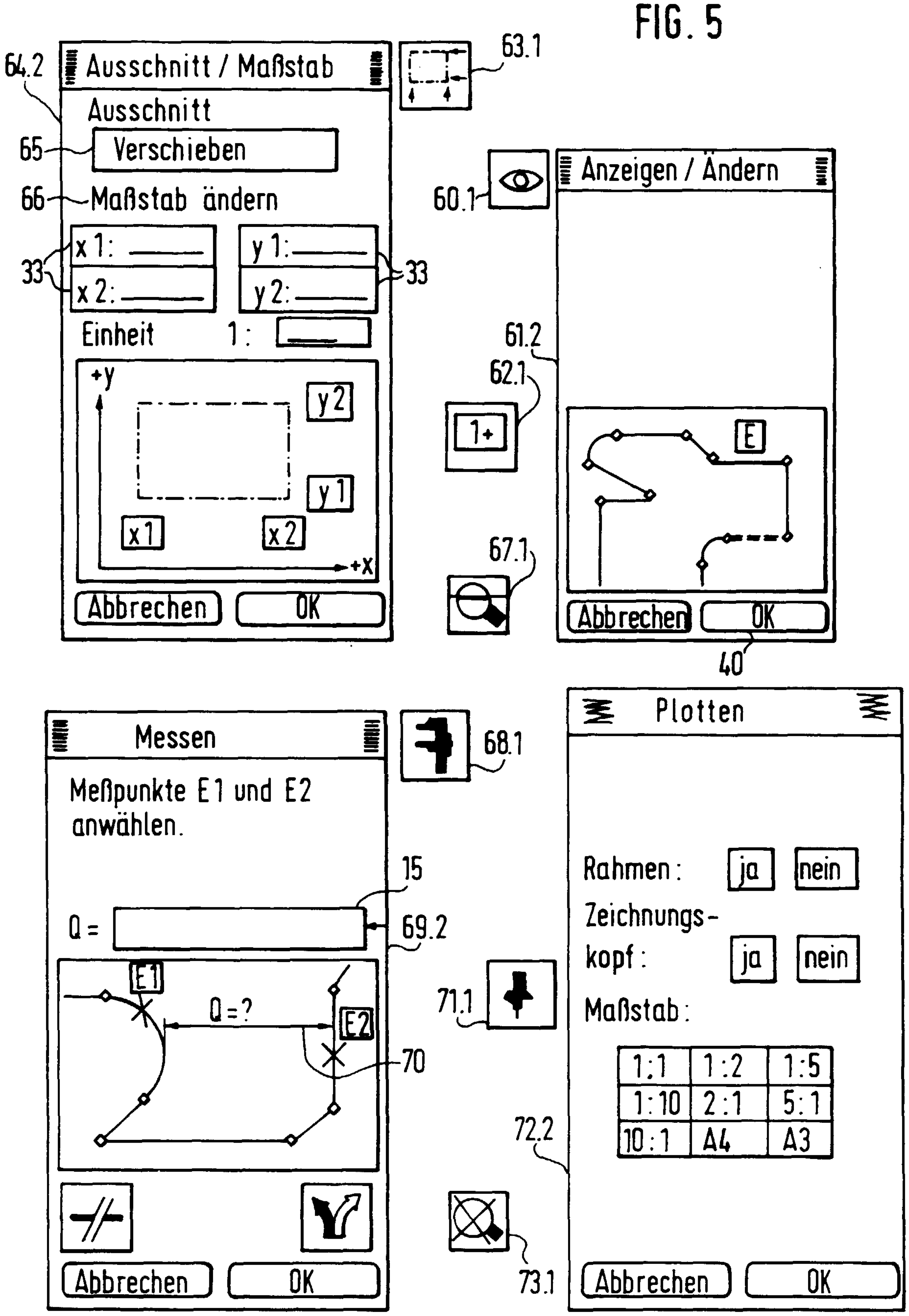
64.2
Ausschnitt / Maßstab
Ausschnitt
65
Verschieben
66
Maßstab ändern
x 1:
x 2:
y 1:
y 2:
33
33
Einheit 1:
+y
y2
y1
x1
x2
+x
Abbrechen
OK
63.1
60.1
Anzeigen / Ändern
61.2
62.1
1+
E
67.1
Abbrechen
OK
40
Messen
Meßpunkte E1 und E2 anwählen.
68.1
15
Q =
69.2
E1
Q = ?
E2
70
Abbrechen
OK
71.1
72.2
73.1
Plotten
Rahmen:
ja
nein
Zeichnungs-kopf:
ja
nein
Maßstab:
1:1
1:2
1:5
1:10
2:1
5:1
10:1
A4
A3
Abbrechen
OK

FIG. 6

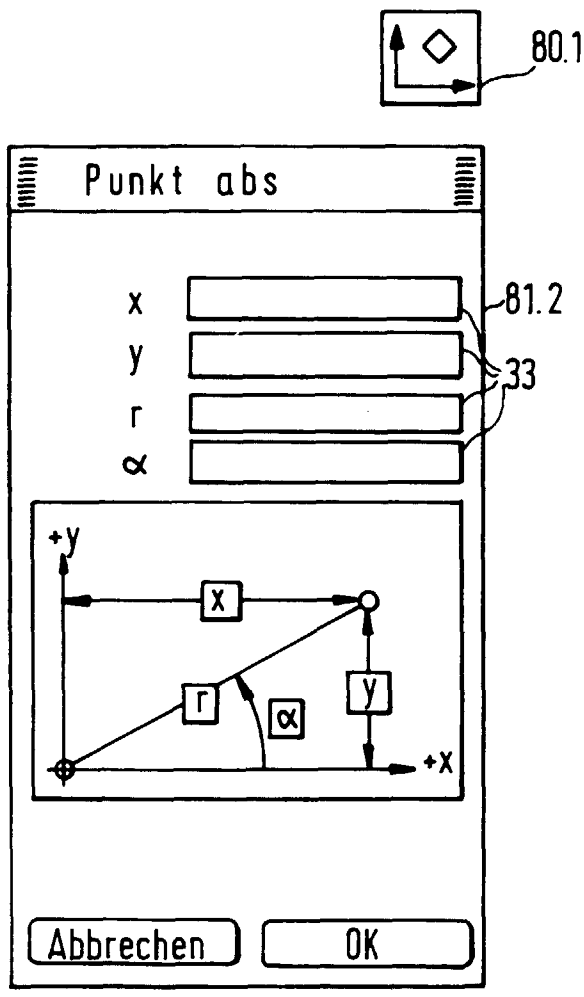

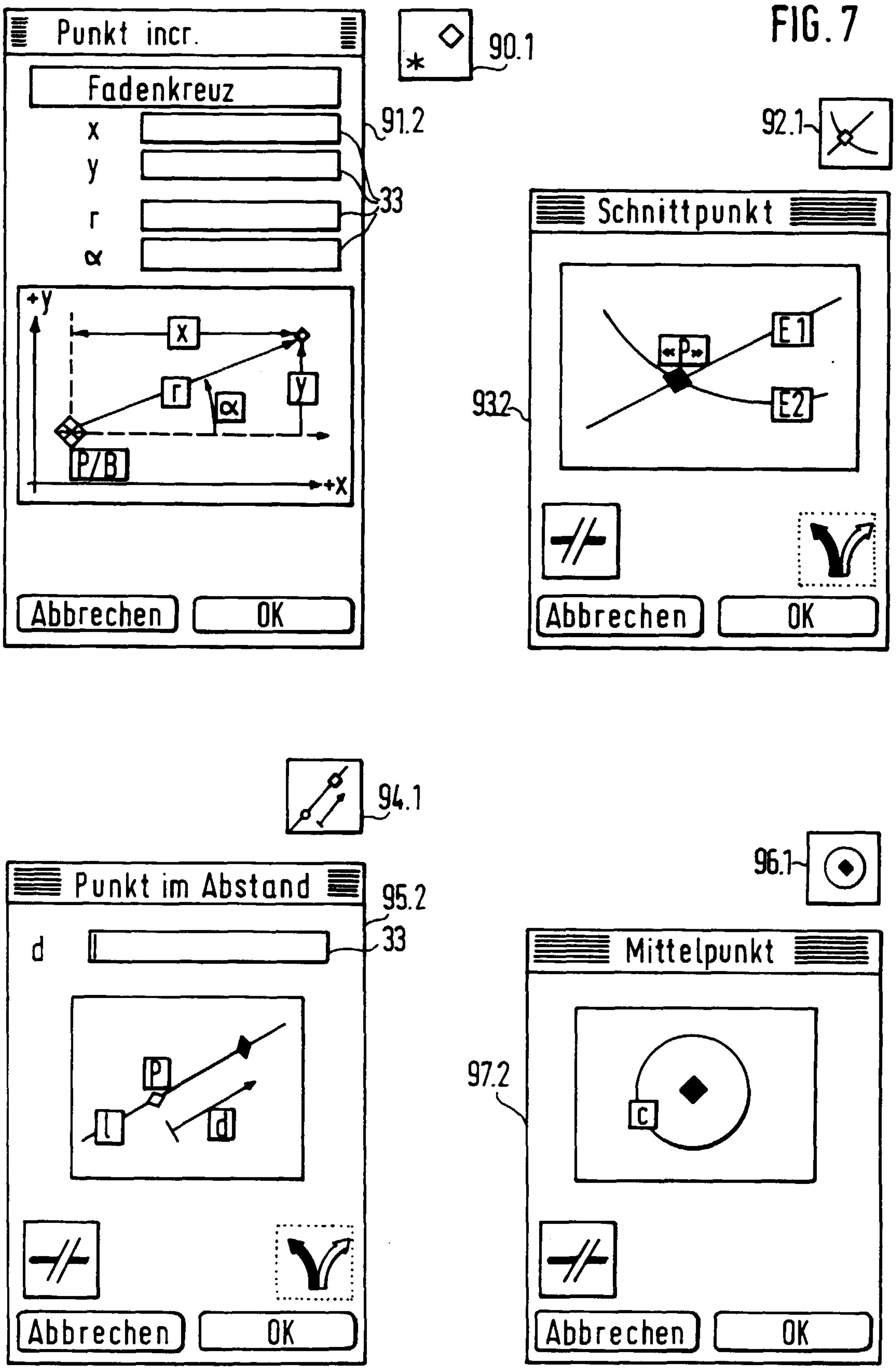
Punkt incr.
Fadenkreuz
x
y
r
α
+y
x
r
α
y
P/B
+x
Abbrechen
OK
90.1
91.2
33
92.1
Schnittpunkt
P
E1
E2
93.2
Abbrechen
OK
94.1
Punkt im Abstand
95.2
33
d
P
l
d
Abbrechen
OK
96.1
Mittelpunkt
97.2
c
Abbrechen
OK

FIG. 7

FIG. 8

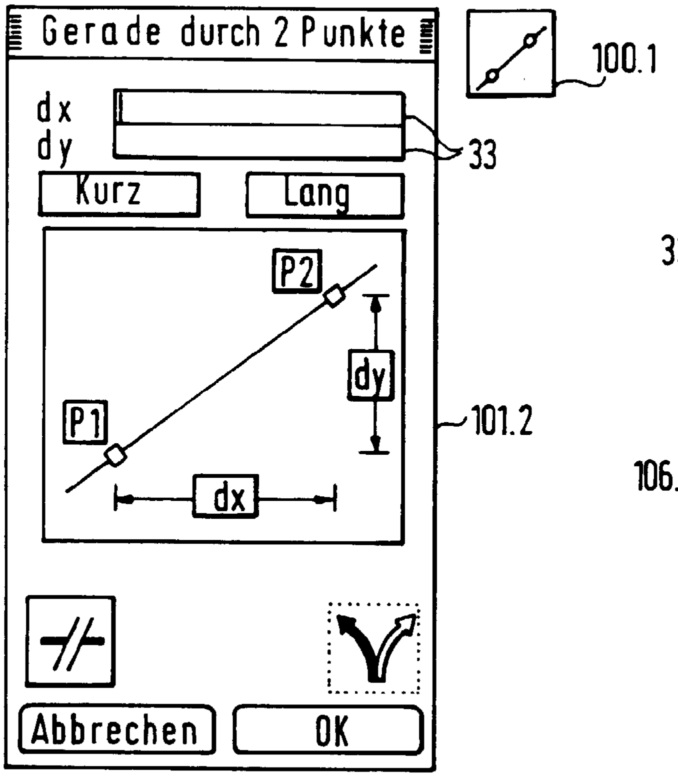
Gerade durch 2 Punkte
dx
dy
Kurz
Lang
P2
dy
P1
dx
Abbrechen
OK
100.1
33
101.2

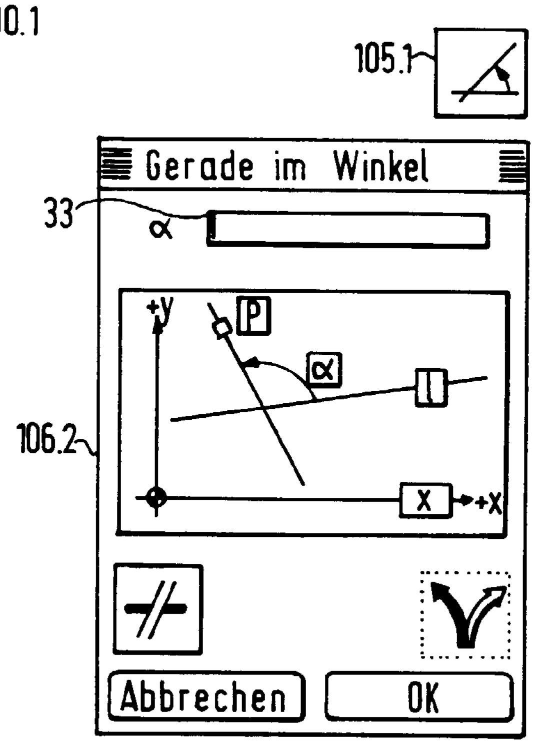
105.1
Gerade im Winkel
33
α
+y
P
α
l
x
+x
106.2
Abbrechen
OK

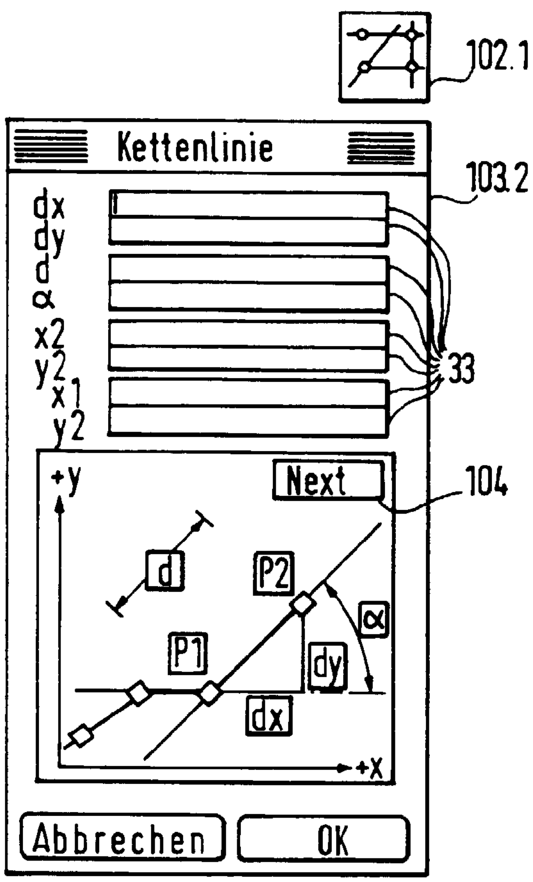
102.1
Kettenlinie
103.2
dx
dy
d
α
x2
y2
x1
y2
33
+y
Next
104
d
P2
α
P1
dy
dx
+x
Abbrechen
OK

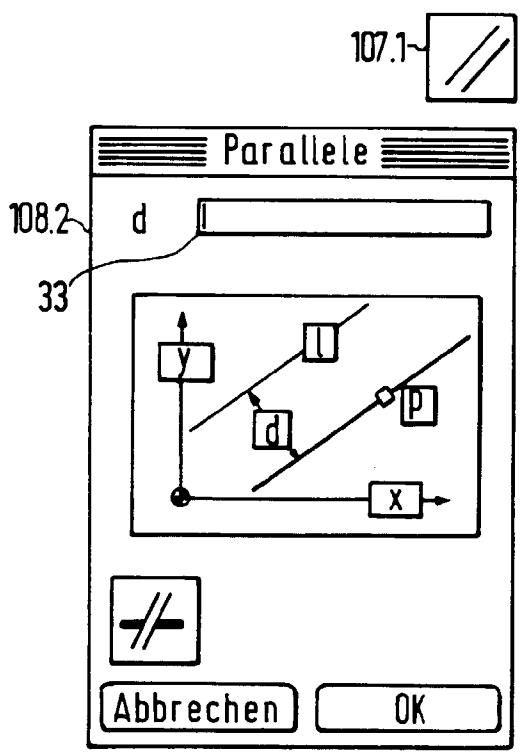
107.1
Parallele
108.2
d
33
y
l
P
d
x
Abbrechen
OK

FIG. 9

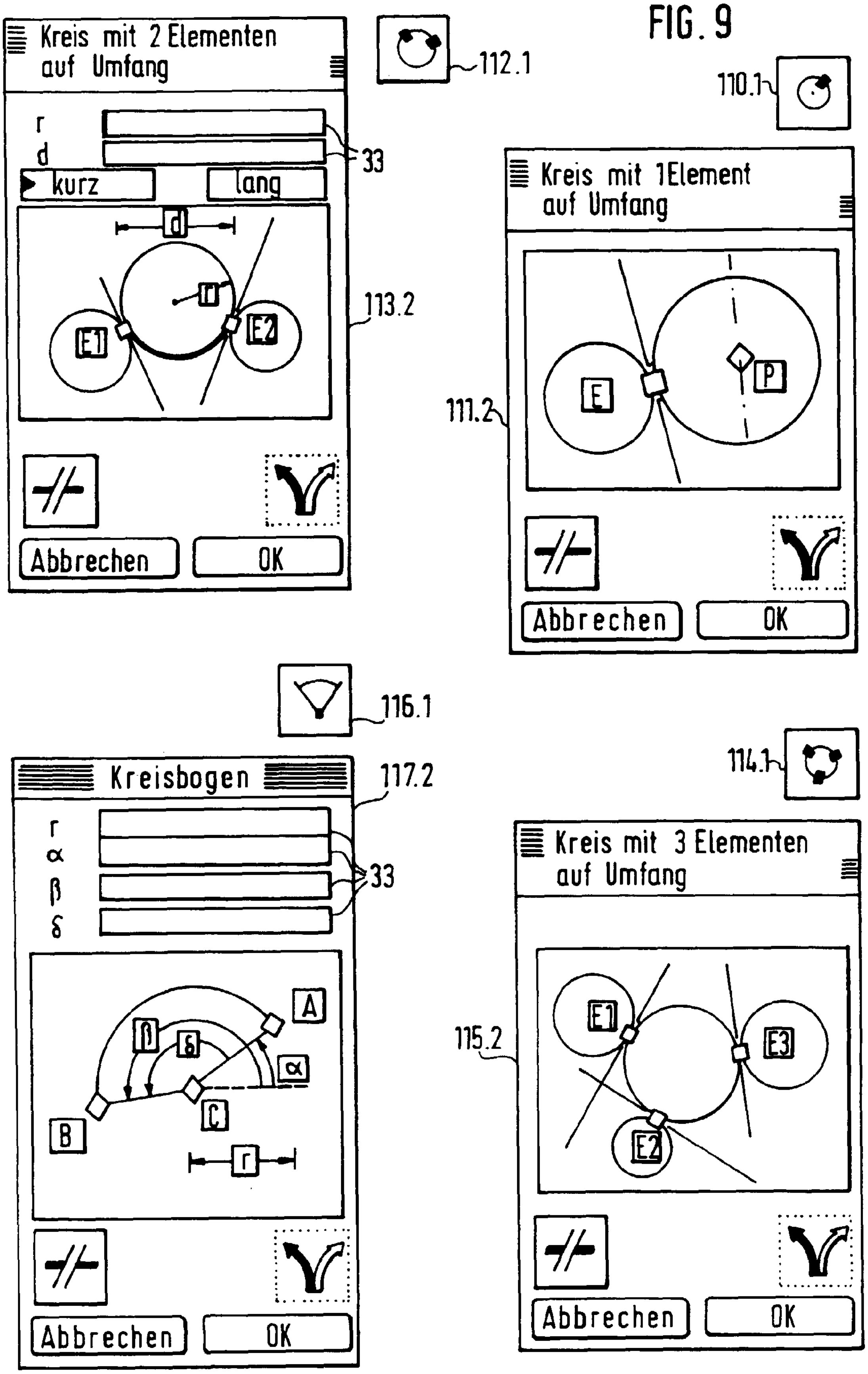
Kreis mit 2 Elementen
auf Umfang
112.1
r
d
33
kurz
lang
d
r
E1
E2
113.2
Abbrechen
OK
110.1
Kreis mit 1 Element
auf Umfang
111.2
E
P
Abbrechen
OK
116.1
Kreisbogen
117.2
r
α
β
δ
33
A
β
δ
α
B
C
r
Abbrechen
OK
114.1
Kreis mit 3 Elementen
auf Umfang
115.2
E1
E3
E2
Abbrechen
OK

FIG.10

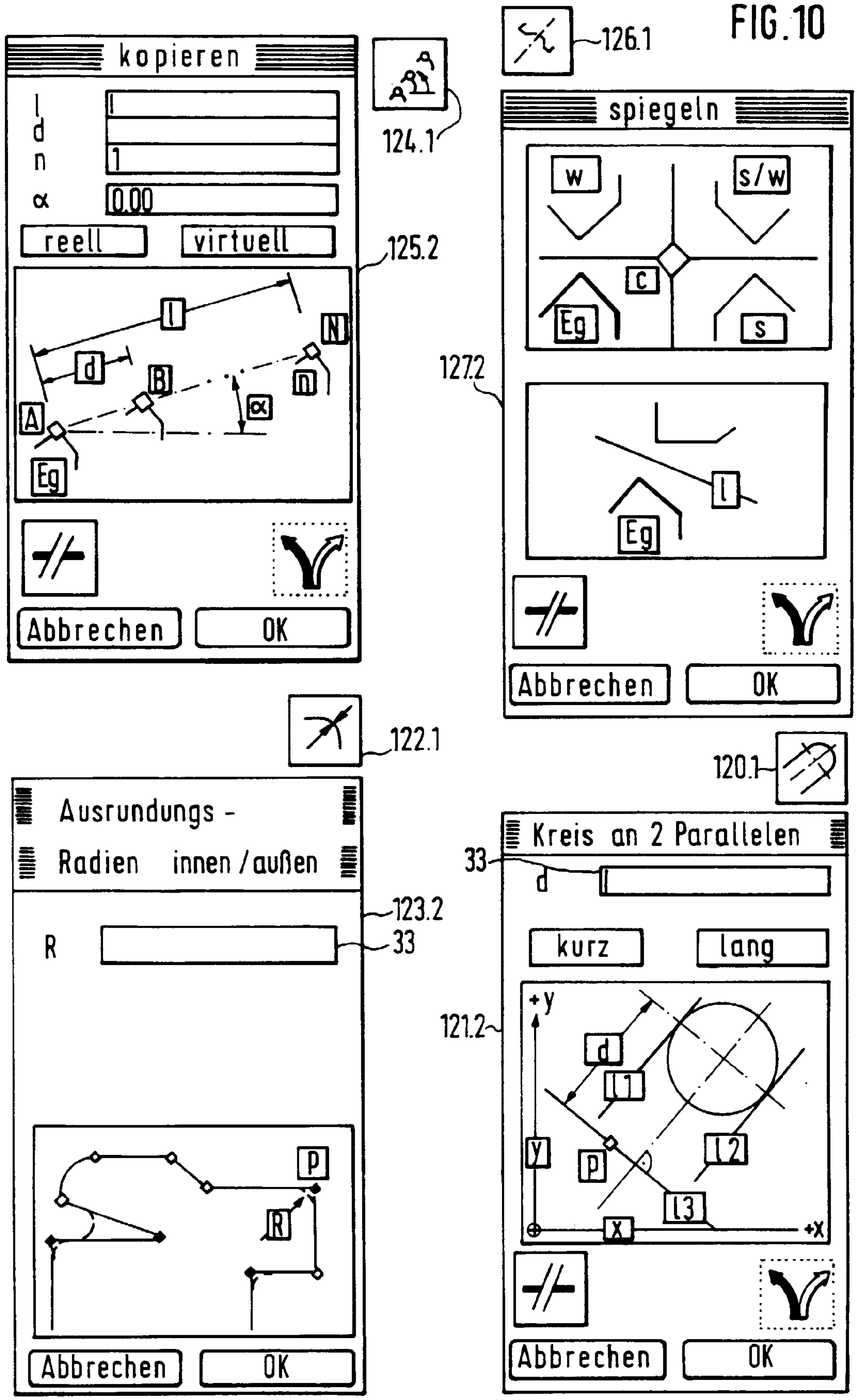

kopieren
l
d
n
α
0.00
reell
virtuell
l
d
N
B
n
α
A
Eg
Abbrechen
OK
124.1
125.2
126.1
spiegeln
w
s/w
c
Eg
s
127.2
l
Eg
Abbrechen
OK
122.1
Ausrundungs -
Radien innen / außen
123.2
R
33
P
R
Abbrechen
OK
120.1
Kreis an 2 Parallelen
33
d
kurz
lang
121.2
+y
d
l1
y
P
l2
l3
x
+x
Abbrechen
OK

FIG. 11

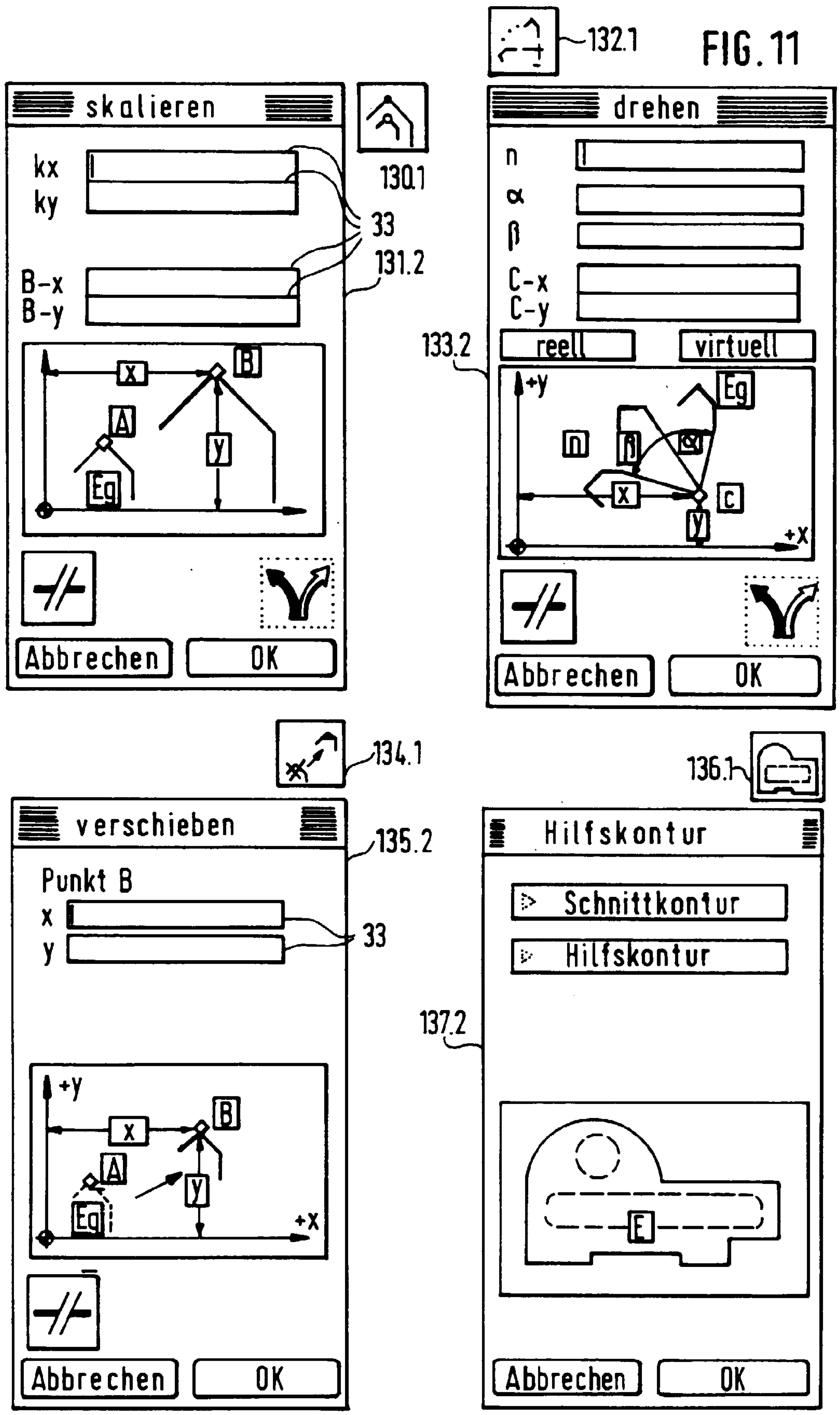

132.1
skalieren
kx
ky
B-x
B-y
130.1
33
131.2
x
B
A
y
Eg
Abbrechen
OK
drehen
n
α
β
C-x
C-y
reell
virtuell
133.2
+y
Eg
n
β
α
x
c
y
+x
Abbrechen
OK
134.1
verschieben
135.2
Punkt B
x
y
33
+y
x
B
A
y
Eg
+x
Abbrechen
OK
136.1
Hilfskontur
Schnittkontur
Hilfskontur
137.2
E
Abbrechen
OK

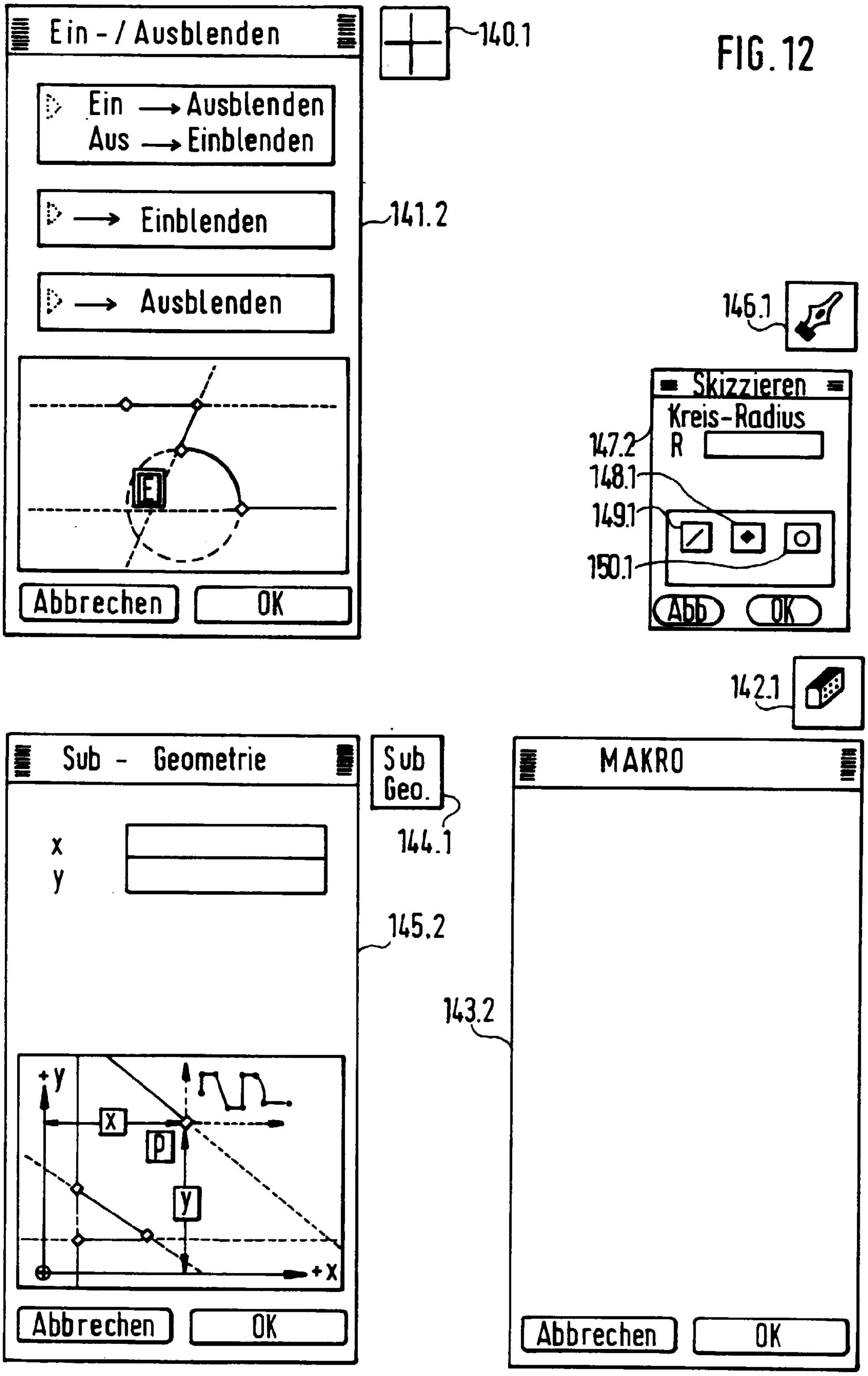
Ein - / Ausblenden
Ein → Ausblenden
Aus → Einblenden
→ Einblenden
→ Ausblenden
E
Abbrechen
OK
140.1
141.2
FIG. 12
146.1
Skizzieren
Kreis-Radius
R
147.2
148.1
149.1
150.1
Abb
OK
142.1
Sub - Geometrie
x
y
X
P
+y
+x
Abbrechen
OK
Sub Geo.
144.1
145.2
143.2
MAKRO
Abbrechen
OK

FIG. 13

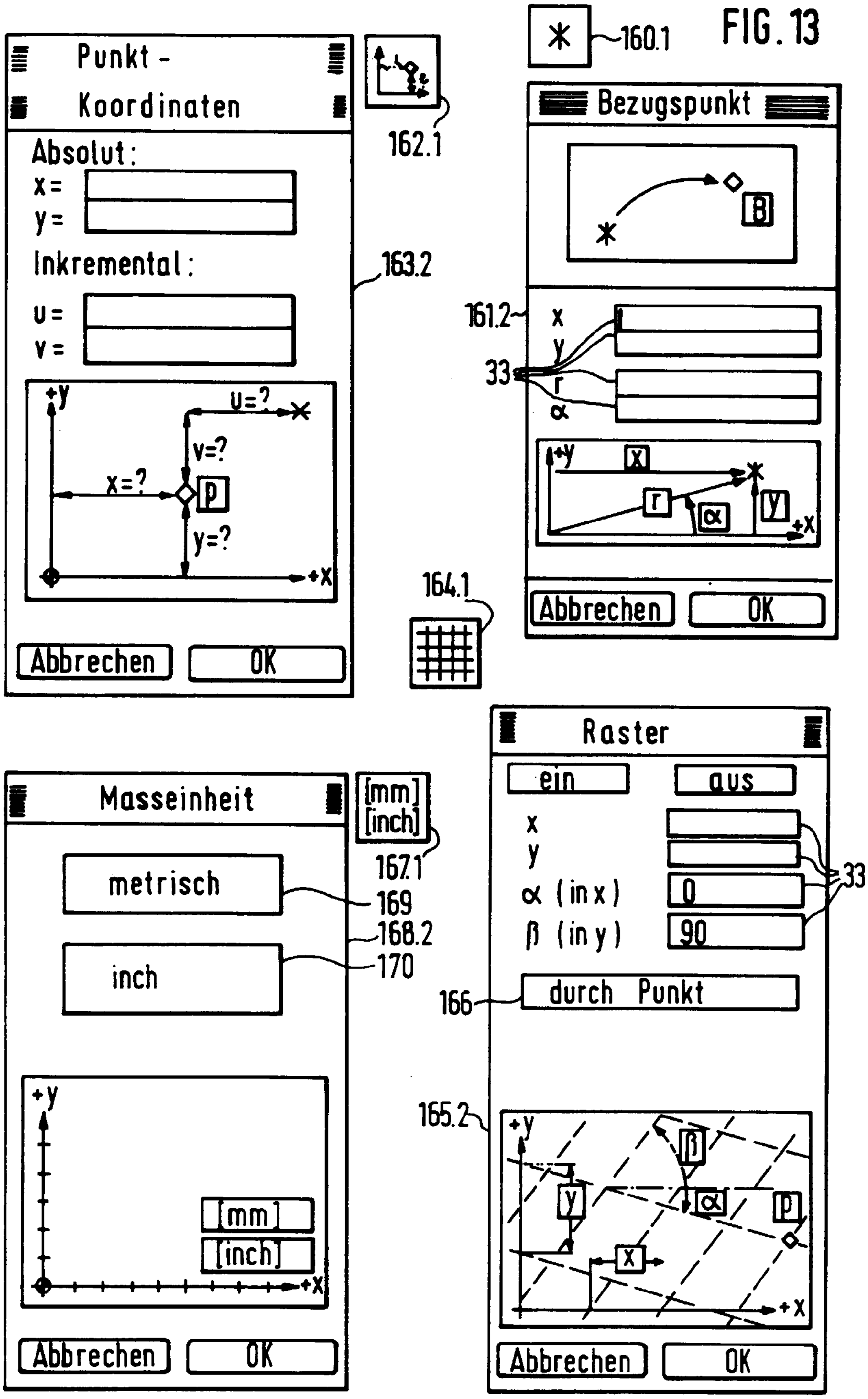

160.1
Bezugspunkt
B
161.2
x
y
33
r
α
+y
x
r
α
y
+x
Abbrechen
OK
Punkt - Koordinaten
Absolut:
x =
y =
Inkremental:
u =
v =
+y
u=?
v=?
x=?
p
y=?
+x
Abbrechen
OK
162.1
163.2
164.1
Raster
ein
aus
x
y
α (in x)
0
β (in y)
90
33
166
durch Punkt
165.2
+y
β
y
α
p
x
+x
Abbrechen
OK
Masseinheit
[mm]
[inch]
167.1
metrisch
169
168.2
inch
170
+y
[mm]
[inch]
+x
Abbrechen
OK

FIG. 14

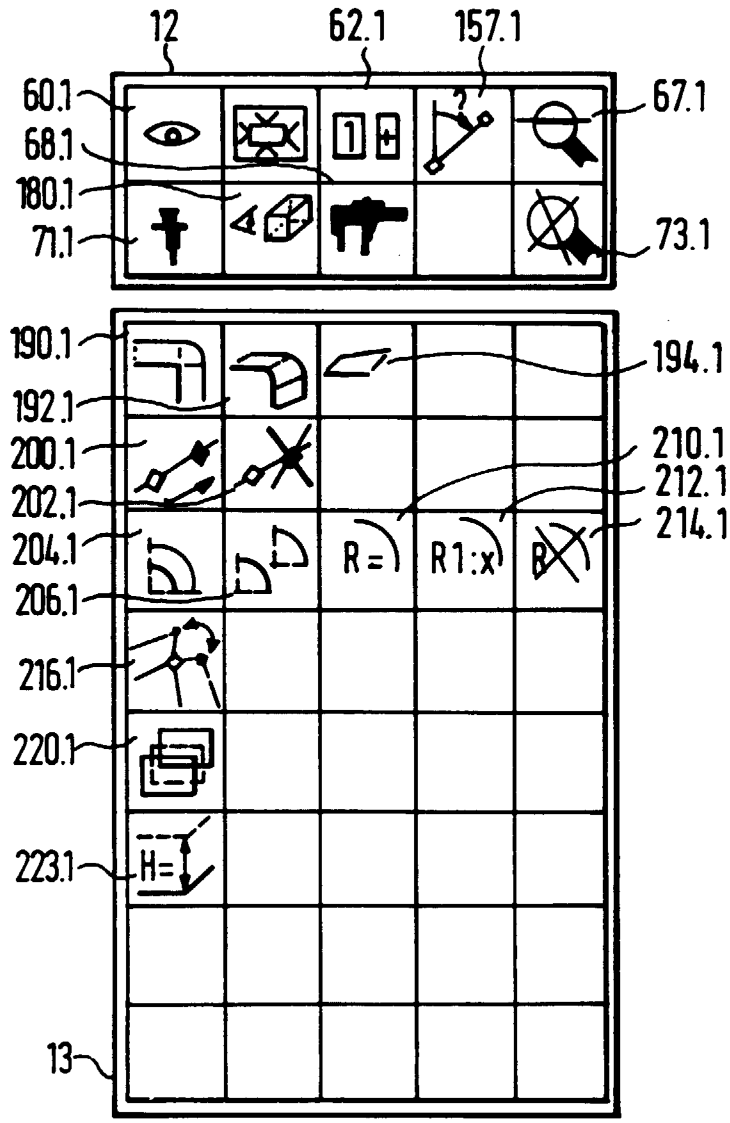
12
62.1
157.1
60.1
68.1
180.1
71.1
67.1
73.1
190.1
192.1
194.1
200.1
202.1
210.1
212.1
214.1
204.1
206.1
R =
R1:x
R
216.1
220.1
223.1
H=
13

FIG. 15

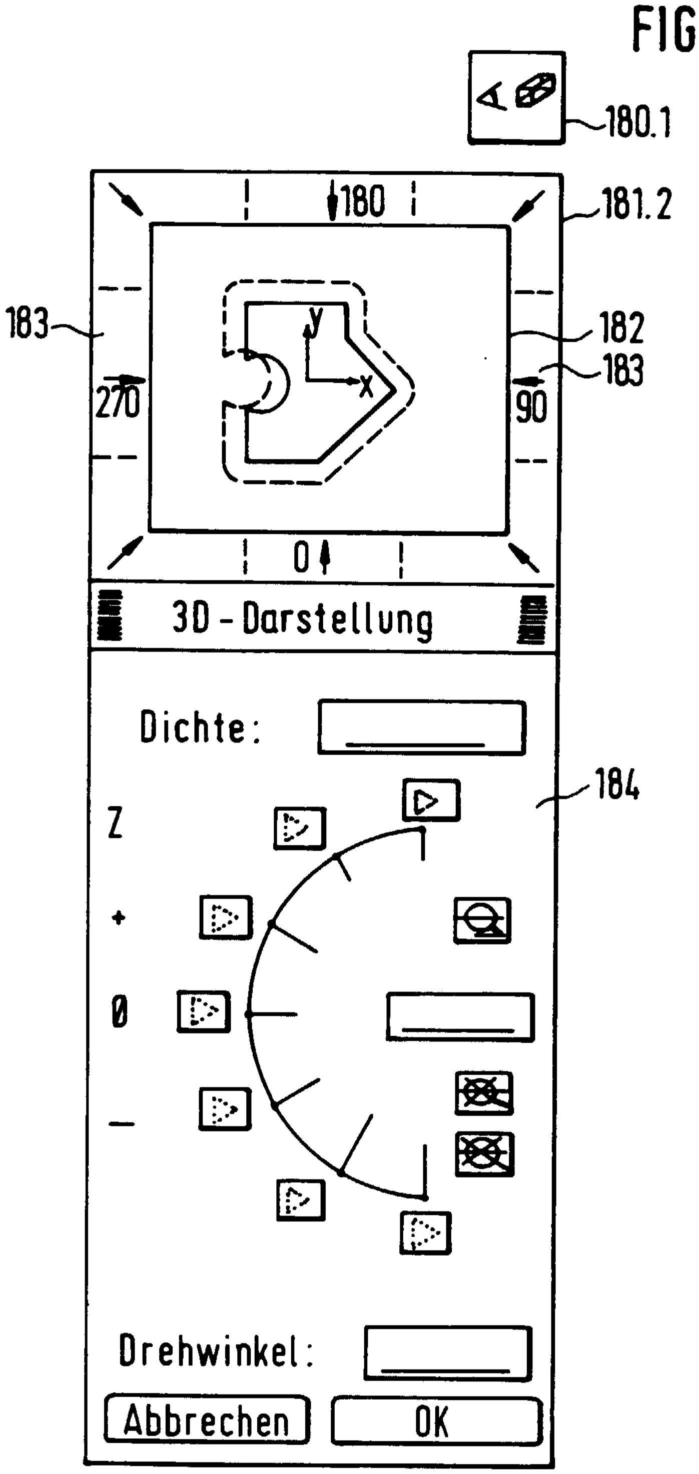
180.1
181.2
180
183
182
183
270
90
y
x
0
3D - Darstellung
Dichte:
184
Z
+
0
—
Drehwinkel:
Abbrechen
OK

FIG. 16

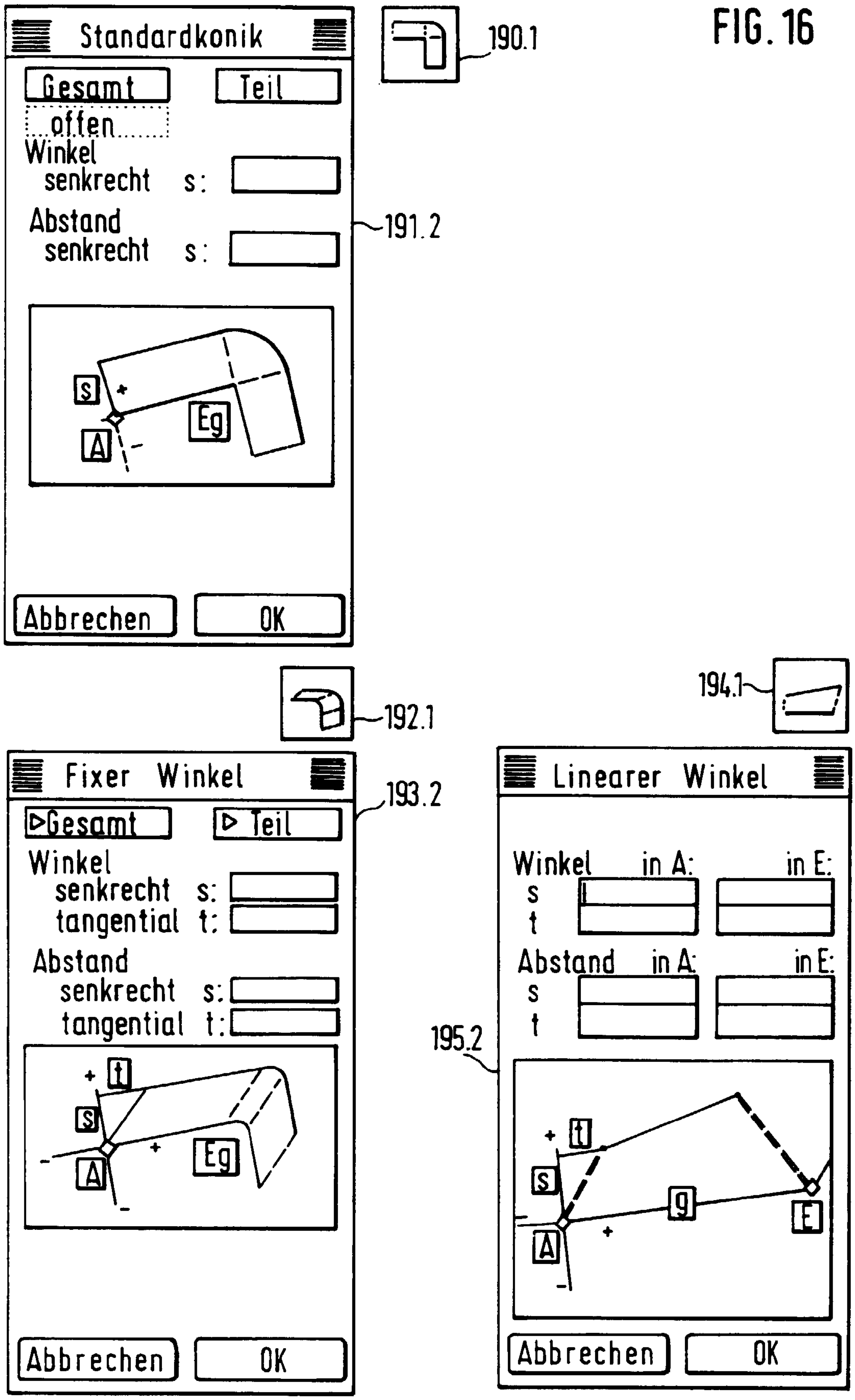
Standardkonik
Gesamt
Teil
offen
Winkel
senkrecht s:
Abstand
senkrecht s:
S
A
Eg
Abbrechen
OK
190.1
191.2
192.1
Fixer Winkel
Gesamt
Teil
Winkel
senkrecht s:
tangential t:
Abstand
senkrecht s:
tangential t:
t
S
A
Eg
Abbrechen
OK
193.2
194.1
Linearer Winkel
Winkel in A: in E:
s
t
Abstand in A: in E:
s
t
t
S
A
g
E
Abbrechen
OK
195.2

FIG. 17

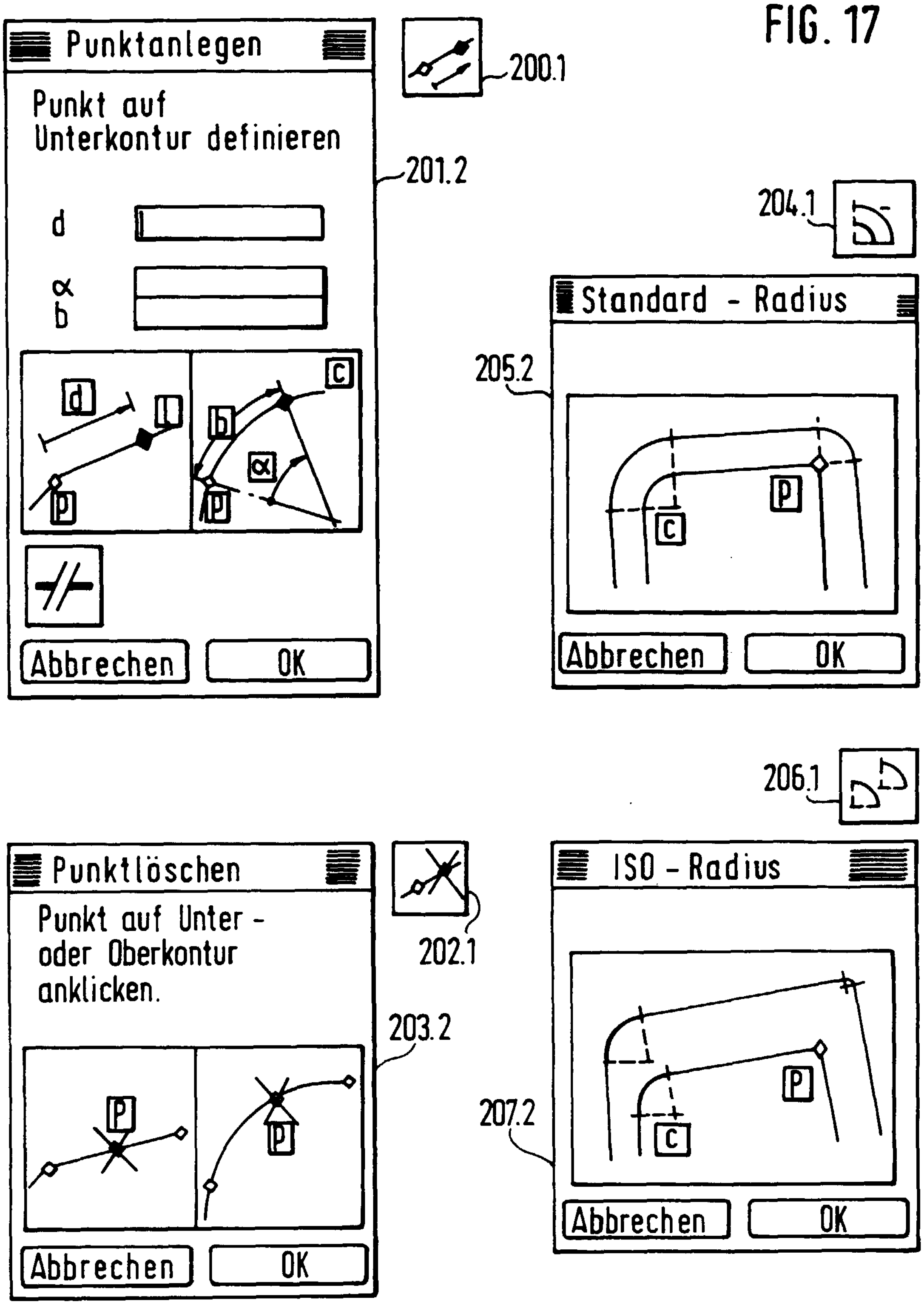
Punktanlegen
Punkt auf
Unterkontur definieren
d
α
b
d
L
p
c
b
α
p
Abbrechen
OK
200.1
201.2
204.1
Standard - Radius
205.2
P
C
Abbrechen
OK
206.1
Punktlöschen
Punkt auf Unter -
oder Oberkontur
anklicken.
P
P
Abbrechen
OK
202.1
203.2
ISO - Radius
207.2
P
C
Abbrechen
OK

FIG. 18

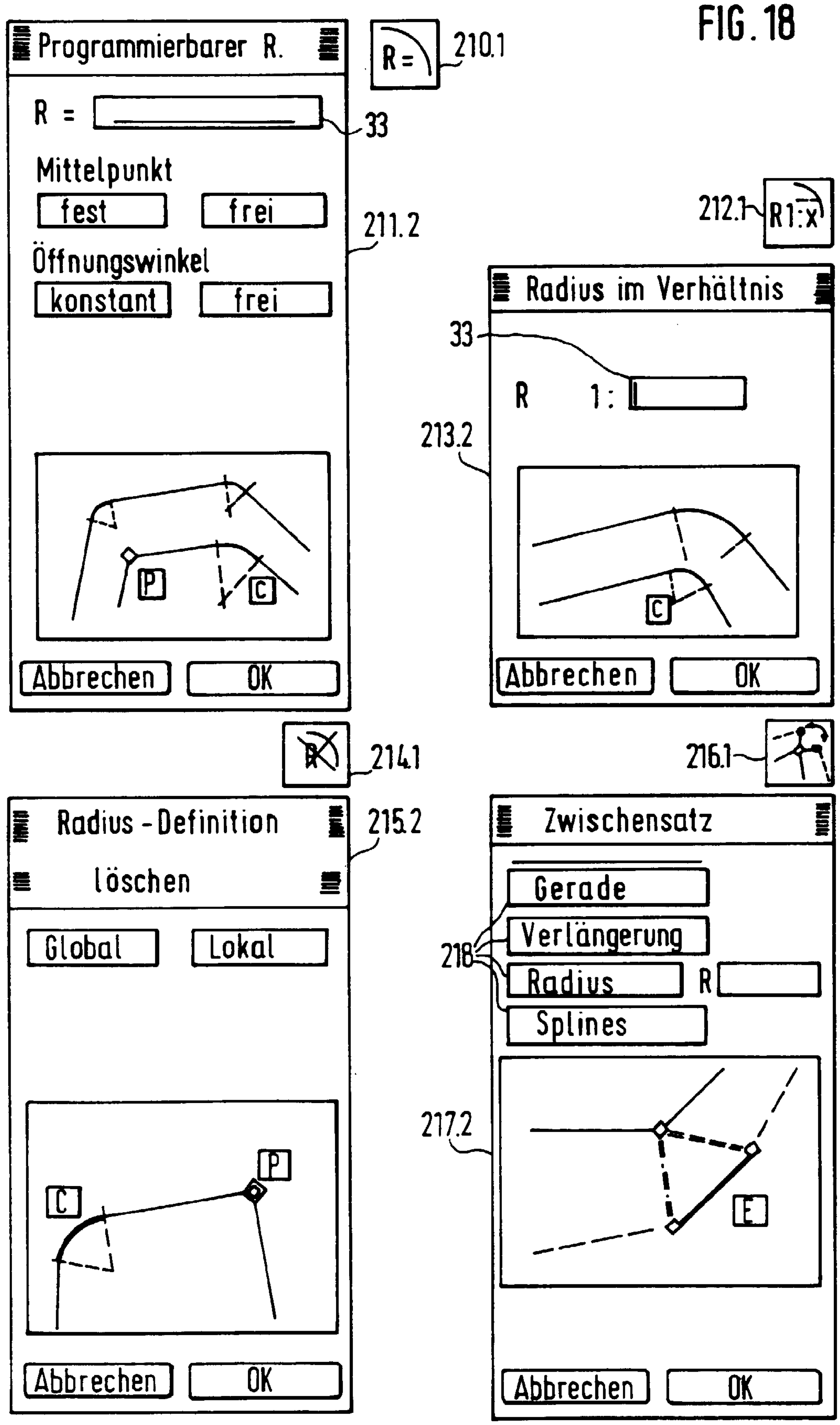
Programmierbarer R.
R =
Mittelpunkt
fest
frei
Öffnungswinkel
konstant
frei
P
C
Abbrechen
OK
R=
210.1
33
211.2
212.1
R1:x
Radius im Verhältnis
33
R 1:
213.2
C
Abbrechen
OK
214.1
216.1
Radius - Definition
löschen
215.2
Global
Lokal
C
P
Abbrechen
OK
Zwischensatz
Gerade
Verlängerung
Radius
R
Splines
218
217.2
E
Abbrechen
OK

FIG. 19

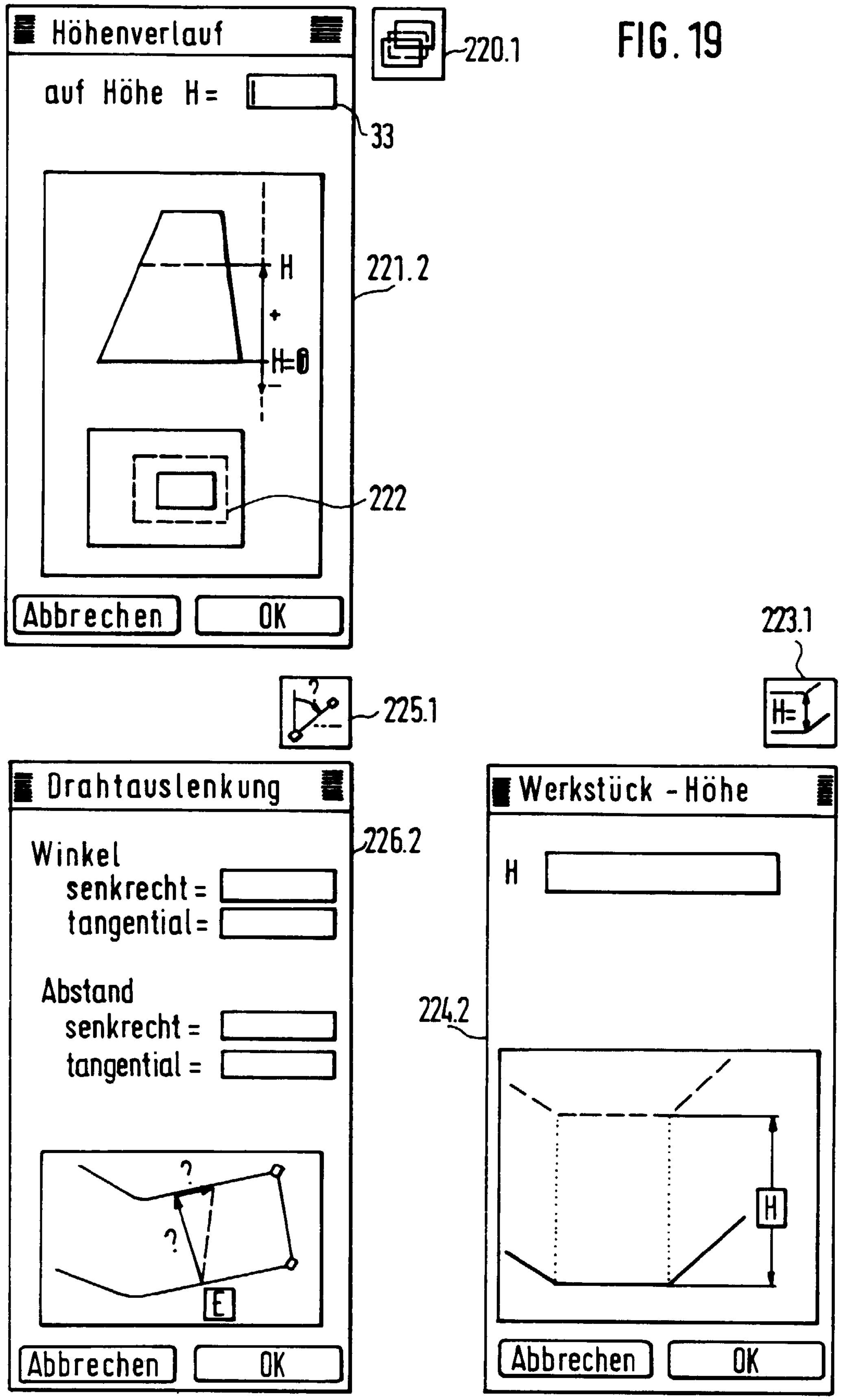
Höhenverlauf
auf Höhe H=
33
220.1
221.2
H
+
H=0
–
222
Abbrechen
OK
225.1
223.1
H=
Drahtauslenkung
226.2
Winkel
senkrecht =
tangential =
Abstand
senkrecht =
tangential =
?
?
E
Abbrechen
OK
Werkstück - Höhe
H
224.2
H
Abbrechen
OK

FIG. 20

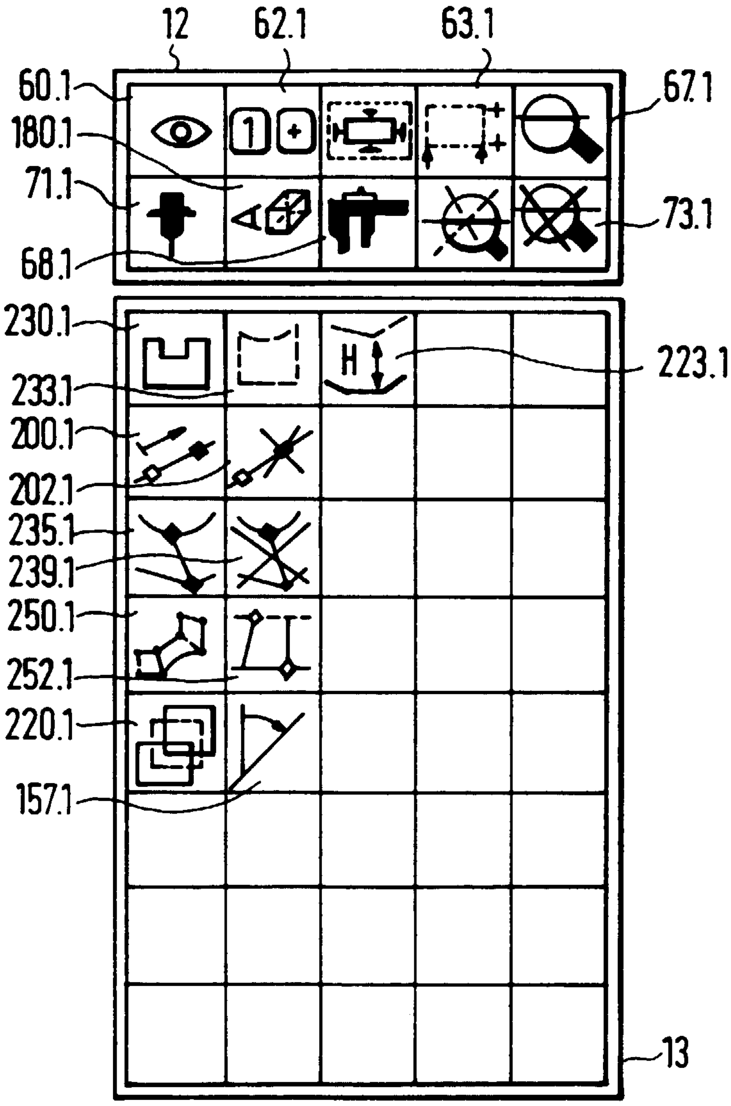
12
62.1
63.1
60.1
180.1
71.1
68.1
67.1
73.1
1
+
230.1
233.1
200.1
202.1
235.1
239.1
250.1
252.1
220.1
157.1
H
223.1
13

FIG. 21

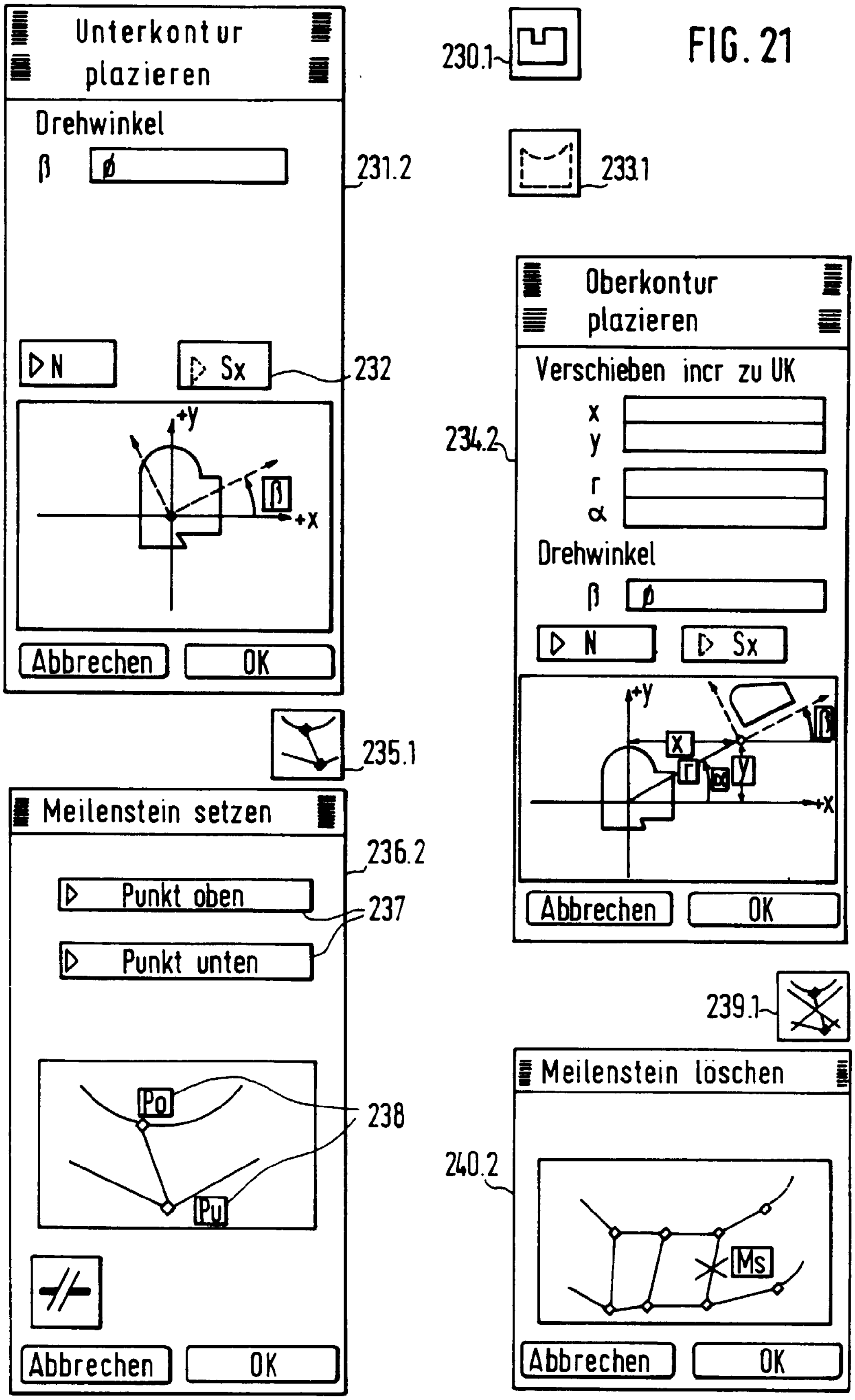

Unterkontur plazieren
Drehwinkel
β
ø
231.2
230.1
233.1
▷N
▷ Sx
232
+y
+x
β
Abbrechen
OK
Oberkontur plazieren
Verschieben incr zu UK
x
y
r
α
Drehwinkel
β
ø
234.2
▷ N
▷ Sx
+y
X
r
α
Y
β
+x
Abbrechen
OK
235.1
Meilenstein setzen
236.2
▷ Punkt oben
▷ Punkt unten
237
Po
Pu
238
Abbrechen
OK
239.1
Meilenstein löschen
240.2
Ms
Abbrechen
OK

FIG. 22

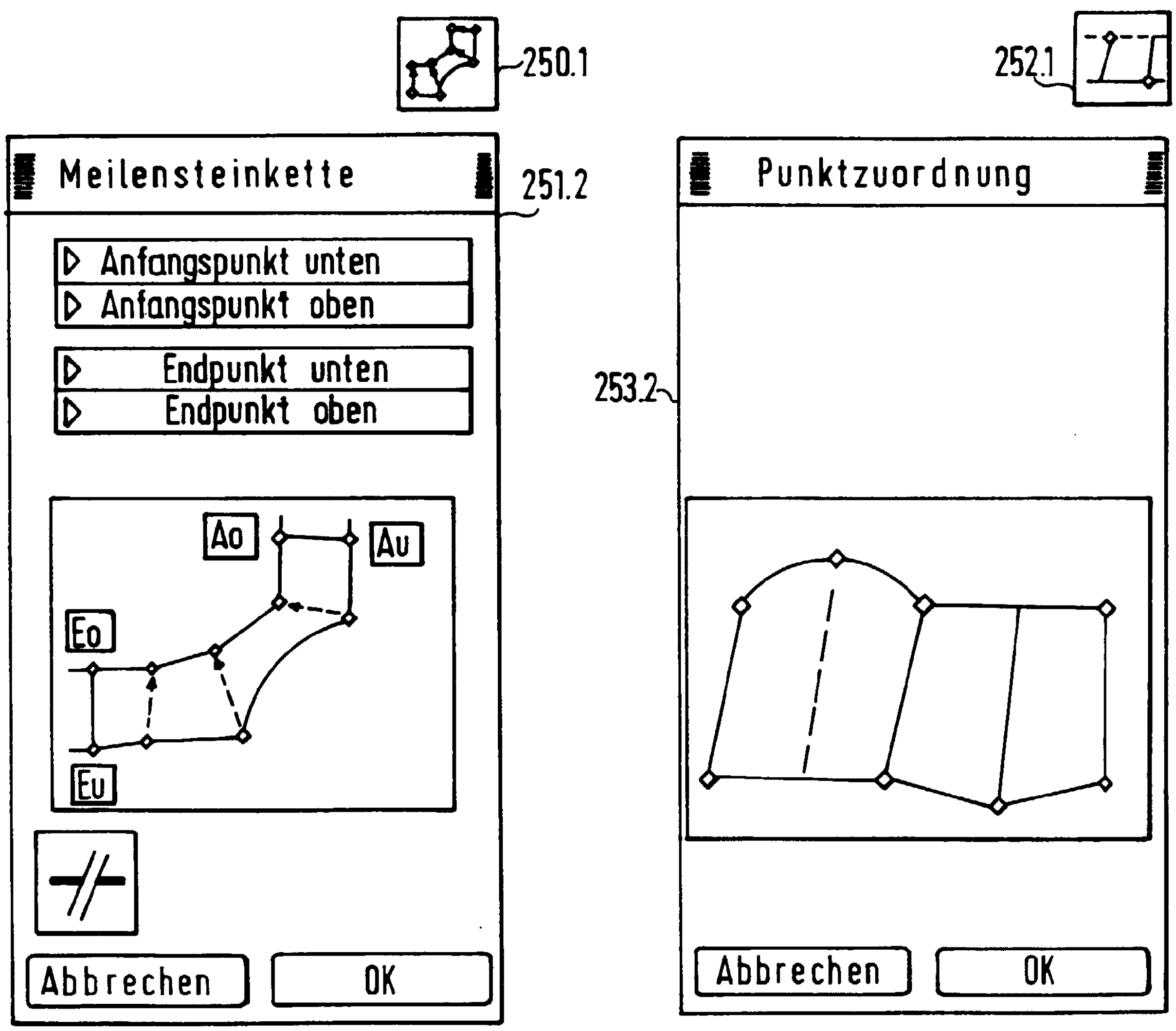
250.1
251.2
Meilensteinkette
Anfangspunkt unten
Anfangspunkt oben
Endpunkt unten
Endpunkt oben
Ao
Au
Eo
Eu
Abbrechen
OK
252.1
253.2
Punktzuordnung
Abbrechen
OK

FIG. 23

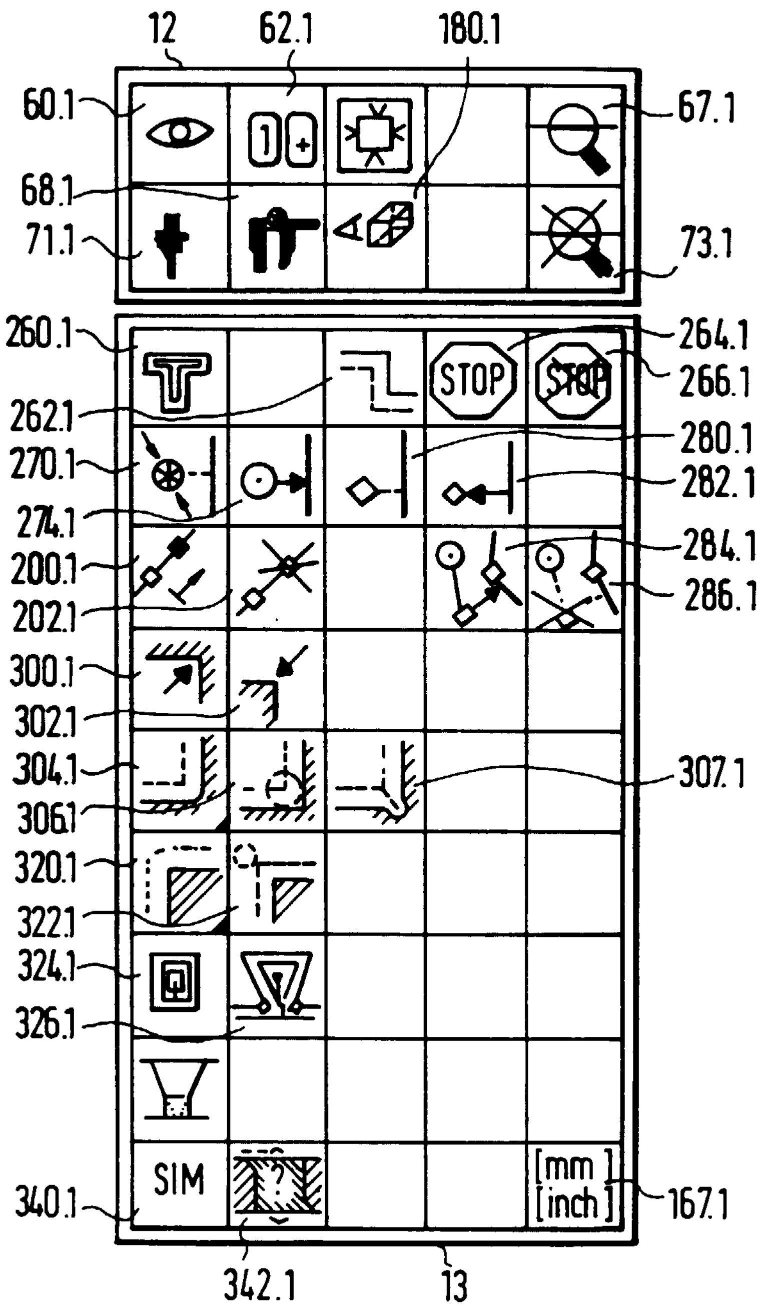
12
62.1
180.1
60.1
67.1
68.1
71.1
73.1
260.1
264.1
266.1
STOP
STOP
262.1
270.1
280.1
282.1
274.1
200.1
284.1
286.1
202.1
300.1
302.1
304.1
307.1
306.1
320.1
322.1
324.1
326.1
SIM
?
[mm]
[inch]
340.1
167.1
342.1
13

FIG. 24

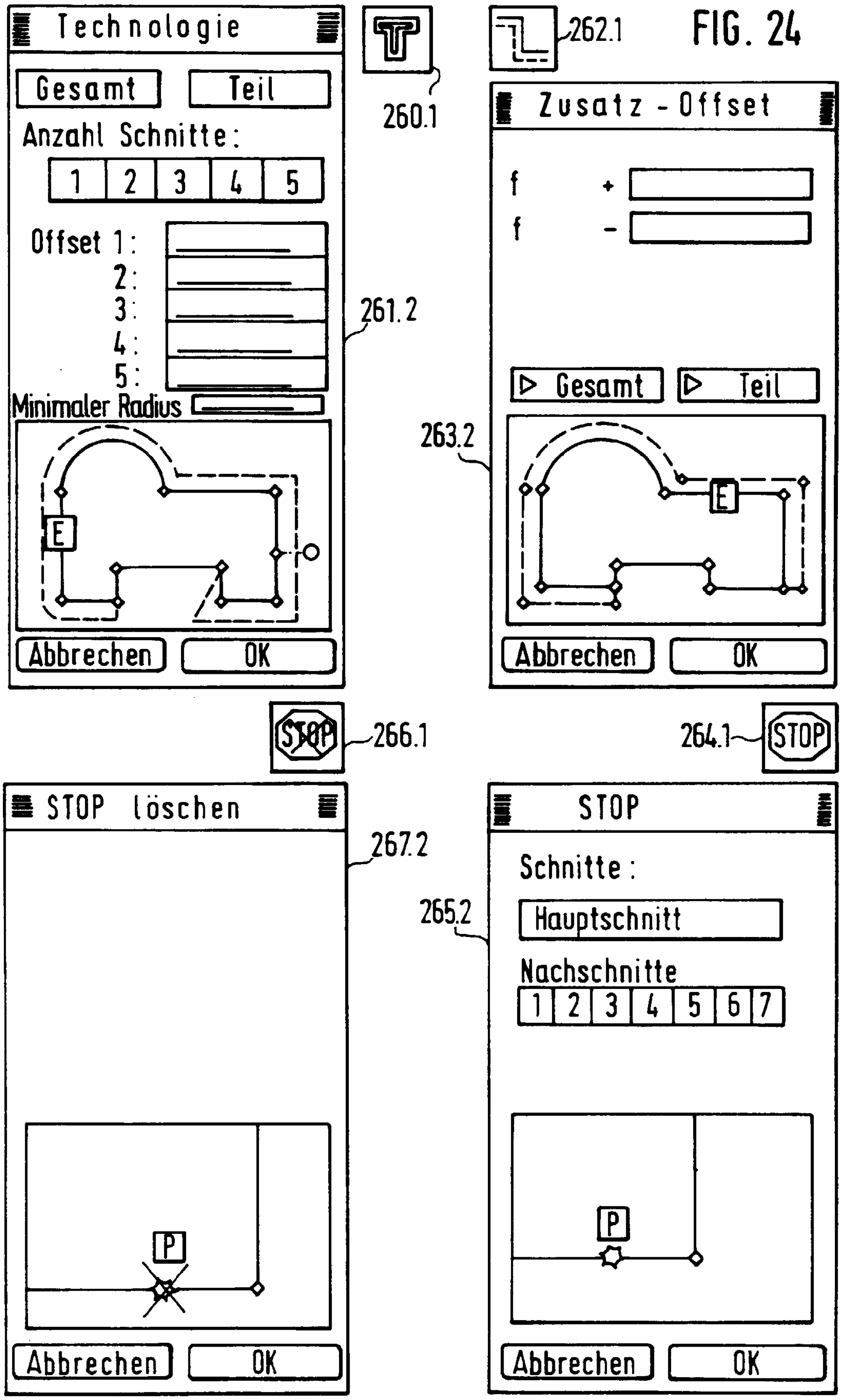
Technologie
Gesamt
Teil
Anzahl Schnitte:
1 2 3 4 5
Offset 1:
2:
3:
4:
5:
Minimaler Radius
E
Abbrechen
OK
260.1
261.2
262.1
Zusatz - Offset
f +
f -
Gesamt
Teil
E
263.2
Abbrechen
OK
266.1
264.1
STOP
STOP löschen
267.2
P
Abbrechen
OK
STOP
Schnitte:
Hauptschnitt
Nachschnitte
1 2 3 4 5 6 7
265.2
P
Abbrechen
OK

FIG. 25

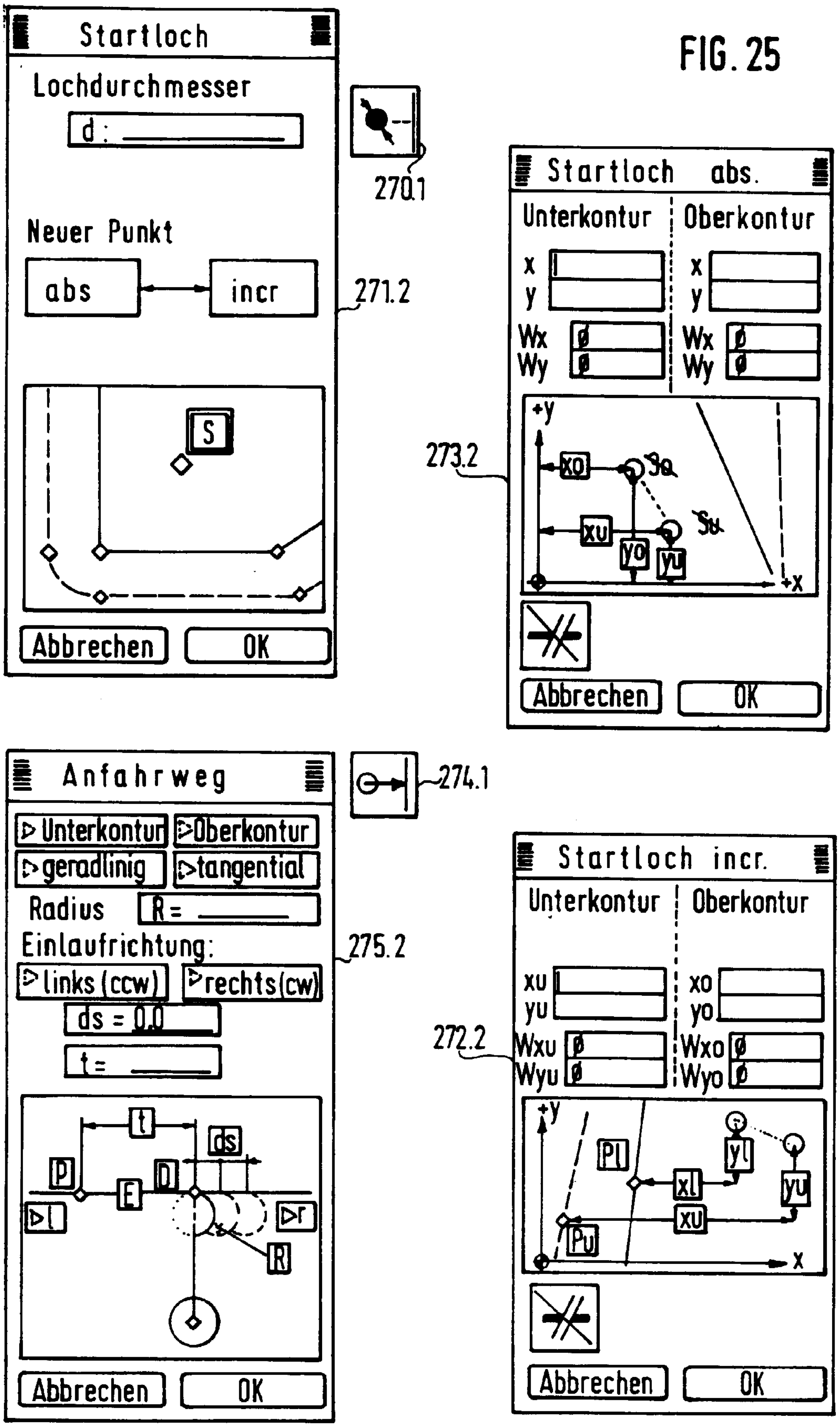
Startloch
Lochdurchmesser
d :
Neuer Punkt
abs
incr
S
Abbrechen
OK
270.1
271.2
Startloch abs.
Unterkontur
Oberkontur
x
y
Wx ø
Wy ø
+y
xo
So
xu
Su
yo
yu
+x
273.2
Abbrechen
OK
Anfahrweg
▷Unterkontur
▷Oberkontur
▷geradlinig
▷tangential
Radius
R =
Einlaufrichtung:
▷links (ccw)
▷rechts (cw)
ds = 0.0
t =
t
ds
P
D
E
▷l
▷r
R
Abbrechen
OK
274.1
275.2
Startloch incr.
Unterkontur
Oberkontur
xu
yu
xo
yo
Wxu ø
Wyu ø
Wxo ø
Wyo ø
+y
Pl
yl
yu
xl
xu
Pu
x
272.2
Abbrechen
OK

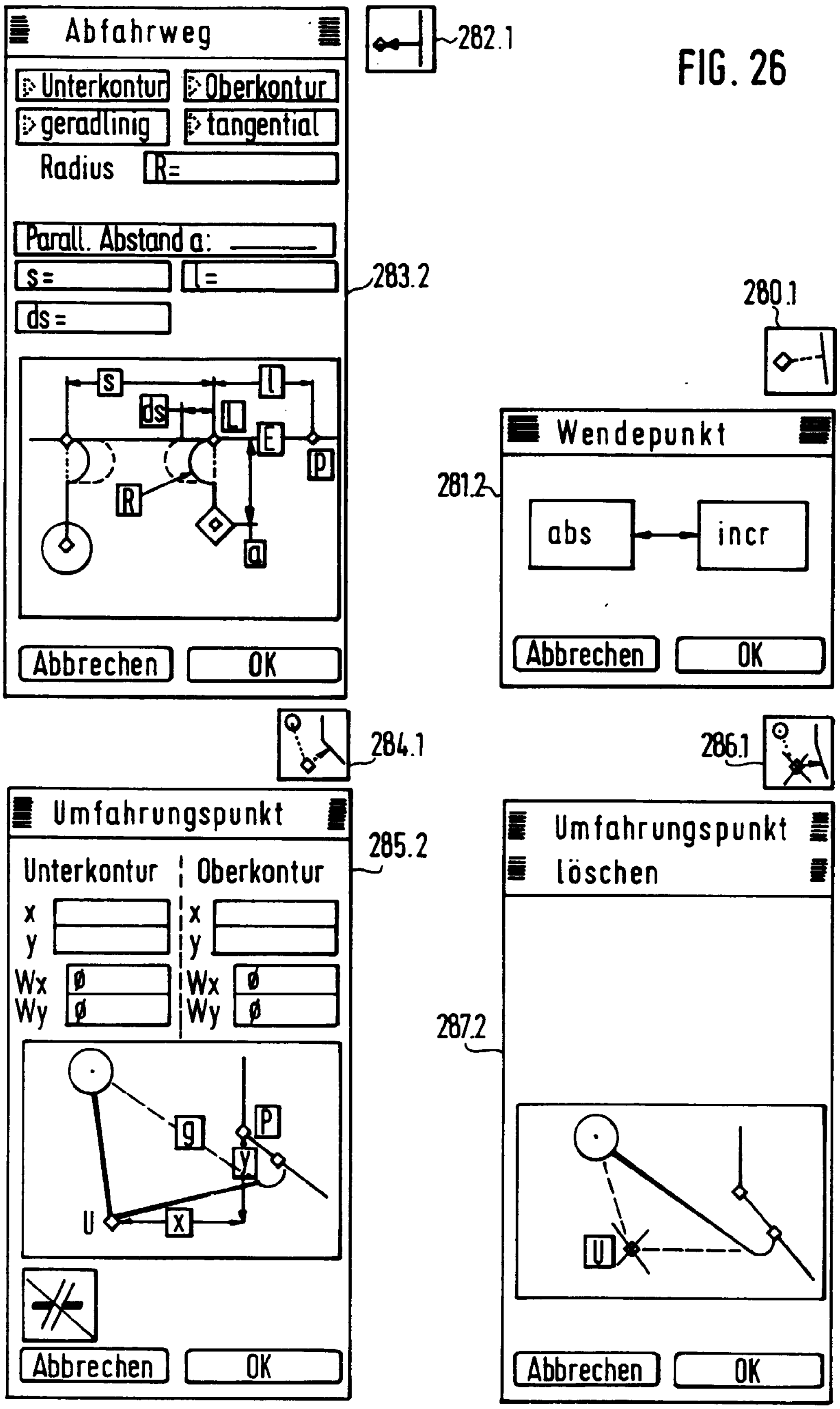
Abfahrweg
Unterkontur
Oberkontur
geradlinig
tangential
Radius
R=
Parall. Abstand a:
s=
l=
ds=
s
ds
l
L
E
P
R
a
Abbrechen
OK
282.1
283.2
280.1
Wendepunkt
281.2
abs
incr
Abbrechen
OK
284.1
286.1
Umfahrungspunkt
285.2
Unterkontur
Oberkontur
x
y
Wx
Wy
ø
g
P
y
U
x
Abbrechen
OK
Umfahrungspunkt
löschen
287.2
U
Abbrechen
OK

FIG. 26

FIG. 27

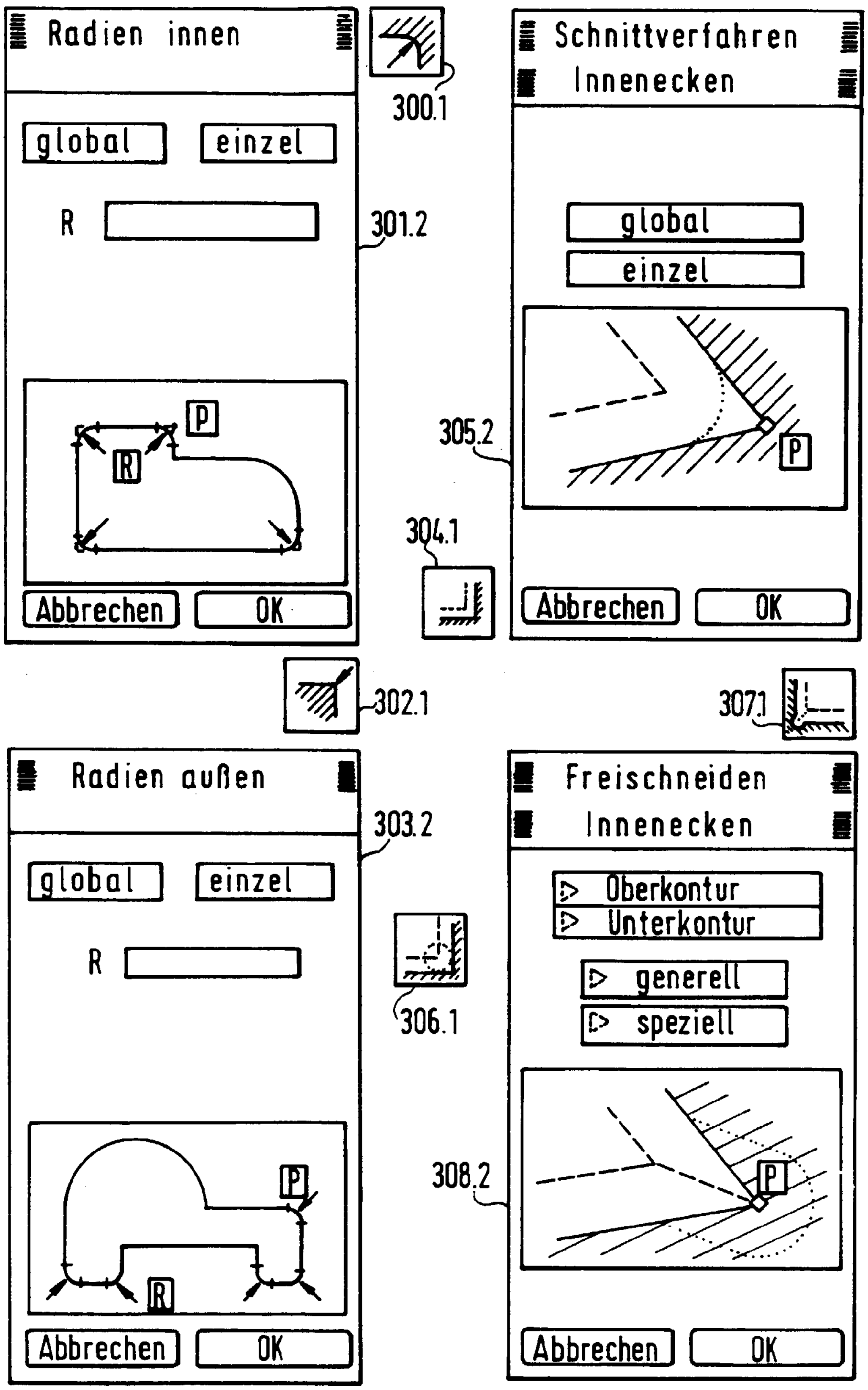
Radien innen
300.1
global
einzel
R
301.2
P
R
Abbrechen
OK
Schnittverfahren
Innenecken
global
einzel
305.2
P
304.1
Abbrechen
OK
302.1
307.1
Radien außen
303.2
global
einzel
R
306.1
P
R
Abbrechen
OK
Freischneiden
Innenecken
Oberkontur
Unterkontur
generell
speziell
308.2
P
Abbrechen
OK

FIG. 28

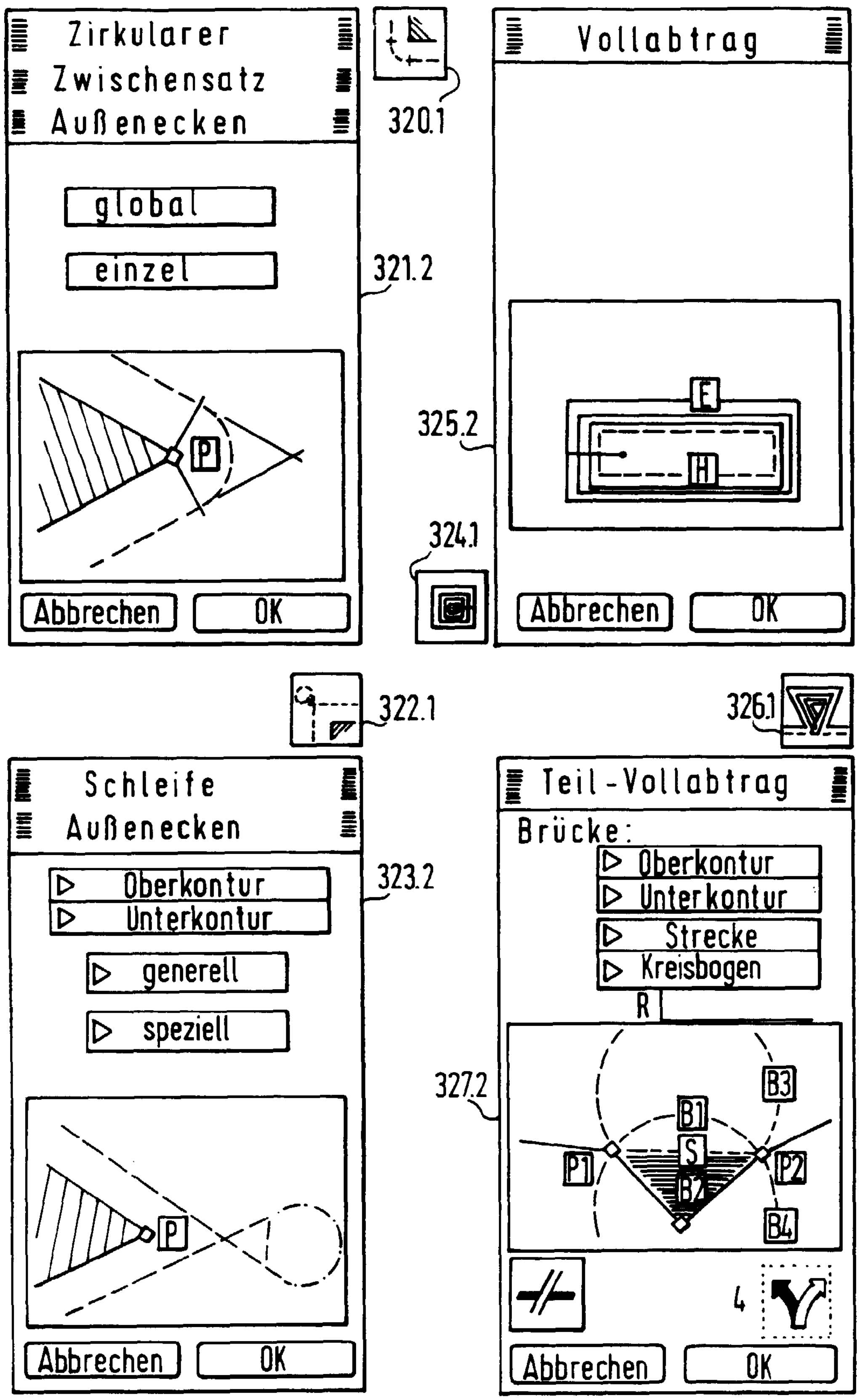
Zirkularer
Zwischensatz
Außenecken
global
einzel
P
Abbrechen
OK
320.1
321.2
Vollabtrag
325.2
E
H
324.1
Abbrechen
OK
322.1
Schleife
Außenecken
Oberkontur
Unterkontur
generell
speziell
P
Abbrechen
OK
323.2
326.1
Teil-Vollabtrag
Brücke:
Oberkontur
Unterkontur
Strecke
Kreisbogen
R
327.2
B1
B2
B3
B4
S
P1
P2
4
Abbrechen
OK

FIG. 29

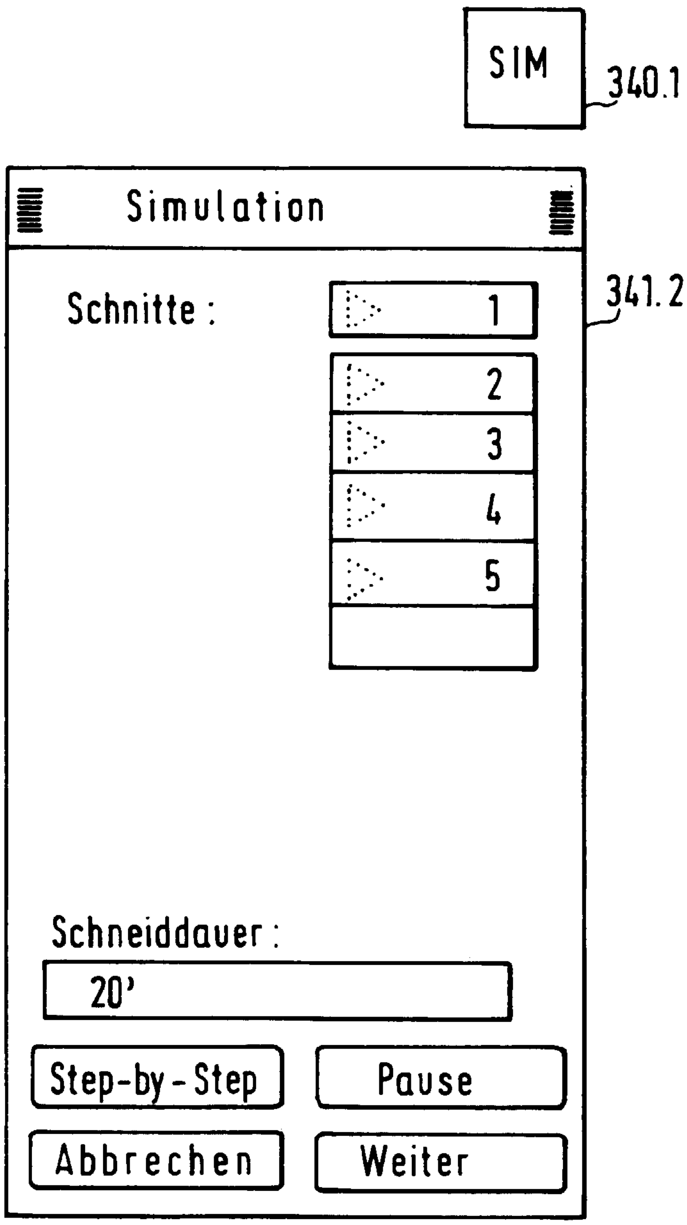
SIM
340.1
Simulation
341.2
Schnitte :
1
2
3
4
5
Schneiddauer :
20'
Step-by-Step
Pause
Abbrechen
Weiter

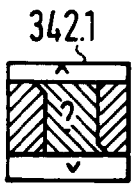
342.1

FIG. 30

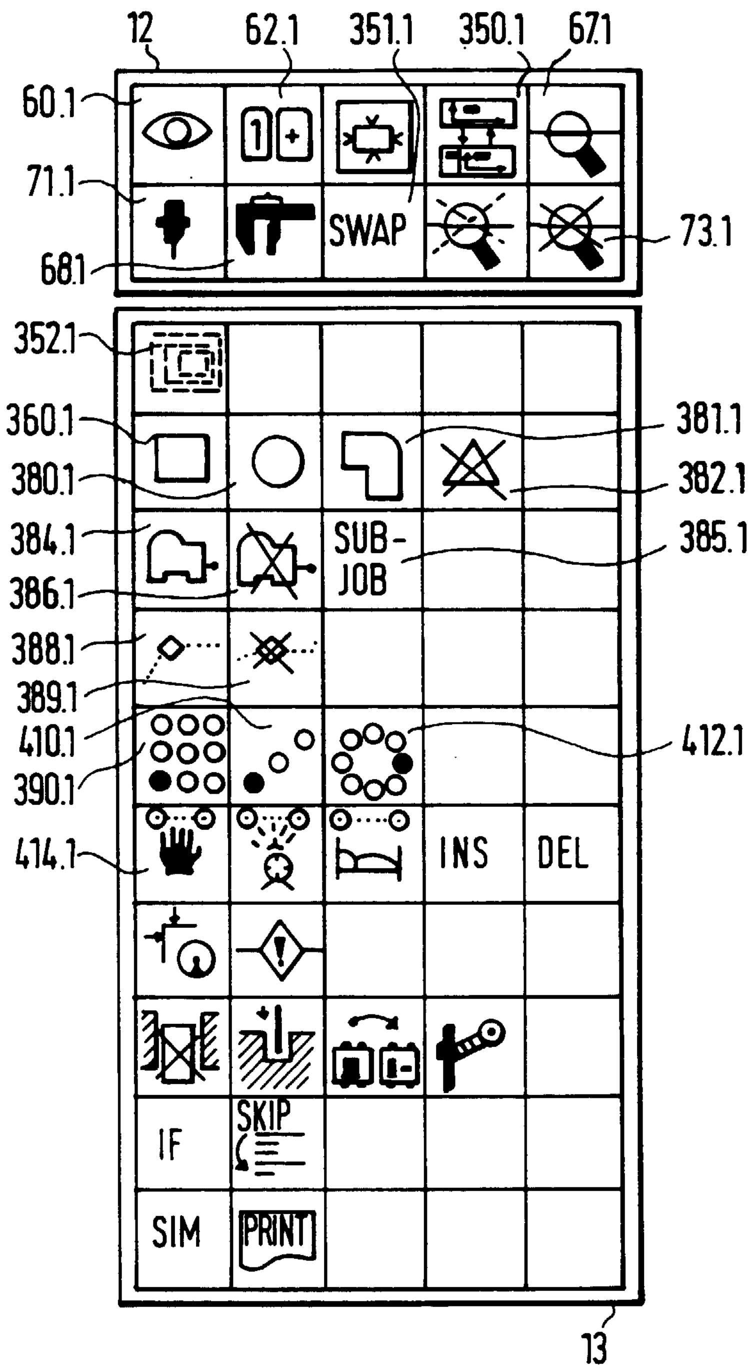
12
62.1
351.1
350.1
67.1
60.1
71.1
SWAP
73.1
68.1
352.1
360.1
381.1
380.1
382.1
384.1
SUB-
JOB
385.1
386.1
388.1
389.1
410.1
412.1
390.1
414.1
INS
DEL
IF
SKIP
SIM
PRINT
13

FIG. 31

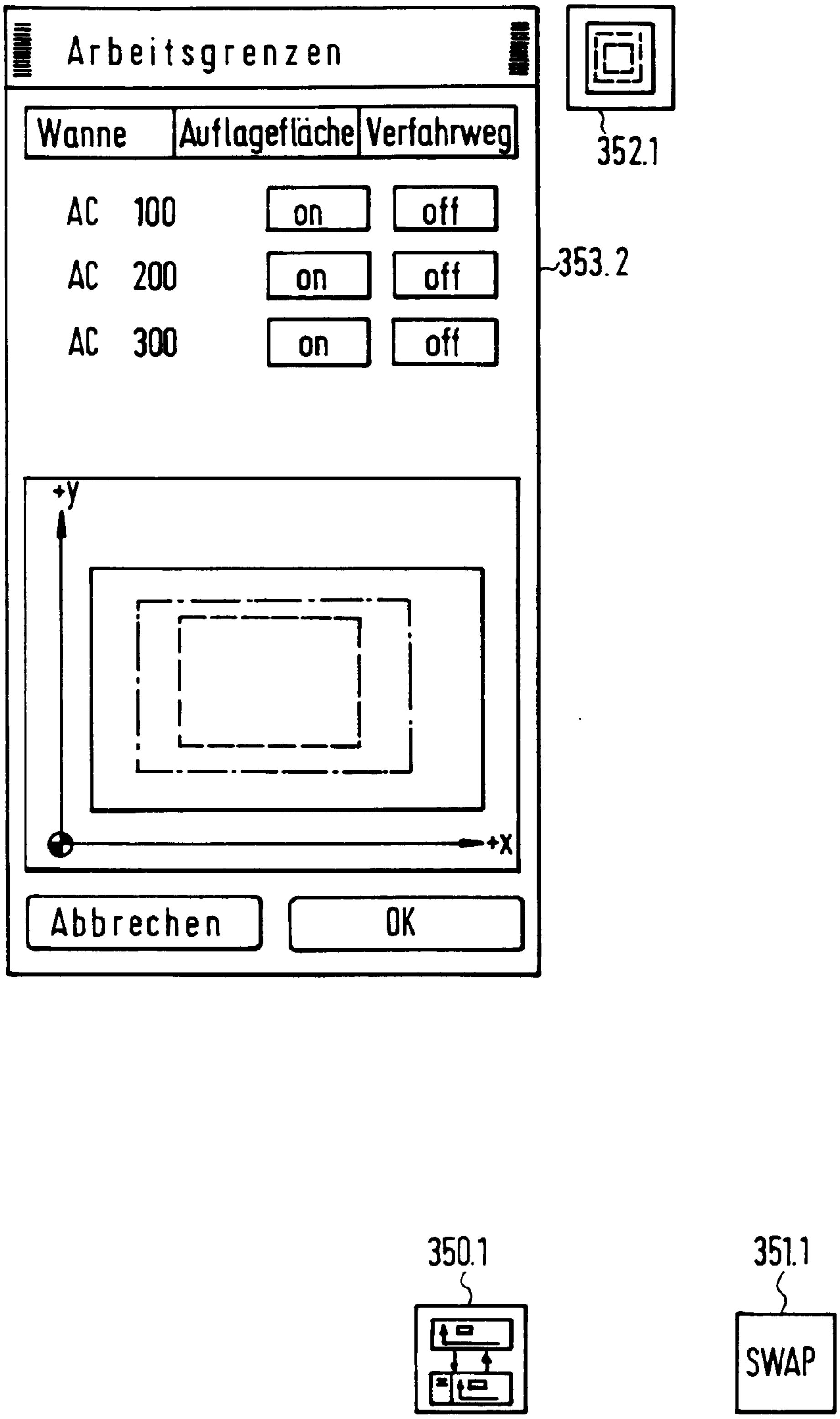
Arbeitsgrenzen
Wanne
Auflagefläche
Verfahrweg
AC 100
AC 200
AC 300
on
off
on
off
on
off
+y
+x
Abbrechen
OK
352.1
353.2
350.1
351.1
SWAP

FIG. 32

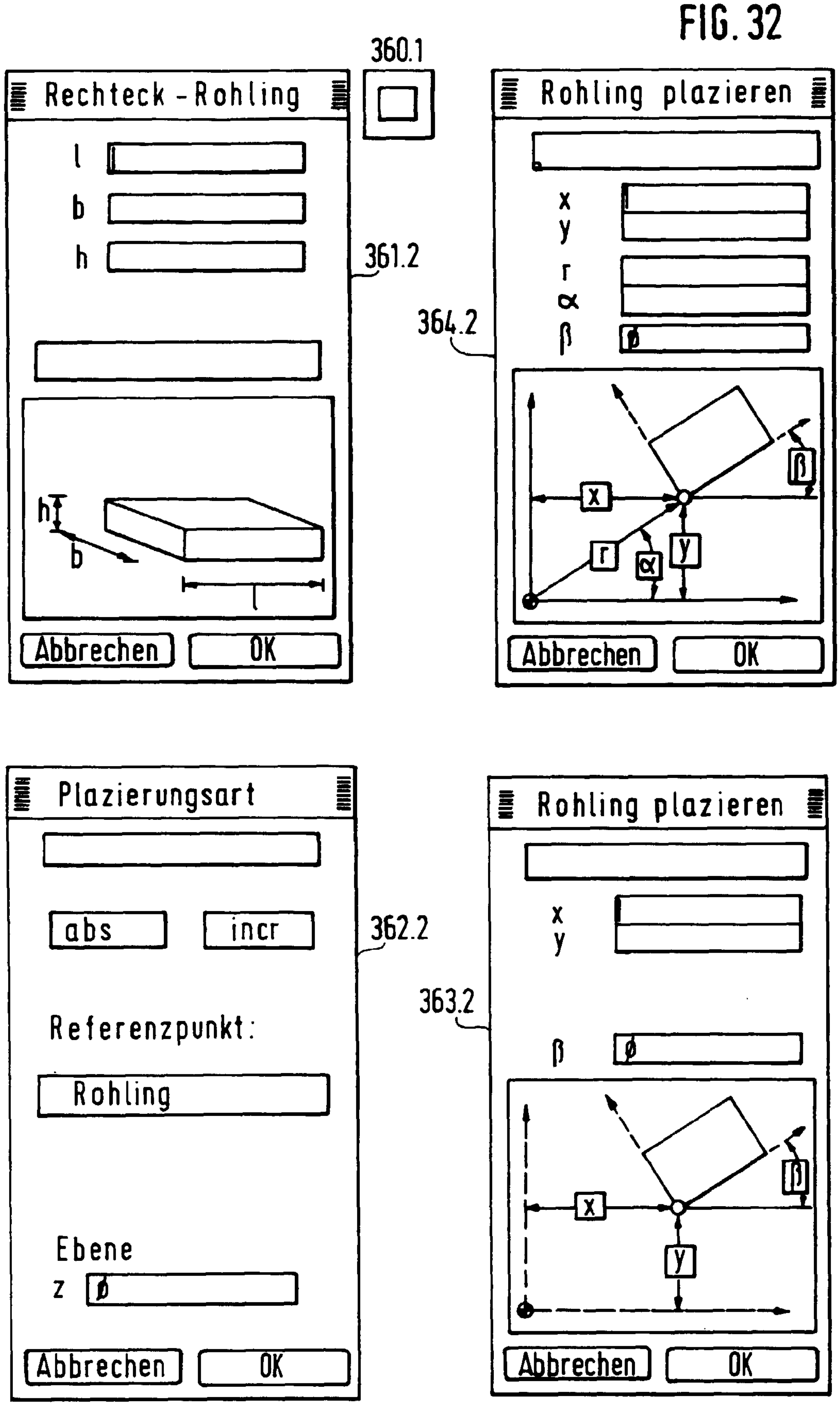
360.1
Rechteck - Rohling
l
b
h
361.2
h
b
l
Abbrechen
OK
Rohling plazieren
x
y
r
α
β
ø
364.2
x
r
α
y
β
Abbrechen
OK
Plazierungsart
abs
incr
362.2
Referenzpunkt:
Rohling
Ebene
z
ø
Abbrechen
OK
Rohling plazieren
x
y
β
ø
363.2
x
y
β
Abbrechen
OK

FIG. 33

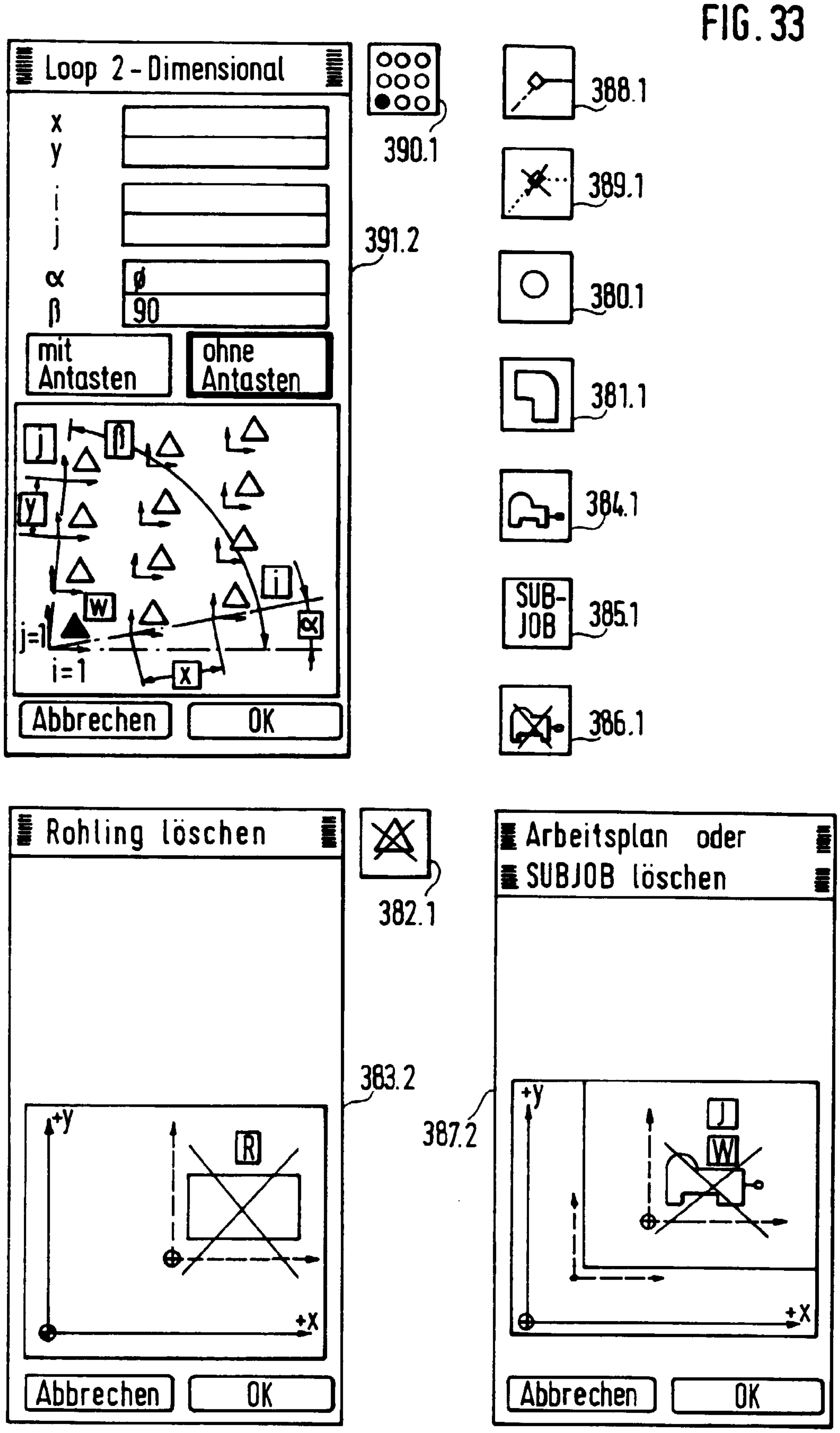
Loop 2 - Dimensional
x
y
i
j
α
β
ø
90
mit Antasten
ohne Antasten
j
β
y
i
W
α
j=1
i=1
x
Abbrechen
OK
390.1
391.2
388.1
389.1
380.1
381.1
384.1
SUB-JOB
385.1
386.1
Rohling löschen
+y
R
+x
Abbrechen
OK
382.1
383.2
Arbeitsplan oder SUBJOB löschen
387.2
+y
J
W
+x
Abbrechen
OK

FIG. 34

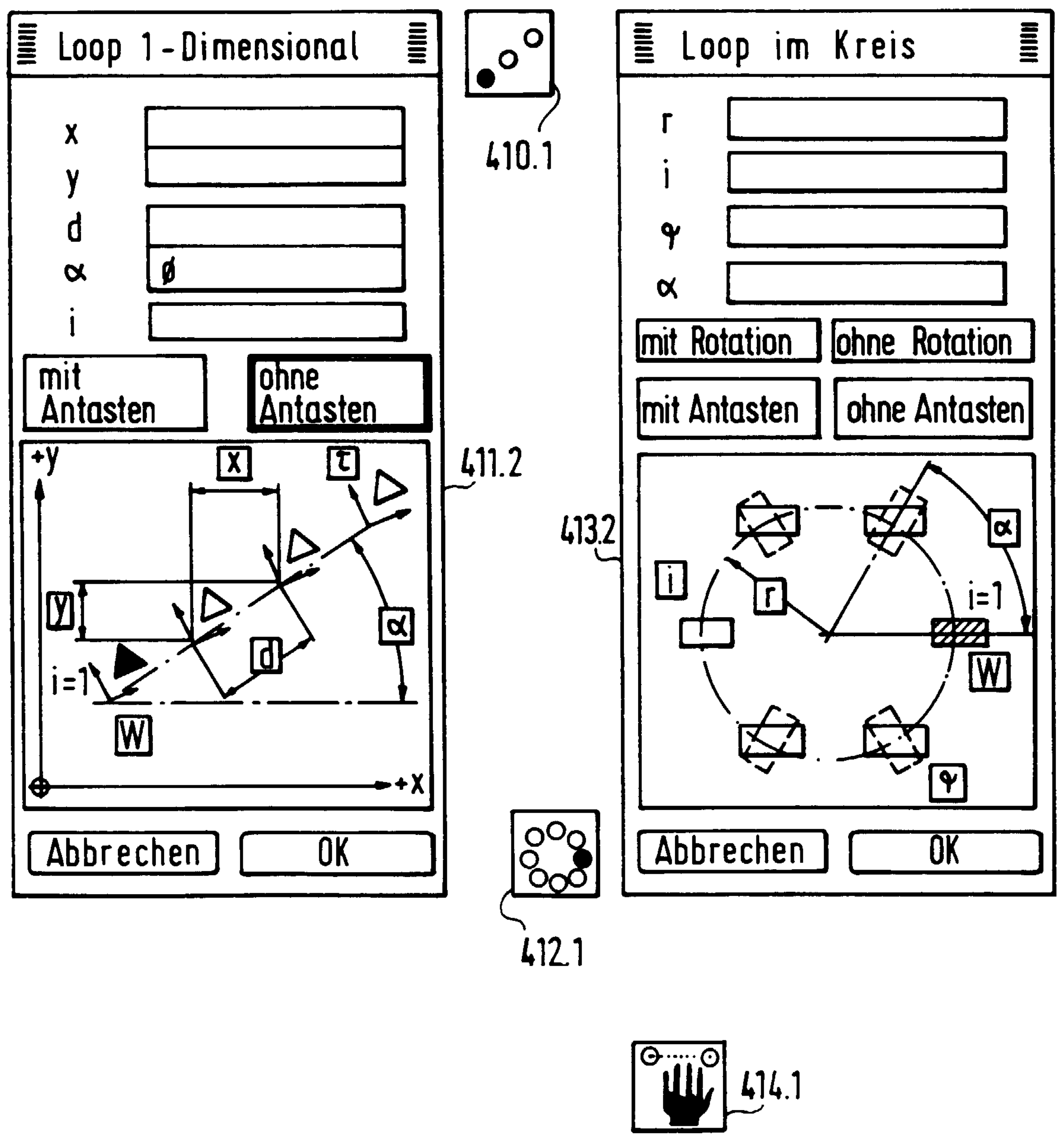
Loop 1-Dimensional
x
y
d
α
ø
i
mit Antasten
ohne Antasten
+y
X
τ
Y
α
d
i=1
W
+X
Abbrechen
OK
410.1
411.2
412.1
413.2
414.1
Loop im Kreis
r
i
φ
α
mit Rotation
ohne Rotation
mit Antasten
ohne Antasten
i
r
α
i=1
W
φ
Abbrechen
OK